(19) Europäisches Patentamt
European Patent Office
Office européen des brevets

(11) **EP 3 112 930 B1**

(12) **EUROPEAN PATENT SPECIFICATION**

(45) Date of publication and mention of the grant of the patent:
**27.03.2019 Bulletin 2019/13**

(21) Application number: **15754621.9**

(22) Date of filing: **24.02.2015**

(51) Int Cl.:
***G02F 1/13363*** *(2006.01)* ***C09K 19/12*** *(2006.01)*
***C09K 19/30*** *(2006.01)* ***C09K 19/38*** *(2006.01)*
***C09K 19/54*** *(2006.01)* ***G02B 5/30*** *(2006.01)*
***G02F 1/13*** *(2006.01)* ***C09K 19/32*** *(2006.01)*
***C09K 19/44*** *(2006.01)* ***C09K 19/46*** *(2006.01)*
***C09K 19/24*** *(2006.01)* ***C09K 19/04*** *(2006.01)*
***C09K 19/20*** *(2006.01)* ***G02F 1/139*** *(2006.01)*
***G02F 1/1335*** *(2006.01)*

(86) International application number:
**PCT/JP2015/055172**

(87) International publication number:
**WO 2015/129672 (03.09.2015 Gazette 2015/35)**

(54) **LIQUID CRYSTAL DISPLAY DEVICE**

FLÜSSIGKRISTALLANZEIGEVORRICHTUNG

DISPOSITIF D'AFFICHAGE À BASE DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2014 JP 2014036682**

(43) Date of publication of application:
**04.01.2017 Bulletin 2017/01**

(73) Proprietor: **DIC Corporation**
**Tokyo 174-8520 (JP)**

(72) Inventors:
- **OGAWA, Shinji**
  **Kitaadachi-gun**
  **Saitama 362-8577 (JP)**
- **IWASHITA, Yoshinori**
  **Kitaadachi-gun**
  **Saitama 362-8577 (JP)**
- **YAMAMOTO, Mika**
  **Kitaadachi-gun**
  **Saitama 362-8577 (JP)**
- **KUWANA, Yasuhiro**
  **Kitaadachi-gun**
  **Saitama 362-8577 (JP)**
- **ENDOU, Koichi**
  **Kitaadachi-gun**
  **Saitama 362-8577 (JP)**
- **HATSUSAKA, Kazuaki**
  **Kitaadachi-gun**
  **Saitama 362-8577 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2007/094450** **JP-A- 2000 221 506**
**JP-B1- 5 299 588** **JP-B1- 5 299 593**
**US-A1- 2006 193 999**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 112 930 B1

## Description

### Technical Field

The present invention relates to a liquid crystal display device.

### Background Art

A liquid crystal display device is used for various electric home appliances, measuring equipment, a panel for an automobile, a word processor, an electronic notebook, a printer, a computer, a television, or the like, including a clock and an electronic calculator. As a liquid crystal display system, representative examples thereof include a Twisted Nematic (TN) mode, a Super Twisted Nematic (STN) mode, a Dynamic Light Scattering (DS) mode, a Guest·Host (GH) mode, an In-Plane Switching (IPS) mode, an Optically Compensated Birefringence (OCB) mode, an Electrically Controlled Birefringence (ECB) mode, a Vertical Alignment (VA) mode, a Color Super Homeotropic (CHS) mode, and a Ferroelectric Liquid Crystal (FLC). Also, as a driving system, multiplex driving has become common from static driving in the related art, and a passive matrix system and, in recent years, an active matrix (AM) system driven by a Thin Film Transistor (TFT) or a Thin Film Diode (TFD) have been mainstream.

In general, the liquid crystal display device has view angle dependency due to an influence of birefringence properties of a liquid crystal molecule. In order to improve this view angle dependency, an optical film (also referred to as an optical compensation film) having birefringence properties different from those of the liquid crystal molecule is used. In a liquid crystal display device using a bar-like liquid crystal molecule having negative dielectric anisotropy, in a case where a polarizing plate is only included in a liquid crystal cell, for example, if the liquid crystal cell is obliquely seen, there is a problem in the view angle properties that light leakage occurs.

In order to solve the problem of these view angle properties, for example, a method in which a piece of a biaxial retardation film is respectively disposed between the liquid crystal cell and an upper polarizing plate or a lower polarizing plate, a method in which a piece of the uniaxial retardation film and a piece of a completely biaxial retardation film are respectively disposed on the upper liquid crystal cell and the lower liquid crystal cell, or a method in which the uniaxial retardation film and the completely biaxial retardation film are disposed on one side of the liquid crystal cell, has been used.

In addition, a liquid crystal display device (out-cell type) in which the retardation film is disposed on the outside of the liquid crystal cell has been mainstream, but in recent years, a liquid crystal display device (in-cell type) in which the retardation film is disposed in the inside of the liquid crystal cell has been developed, from a viewpoint of reducing the thickness and weight of the liquid crystal display device and improving productivity caused by elimination of an attachment step. For example, usually, an example in which a negative C plate is disposed on the inside of the liquid crystal cell (PTLs 1 and 2), or an example in which retardation films of a positive A plate and a negative C plate are disposed, has been known (PTL 3).

In a liquid crystal material constituting a liquid crystal layer, impurities have been thoroughly controlled, since electric properties of a display device are greatly affected if the impurities remain in the material. In addition, with regard to the material forming an alignment film, it has been known that direct contact of the alignment film with the liquid crystal layer and movement of the impurities remaining in the alignment film to the liquid crystal layer affect the electric properties of the liquid crystal layer, and properties of the liquid crystal display device resulting from the impurities in the material of the alignment film have been reviewed.

In the in-cell type liquid crystal display device, the retardation film exists within the cell, but since a transparent electrode layer and the alignment film are interposed between the liquid crystal layer and the retardation film, it is considered that a direct influence to the liquid crystal layer is considerably less compared to the alignment film material. However, normally, the alignment film merely has a film thickness of 0.1 μm or less and the transparent electrode layer also has a film thickness substantially the same as that of the alignment film. Accordingly, it cannot be said that the liquid crystal layer and the retardation film are disposed in a completely isolated environment, and it is conceived that even in the in-cell type retardation film, the impurities included therein affect the liquid crystal layer in the same manner as the alignment film material. The retardation film has possibility to cause a display defect such as a decrease in a voltage holding ratio (VHR) of the liquid crystal layer, white spots caused by an increase in ion density (ID), alignment irregularities, burn-in, or the like, because of the impurities included in the retardation film via the alignment film and the transparent electrode. However, the influence on the liquid crystal layer due to the impurities in the retardation film has not been reviewed.

WO 2007/094450 A1 describes a polymerizable liquid crystal composition which comprises a compound having a repeat unit represented by the general formula (I) and having a weight average molecular weight of 100 or greater

$$-(-CR^1R^2-CR^3R^4-)- \qquad (I)$$

wherein $R^1$, $R^2$, $R^3$ and $R^4$ independently represent a hydrogen atom, a halogen atom, or a hydrocarbon group having 1 to 20 carbon atoms, provided that one or more hydrogen atoms in the hydrocarbon group may be independently substituted by a halogen atom. The polymerizable liquid crystal composition can decrease a tilt angle at an air interface, and therefore is useful as an optically anisotropic material showing a horizontal orientation at an air interface. Further, the polymerizable liquid crystal composition does not contain any polar substance such as a surfactant, and therefore does not adversely affect the voltage holding ratio of a liquid crystal display and can form a laminate film readily. Particularly, the polymerizable liquid crystal composition can be used suitably as an optically anisotropic material to be integrated into a liquid crystal cell and has no concern about the environmental toxicity.

JP 5 299588 B and JP 5 299593 B describe liquid crystal display devices including a particular liquid crystal composition and a color filter that uses a particular dye and/or pigment. The documents describe liquid crystal display devices in which a decrease in the voltage holding ratio (VHR) of a liquid crystal layer and an increase in the ion density (ID) are prevented and problems of display defects such as white streaks, alignment unevenness, and image sticking are overcome. Therefore, the liquid crystal display devices are useful for active matrix liquid crystal display apparatuses that use a VA mode or a PSVA mode and can be applied to liquid crystal display apparatuses of liquid crystal televisions, monitors, cellular phones, smart phones, and the like.

US 2006/193999 A1 describes an optical film for use in a liquid crystal display that is positioned inside the liquid crystal cell of the display comprising the switchable liquid crystal material, and to an LCD comprising such a film.

Citation List

Patent Literature

[PTL 1] JP-A-2012-78431
[PTL 2] JP-A-2000-221506
[PTL 3] WO 11/007669

Summary of Invention

Technical Problem

An object of the present invention is to provide a liquid crystal display device which can prevent a decrease in a voltage holding ratio (VHR) of a liquid crystal layer and an increase in ion density (ID) and solve a problem of a display defect such as white spots, alignment irregularities, burn-in, or the like, by using an in-cell type retardation film which uses a liquid crystal composition containing a liquid crystal compound having a specific structure at a specific ratio.

Solution to Problem

As a result of thorough study on a combination of a structure of the liquid crystal material which configures the liquid crystal layer and a polymerizable liquid crystal for constituting the retardation film in order to solve the aforementioned problem, the present inventors have found that a liquid crystal display device, which uses a liquid crystal composition containing a liquid crystal compound having a specific structure as a liquid crystal layer and an optically anisotropic body obtained by polymerizing a polymerizable liquid crystal composition containing a polymerizable liquid crystal compound having a specific structure at a specific ratio as a retardation film, prevents a decrease in a voltage holding ratio (VHR) of the liquid crystal layer and an increase in ion density (ID) and solves a display defect such as white spots, alignment irregularities, burn-in, or the like, thereby completing the present invention.

In other words, the present invention provides a liquid crystal display device including a first substrate; a second substrate; a liquid crystal layer interposed between the first substrate and the second substrate; a retardation film between a pair of the substrates; and at least a pair of electrodes, in which the liquid crystal layer is composed of a liquid crystal composition which contains a compound represented by General Formula (I) in an amount of 10% to 50% by weight and a compound represented by General Formula (II) in an amount of 35% to 80% by weight:

[Chem. 1]

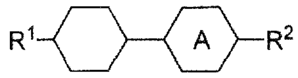

( I )

wherein $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and A represents a 1, 4-phenylene group or a trans-1, 4-cyclohexylene group) and

[Chem. 2]

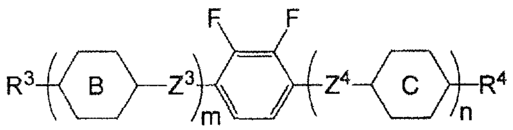

( II )

wherein $R^3$ and $R^4$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $Z^3$ and $Z^4$ each independently represent a single bond, -CH=CH-, -C≡C-, $-CH_2CH_2-$, - $(CH_2)_4$-, -COO-, -OCO-, $-OCH_2-$, $-CH_2O-$, $-OCF_2-$, or $-CF_2O-$, B and C each independently represent a 1,4-phenylene group or a trans-1,4-cyclohexylene group, which may be fluorinated, m and n each independently represent an integer of 0 to 4, and m + n = 1 to 4), and the retardation film is an optically anisotropic body obtained by polymerizing a polymerizable liquid crystal composition containing a liquid crystal compound having two or more polymerizable functional groups in an amount of 25% by weight or more.

Advantageous Effects of Invention

The liquid crystal display device of the present invention can prevent a decrease in a voltage holding ratio (VHR) of a liquid crystal layer and an increase in ion density (ID) and prevent the occurrence of a display defect such as white spots, alignment irregularities, burn-in, or the like, by using the liquid crystal composition containing the liquid crystal compound having a specific structure as the liquid crystal layer, and the optically anisotropic body obtained by polymerizing the polymerizable liquid crystal composition containing the polymerizable liquid crystal compound having a specific structure at a specific ratio as the retardation film.

Brief Description of Drawings

Fig. 1 is a diagram illustrating one example of a liquid crystal display device of the present invention.
Fig. 2 is a diagram illustrating one example of the liquid crystal display device of the present invention.
Fig. 3 is a diagram illustrating one example of the liquid crystal display device of the present invention.
Fig. 4 is a diagram illustrating one example of the liquid crystal display device of the present invention.
Fig. 5 is a diagram illustrating one example of the liquid crystal display device of the present invention.
Fig. 6 is a diagram illustrating one example of the liquid crystal display device of the present invention.
Fig. 7 is a diagram illustrating one example of the liquid crystal display device of the present invention.
Fig. 8 is a diagram illustrating one example of the liquid crystal display device of the present invention.
Fig. 9 is a diagram illustrating one example of the liquid crystal display device of the present invention.
Fig. 10 is a diagram illustrating one example of the liquid crystal display device of the present invention.
Fig. 11 is a diagram illustrating one example of the liquid crystal display device of the present invention.

Reference Signs List

(1) Polarizing layer

(2) Adhesive layer
(3) Optically transparent substrate
(4) Color filter layer
(5) Planarizing layer
(6) Alignment film for a retardation film
(7) Retardation film 1 using specific polymerizable liquid crystal composition
(8) Retardation film 2 using specific polymerizable liquid crystal composition
(9) Transparent electrode layer
(10) Alignment film
(11) Specific liquid crystal composition
(12) Alignment film
(13) Pixel electrode layer
(14) Optically transparent substrate
(15) Adhesive layer
(16) Polarizing layer
(17) Backlight

Description of Embodiments

Fig. 1 illustrates one example of the liquid crystal display device of the present invention, which is configured as follows. A polarizing plate which includes a polarizing layer (1), an adhesive layer (2), and an optically transparent substrate (3) includes a color filter layer (4) and a planarizing layer (5). Further, a first retardation film (7) and a second retardation film (8) using a specific polymerizable composition are included between an alignment film for a retardation film (6) and a transparent electrode layer (9). A specific liquid crystal composition (11) is interposed between alignment film layers (10) and (12).

A transparent electrode layer (9), which is a common electrode, and a color filter layer (4) are included between one alignment film (10) of two substrates having the alignment film (12) and a polarizing layer, and a substrate (3), and a pixel electrode layer (13) is included between the other alignment film (10) and an optically transparent substrate (14) . An adhesive layer (15) and a polarizing layer (16) are included with respect to a glass substrate (14) on a backlight (17) side.

The two substrates in the display device are attached to each other by a sealing material or a sealant disposed in the peripheral area, and in many cases, granular spacers or column spacers composed of a resin formed by a photolithography method are disposed therebetween in order to retain a distance between the substrates. In addition, Fig.2 illustrates one example of a liquid crystal display device using only the retardation film (7) without using the retardation film (8).

(Liquid crystal layer)

The liquid crystal layer in the liquid crystal display device of the present invention is composed of a liquid crystal composition which contains a compound represented by General Formula (I) in an amount of 10% to 50% by weight, and a compound represented by General Formula (II) in an amount of 35% to 80% by weight.

[Chem. 3]

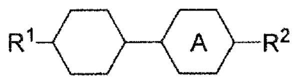

(I)

In the formula, $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and A represents a 1,4-phenylene group or a trans-1,4-cyclohexylene group.

[Chem. 4]

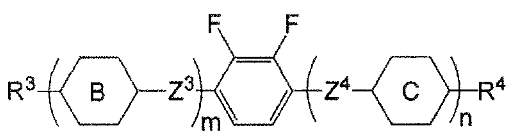

(II)

In the formula, $R^3$ and $R^4$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $Z^3$ and $Z^4$ each independently represent a single bond, -CH=CH-, -C≡C-, $-CH_2CH_2-$, - $(CH_2)_4$-, -COO-, -OCO-, $-OCH_2-$, $-CH_2O-$, $-OCF_2-$, or $-CF_2O-$, B and C each independently represent a 1, 4-phenylene group or a trans-1,4-cyclohexylene group, which may be fluorinated, m and n each independently represent an integer of 0 to 4, and m + n = 1 to 4.

The liquid crystal layer in the liquid crystal display device of the present invention contains 10% to 50% by weight of the compound represented by General Formula (I), and the liquid crystal layer in the liquid crystal display device of the present invention preferably contains 15% to 48% by weight and more preferably contains 20% to 46% by weight.

In General Formula (I), $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, but in a case where A represents a trans-1,4-cyclohexylene group,
$R^1$ and $R^2$ preferably represent an alkyl group having 1 to 5 carbon atoms, an alkenyl group having 2 to 5 carbon atoms, an alkoxy group having 1 to 5 carbon atoms, or an alkenyloxy group having 2 to 5 carbon atoms, and
more preferably represent an alkyl group having 2 to 5 carbon atoms, an alkenyl group having 2 to 4 carbon atoms, an alkoxy group having 1 to 4 carbon atoms, or an alkenyloxy group having 2 to 4 carbon atoms.

$R^1$ preferably represents an alkyl group, and in this case, an alkyl group having 2, 3, or 4 carbon atoms is particularly preferable. In a case where $R^1$ represents an alkyl group having 3 carbon atoms, $R^2$ preferably represents an alkyl group having 2, 4, or 5 carbon atoms or an alkenyl group having 2 to 3 carbon atoms, and $R^2$ more preferably represents an alkyl group having 2 carbon atoms.

In a case where A represents a 1,4-phenylene group, $R^1$ and $R^2$ preferably represent an alkyl group having 1 to 5 carbon atoms, an alkenyl group having 4 to 5 carbon atoms, an alkoxy group having 1 to 5 carbon atoms, or an alkenyloxy group having 3 to 5 carbon atoms, and
$R^1$ and $R^2$ more preferably represent an alkyl group having 2 to 5 carbon atoms, an alkenyl group having 4 to 5 carbon atoms, an alkoxy group having 1 to 4 carbon atoms, or an alkenyloxy group having 2 to 4 carbon atoms.

$R^1$ preferably represents an alkyl group, and in this case, an alkyl group having 1, 3, or 5 carbon atoms is particularly preferable. Further, $R^2$ preferably represents an alkoxy group having 1 to 2 carbon atoms.

The content of the compound represented by General Formula (I) in which at least one of a substituent of $R^1$ and $R^2$ is an alkyl group having 3 to 5 carbon atoms is preferably 50% by weight or more, more preferably 70% by weight or more, and still more preferably 80% by weight or more in the compound represented by General Formula (I). The content of the compound represented by General Formula (I) in which at least one of a substituent of $R^1$ and $R^2$ is an alkyl group having 3 carbon atoms is preferably 50% by weight or more, more preferably 70% by weight or more, still more preferably 80% by weight or more, and most preferably 100% by weight in the compound represented by General Formula (I).

One type or two or more types of the compound represented by General Formula (I) may be contained, and at least one type of the compound in which A represents a trans-1, 4-cyclohexylene group, and the compound in which A represents a 1,4-phenylene group is preferably contained respectively.

The content of the compound represented by General Formula (I) in which A represents a trans-1,4-cyclohexylene group is preferably 50% by weight or more, more preferably 70% by weight or more, and still more preferably 80% by weight or more in the compound represented by General Formula (I).

Preferred examples of the compound represented by General Formula (I) include compounds represented by General Formula (Ia) to General Formula (Ik) shown below.

[Chem. 5]

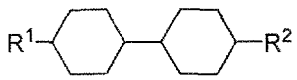
(Ia)

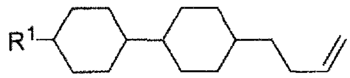
(Id)

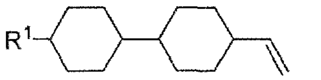
(Ib)

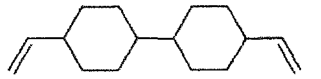
(Ie)

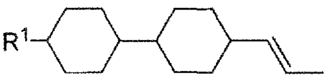
(Ic)

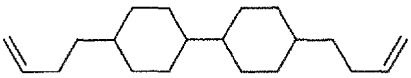
(If)

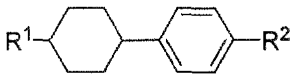
(Ig)

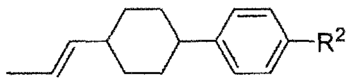
(Ii)

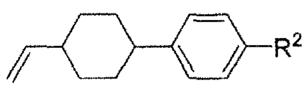
(Ih)

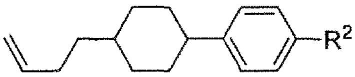
(Ij)

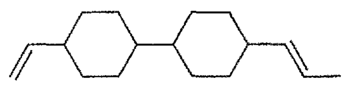
(Ik)

In the formulas, $R^1$ and $R^2$ each independently represent an alkyl group having 1 to 5 carbon atoms or an alkoxy group having 1 to 5 carbon atoms, and the same embodiment as that of $R^1$ and $R^2$ in General Formula (I) is preferable.

In General Formula (Ia) to General Formula (Ik), General Formula (Ia), General Formula (Ib), General Formula (Ic), and General Formula (Ig) are preferable, General Formula (Ia), General Formula (Ib), and General Formula (Ic) are more preferable, and General Formula (Ia) and General Formula (Ib) are more preferable. In a case where a response speed is important, General Formula (Ib) and General Formula (Ic) are preferable, and a combination of General Formula (Ib) and General Formula (Ic) is more preferable. In a case where reliability is important, General Formula (Ia) is preferable.

From these viewpoints, the content of the compounds represented by General Formula (Ia), General Formula (Ib), and General Formula (Ic) is preferably 80% by weight or more, more preferably 90% by weight or more, still more preferably 95% by weight or more, and most preferably 100% by weight in the compound represented by General Formula (I). The content of the compound represented by General Formula (Ia) is 65% by weight to 100% by weight in the compound represented by General Formula (I), the content of the compounds represented by General Formula (Ib) and General Formula (Ic) is 0% by weight to 35% by weight in the compound represented by General Formula (I), or the content of the compound represented by General Formula (Ia) is 0% by weight to 10% by weight in the compound represented by General Formula (I), and the content of the compounds represented by General Formula (Ib) and General Formula (Ic) is preferably 90% by weight to 100% by weight in the compound represented by General Formula (I).

The liquid crystal layer in the liquid crystal display device of the present invention contains 35% to 80% by weight of the compound represented by General Formula (II), and the liquid crystal layer in the liquid crystal display device of the present invention preferably contains 40% to 75% by weight and more preferably contains 45% to 70% by weight.

In General Formula (II), $R^3$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and $R^3$ preferably represents an alkyl group having 1 to 5 carbon atoms or an alkenyl group having 2 to 5 carbon atoms, more preferably represents an alkyl group having 2 to 5 carbon atoms or an alkenyl group having 2 to 4 carbon atoms, still more preferably represents an alkyl group having 3 to 5 carbon atoms or an alkenyl group having 2 or 3 carbon atoms, particularly preferably represents an alkyl group having 2 or 3 carbon atoms or an alkenyl group having 2 carbon atoms, and most preferably represents an alkyl group having 2 or 3 carbon atoms.

$R^4$ represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms, and $R^4$ preferably represents an alkyl group having 1 to 5 carbon atoms or an alkoxy group having 1 to 5 carbon atoms, more preferably represents an alkyl group having 1 to 3 carbon atoms or an alkoxy group having 1 to 4 carbon atoms, and still more preferably

represents an alkoxy group having 2 to 4 carbon atoms. $Z^3$ and $Z^4$ each independently represent a single bond, -CH=CH-, -C≡C-, $-CH_2CH_2-$, $-(CH_2)_4-$, -COO-, -OCO-, $-OCH_2-$, $-CH_2O-$, $-OCF_2-$, or $-CF_2O-$, and $Z^3$ and $Z^4$ preferably represent a single bond, $-CH_2CH_2-$, -COO-, $-OCH_2-$, $-CH_2O-$, $-OCF_2-$, or $-CF_2O-$ and more preferably represent a single bond or $-CH_2O-$.

m and n each independently represent an integer of 0 to 3 and preferably represent an integer of 0 to 2, and m+n preferably satisfies 1 to 3 and more preferably satisfies 1 to 2.

The liquid crystal layer in the liquid crystal display device of the present invention may contain 3 types to 10 types of the compound represented by General Formula (II), preferably contain 4 types to 9 types and more preferably 5 types to 8 types.

Preferred examples of the compound represented by General Formula (II) include a compound represented by the following General Formula (II-1) or (II-2).

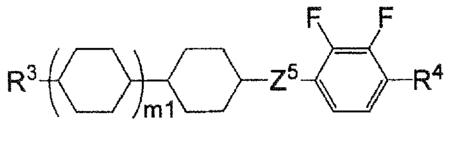 (II-1)

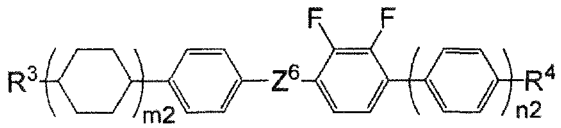 (II-2)

In the formulas, $R^3$ and $R^4$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $Z^5$ and $Z^6$ each independently represent a single bond, -CH=CH-, -C≡C-, $-CH_2CH_2-$, - $(CH_2)_4-$, -COO-, -OCO-, $-OCH_2-$, $-CH_2O-$, $-OCF_2-$, or $-CF_2O-$, and m1, m2 and n2 each independently represent 0 or 1.

In General Formula (II-1), $R^3$ preferably represents an alkyl group having 1 to 5 carbon atoms or an alkenyl group having 2 to 5 carbon atoms, more preferably represents an alkyl group having 2 to 5 carbon atoms or an alkenyl group having 2 to 4 carbon atoms, still more preferably represents an alkyl group having 3 to 5 carbon atoms or an alkenyl group having 2 carbon atoms, and particularly preferably represents an alkyl group having 3 carbon atoms, $R^4$ preferably represents an alkyl group having 1 to 5 carbon atoms or an alkoxy group having 1 to 5 carbon atoms, more preferably represents an alkyl group having 1 to 3 carbon atoms or an alkoxy group having 1 to 3 carbon atoms, still more preferably represents an alkyl group having 3 carbon atoms or an alkoxy group having 2 carbon atoms, and particularly preferably represents an alkoxy group having 2 carbon atoms, and $Z^5$ preferably represents a single bond, $-CH_2CH_2-$, -COO-, $-OCH_2-$, $-CH_2O-$, $-OCF_2-$, or $-CF_2O-$ and more preferably represents a single bond or $-CH_2O-$.

The liquid crystal layer in the liquid crystal display device of the present invention preferably contains 15% by weight to 60% by weight of the compound represented by General Formula (II-1), more preferably contains 17% by weight to 50% by weight, more preferably contains 18% by weight to 40% by weight, and more preferably contains 19% by weight to 30% by weight.

The liquid crystal layer in the liquid crystal display device of the present invention may contain one type or two or more types of the compound represented by General Formula (II-1), and the liquid crystal layer in the liquid crystal display device of the present invention preferably contains 1 type to 6 types, preferably contains 2 types to 5 types, and preferably contains 3 types or 4 types.

In General Formula (II-2), $R^3$ preferably represents an alkyl group having 1 to 5 carbon atoms or an alkenyl group having 2 to 5 carbon atoms, more preferably represents an alkyl group having 2 to 5 carbon atoms or an alkenyl group having 2 to 4 carbon atoms, still more preferably represents an alkyl group having 3 to 5 carbon atoms or an alkenyl group having 2 carbon atoms, and particularly preferably represents an alkyl group having 2 or 3 carbon atoms, $R^4$ preferably represents an alkyl group having 1 to 5 carbon atoms or an alkoxy group having 1 to 5 carbon atoms, more preferably represents an alkyl group having 1 to 3 carbon atoms or an alkoxy group having 1 to 3 carbon atoms, and still more preferably represents an alkyl group having 3 carbon atoms or an alkoxy group having 2 carbon atoms, and $Z^6$ preferably represents a single bond, $-CH_2CH_2-$, -COO-, $-OCH_2-$, $-CH_2O-$, $-OCF_2-$, or $-CF_2O-$ and more preferably represents a single bond or $-CH_2O-$.

The liquid crystal layer in the liquid crystal display device of the present invention preferably contains 10% by weight to 50% by weight of the compound represented by General Formula (II-2), preferably contains 15% by weight to 45% by weight, preferably contains 20% by weight to 40% by weight, and preferably contains 25% by weight to 35% by weight.

The liquid crystal layer in the liquid crystal display device of the present invention may contain 1 type or 2 or

more types of the compound represented by General Formula (II-2), and the liquid crystal layer in the liquid crystal display device of the present invention preferably contains 1 type to 6 types, preferably contains 2 types to 5 types, and preferably contains 3 types or 4 types.

Specific preferred examples of the compound represented by General Formula (II-1) include compounds represented by General Formula (II-1a) to General Formula (II-1d) shown below.

[Chem. 6]

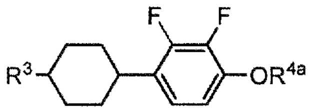 (II-1a) 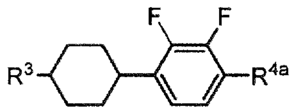 (II-1b)

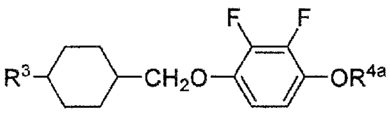 (II-1c) 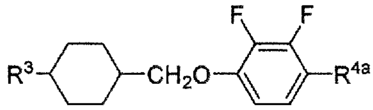 (II-1d)

In the formulas, $R^3$ represents an alkyl group having 1 to 5 carbon atoms or an alkenyl group having 2 to 5 carbon atoms, and $R^{4a}$ represents an alkyl group having 1 to 5 carbon atoms.

In General Formula (II-1a) and General Formula (II-1c), $R^3$ preferably represents the same embodiment as in General Formula (II-1). $R^{4a}$ preferably represents an alkyl group having 1 to 3 carbon atoms, more preferably represents an alkyl group having 1 or 2 carbon atoms, and particularly preferably represents an alkyl group having 2 carbon atoms.

In General Formula (II-1b) and General Formula (II-1d), $R^3$ preferably represents the same embodiment as in General Formula (II-1). $R^{4a}$ preferably represents an alkyl group having 1 to 3 carbon atoms, more preferably represents an alkyl group having 1 or 3 carbon atoms, and particularly preferably represents an alkyl group having 3 carbon atoms.

Among General Formula (II-1a) to General Formula (II-1d), in order to increase an absolute value of dielectric anisotropy, General Formula (II-1a) and General Formula (II-1c) are preferable and General Formula (II-1a) is preferable.

The liquid crystal layer in the liquid crystal display device of the present invention preferably contains 1 type or 2 or more types of the compounds represented by General Formula (II-1a) to General Formula (II-1d) and preferably 1 type or 2 types, and the liquid crystal layer in the liquid crystal display device of the present invention preferably contains 1 type or 2 types of the compound represented by General Formula (II-1a).

In addition, specific preferred examples of the compound represented by General Formula (II-1) include compounds represented by General Formula (II-1e) to General Formula (II-1h) shown below.

[Chem. 7]

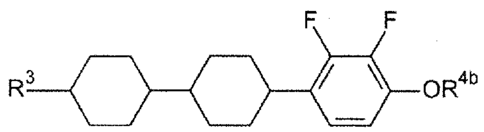 (II-1e)

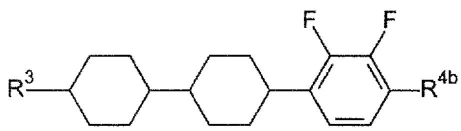 (II-1f)

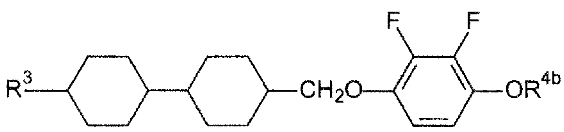 (II-1g)

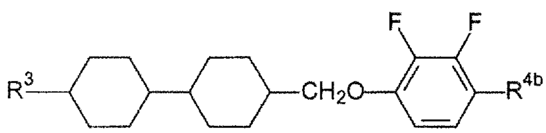 (II-1h)

In the formulas, $R^3$ represents an alkyl group having 1 to 5 carbon atoms or an alkenyl group having 2 to 5 carbon atoms and $R^{4b}$ represents an alkyl group having 1 to 5 carbon atoms.

In General Formula (II-1e) and General Formula (II-1g), $R^3$ preferably represents the same embodiment as in General Formula (II-1). $R^{4b}$ preferably represents an alkyl group having 1 to 3 carbon atoms, more preferably represents an alkyl group having 1 or 2 carbon atoms, and particularly preferably represents an alkyl group having 2 carbon atoms.

In General Formula (II-1f) and General Formula (II-1h), $R^3$ preferably represents the same embodiment as in General Formula (II-1). $R^{4b}$ preferably represents an alkyl group having 1 to 3 carbon atoms, more preferably represents an alkyl group having 1 or 3 carbon atoms, and particularly preferably represents an alkyl group having 3 carbon atoms.

Among General Formula (II-1e) to General Formula (II-1h), in order to increase an absolute value of dielectric anisotropy, General Formula (II-1e) and General Formula (II-1g) are preferable.

Specific preferred examples of the compound represented by General Formula (II-2) include compounds represented by General Formula (II-2a) to General Formula (II-2d) shown below.

[Chem. 8]

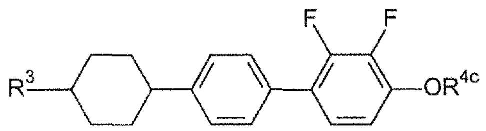

(II-2a)

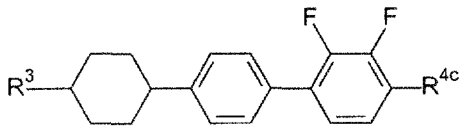

(II-2b)

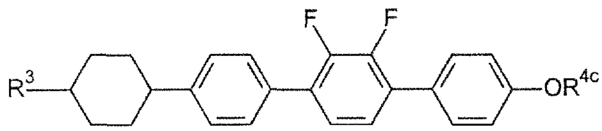

(II-2c)

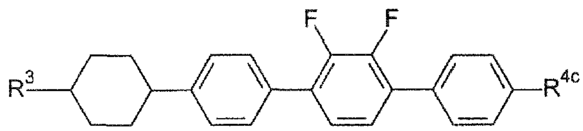

(II-2d)

In the formulas, $R^3$ represents an alkyl group having 1 to 5 carbon atoms or an alkenyl group having 2 to 5 carbon atoms, $R^{4c}$ represents an alkyl group having 1 to 5 carbon atoms, and $R^3$ and $R^{4c}$ preferably represent the same embodiment as $R^3$ and $R^4$ in General Formula (II-2).

In General Formula (II-2a) and General Formula (II-2c), $R^3$ preferably represents the same embodiment as in General Formula (II-2). $R^{4c}$ preferably represents an alkyl group having 1 to 3 carbon atoms, more preferably represents an alkyl group having 1 or 2 carbon atoms, and particularly preferably represents an alkyl group having 2 carbon atoms.

In General Formula (II-2b) and General Formula (II-2d), $R^3$ preferably represents the same embodiment as in General Formula (11-2). $R^{4c}$ preferably represents an alkyl group having 1 to 3 carbon atoms, more preferably represents an alkyl group having 1 or 3 carbon atoms, and particularly preferably represents an alkyl group having 3 carbon atoms.

Among General Formula (II-2a) to General Formula (II-2d), in order to increase an absolute value of dielectric anisotropy, General Formula (II-2a) and General Formula (II-2c) are preferable, and General Formula (II-2a) is particularly preferable.

In addition, specific preferred examples of the compound represented by General Formula (II-2) include compounds represented by General Formula (II-2e) to General Formula (II-2j) shown below.

[Chem. 9]

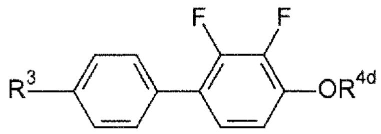

(II-2e)

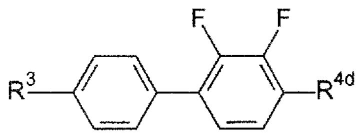

(II-2f)

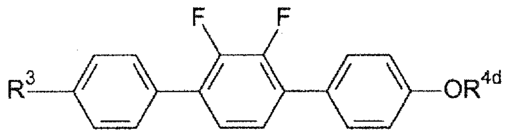

(II-2g)

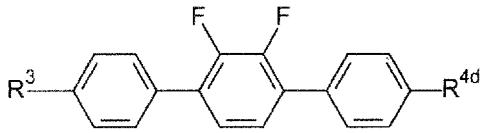

(II-2h)

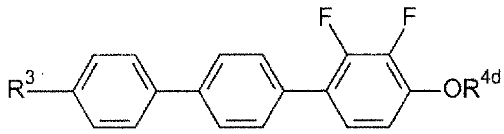

(II-2i)

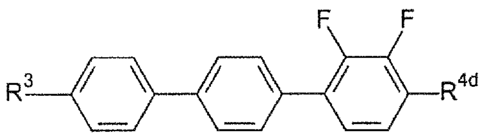

(II-2j)

In the formulas, $R^3$ represents an alkyl group having 1 to 5 carbon atoms or an alkenyl group having 2 to 5 carbon atoms, $R^{4d}$ represents an alkyl group having 1 to 5 carbon atoms, and $R^3$ and $R^{4d}$ preferably represent the same embodiment as $R^3$ and $R^4$ in General Formula (II-2).

In General Formula (II-2e), General Formula (II-2g), and General Formula (II-2i), $R^3$ preferably represents the same embodiment as in General Formula (II-2). $R^{4d}$ preferably represents an alkyl group having 1 to 3 carbon atoms, more preferably represents an alkyl group having 1 or 2 carbon atoms, and particularly preferably an alkyl group having 2 carbon atoms.

In General Formula (II-2f), General Formula (II-2h), and General Formula (II-2j), $R^3$ preferably represents the same embodiment as in General Formula (II-2). $R^{4d}$ preferably represents an alkyl group having 1 to 3 carbon atoms, more preferably represents an alkyl group having 1 or 3 carbon atoms, and particularly preferably represents an alkyl group having 2 carbon atoms.

Among General Formula (II-2e) to General Formula (II-2i), General Formula (II-2e) and General Formula (II-2h) are preferable.

In the liquid crystal layer in the liquid crystal display device of the present invention, the total content of the compounds represented by General Formula (I) and General Formula (II) is preferably 75% by weight to 100% by weight, preferably 80% by weight to 100% by weight, preferably 85% by weight to 100% by weight, preferably 90% by weight to 100% by weight, and preferably 95% by weight to 100% by weight.

The liquid crystal layer in the liquid crystal display device of the present invention may further contain a compound represented by General Formula (III).

[Chem. 10]

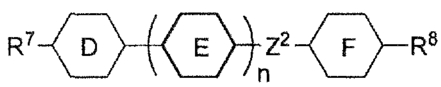

(III)

In the formula, $R^7$ and $R^8$ each independently represent an alkyl group having 1 to 8 carbon atoms, an alkenyl group having 2 to 8 carbon atoms, an alkoxy group having 1 to 8 carbon atoms or an alkenyloxy group having 2 to 8 carbon atoms, D, E, and F each independently represent a 1,4-phenylene group or a trans-1,4-cyclohexylene, which may be fluorinated, $Z^2$ represents a single bond, $-OCH_2-$, -OCO-, $-CH_2O-$, or -COO-, -OCO-, and n represents 0, 1, or 2. However, the compounds represented by General Formula (I), General Formula (II-1) and General Formula (II-2) are excluded.

The compound represented by General Formula (III) is preferably contained 1% to 20%, preferably 2% to 15%, and preferably 4% to 10%.

In General Formula (III), $R^7$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, but in a case where D represents a trans-1,4-cyclohexylene, $R^7$ preferably represents an alkyl group having 1 to 5 carbon atoms or an alkenyl group having 2 to 5 carbon atoms, more preferably represents an alkyl group having 2 to 5 carbon atoms or an alkenyl group having 2 to 4 carbon atoms, still more preferably an alkyl group having 3 to 5 carbon atoms or an alkenyl group having 2 or 3 carbon atoms, and particularly preferably an alkyl group having 3 carbon atoms, and in a case where D represents a 1,4-phenylene group, which may be fluorinated, $R^7$ preferably represents an alkyl group having 1 to 5 carbon atoms or an alkenyl group having 4 or 5 carbon atoms, more preferably represents an alkyl group having 2 to 5 carbon atoms or an alkenyl group having 4 carbon atoms, and still more preferably represents an alkyl group having 2 to 4 carbon atoms.

$R^8$ represents an alkyl group having 1 to 8 carbon atoms, an alkenyl group having 2 to 8 carbon atoms, an alkoxy group having 1 to 8 carbon atoms, or an alkenyloxy group having 3 to 8 carbon atoms.

In a case where F represents a trans-1,4-cyclohexylene, $R^8$ preferably represents an alkyl group having 1 to 5 carbon atoms or an alkenyl group having 2 to 5 carbon atoms, more preferably represents an alkyl group having 2 to 5 carbon atoms or an alkenyl group having 2 to 4 carbon atoms, still more preferably represents an alkyl group having 3 to 5 carbon atoms or an alkenyl group having 2 or 3 carbon atoms, and particularly preferably represents an alkyl group having 3 carbon atoms, and in a case where F represents a 1, 4-phenylene group, which may be fluorinated, $R^8$ preferably represents an alkyl group having 1 to 5 carbon atoms or an alkenyl group having 4 or 5 carbon atoms, more preferably represents an alkyl group having 2 to 5 carbon atoms or an alkenyl group having 4 carbon atoms, and still more preferably represents an alkyl group having 2 to 4 carbon atoms.

In a case where $R^7$ and $R^8$ represent an alkenyl group, and D or F to be bonded thereto represents a 1, 4-phenylene group, which may be fluorinated, as the alkenyl group having 4 or 5 carbon atoms, the following structure is preferable.

[Chem. 11]

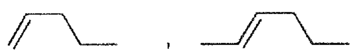

In the formulas, a right terminal is bonded to a ring structure.

Even in this case, an alkenyl group having 4 carbon atoms is still more preferable.

D, E, and F each independently represent a 1,4-phenylene group or trans-1,4-cyclohexylene, which may be fluorinated, and D, E, and F preferably represent a 2-fluoro-1,4-phenylene group, a 2,3-difluoro-1,4-phenylene group, a 1,4-phenylene group, or a trans-1,4-cyclohexylene, more preferably represent a 2-fluoro-1,4-phenylene group or a 2,3-difluoro-1,4-phenylene group, or a 1,4-phenylene group, and preferably represent a 2,3-difluoro-1,4-phenylene group or a 1,4-phenylene group. $Z^2$ represents a single bond, $-OCH_2-$, -OCO-, $-CH_2O-$, or -COO-, and preferably represents a single bond, $-CH_2O-$, or -COO- and more preferably represents a single bond.

n represents 0, 1, or 2 and preferably represents 0 or 1. Also, in a case where $Z^2$ represents a substituent other than a single bond, n preferably represents 1.

As the compound represented by General Formula (III), in a case where n represents 1, compounds represented by General Formula (III-1c) to General Formula (III-1e) are preferable from a viewpoint of increasing negative dielectric anisotropy, and compounds represented by General Formula (III-1f) to General Formula (III-1j) are preferable from a viewpoint of increasing a response speed.

[Chem. 12]

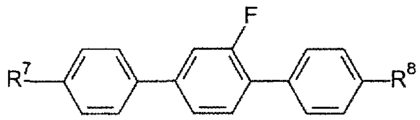
(III-1c)

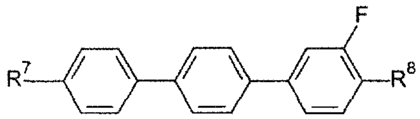
(III-1d)

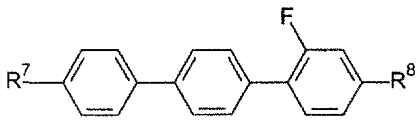
(III-1e)

[Chem. 13]

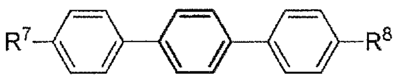
(III-1f)

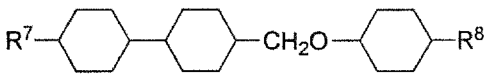
(III-1g)

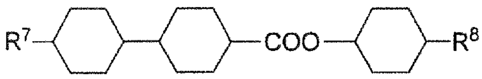
(III-1h)

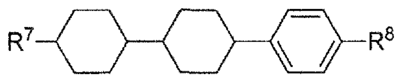
(III-1i)

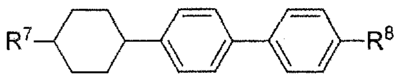
(III-1j)

In the formulas, $R^7$ and $R^8$ each independently represent an alkyl group having 1 to 5 carbon atoms, an alkenyl group having 2 to 5 carbon atoms, or an alkoxy group having 1 to 5 carbon atoms, and $R^7$and $R^8$ represent the same embodiment as $R^7$ and $R^8$ in General Formula (III) .

As the compound represented by General Formula (III), in a case where n is 2, compounds represented by General Formula (III-2a) to General Formula (III-2h) are preferable from a viewpoint of increasing negative dielectric anisotropy, compounds represented by General Formula (III-2j) to General Formula (111-21) are preferable from a viewpoint of increasing a response speed.

[Chem. 14]

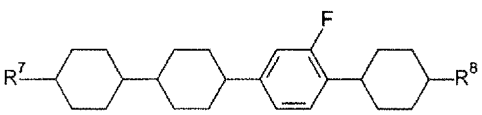
(III-2a)

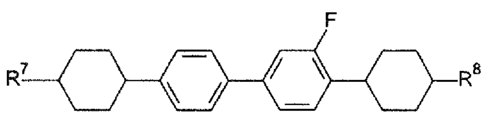
(III-2b)

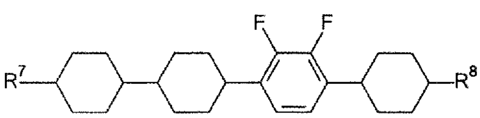
(III-2c)

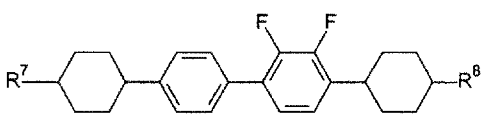
(III-2d)

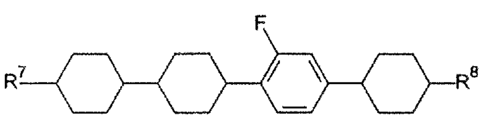
(III-2e)

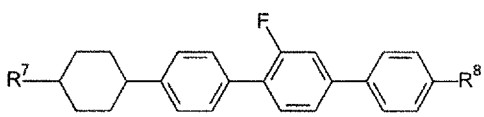
(III-2f)

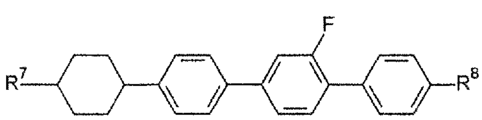
(III-2g)

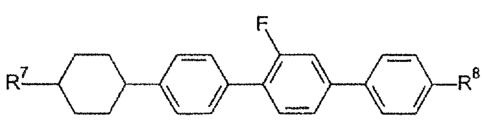
(III-2h)

[Chem. 15]

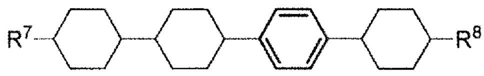 (III-2j) 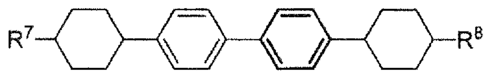 (III-2k)

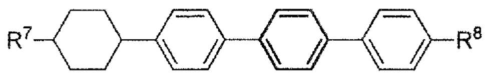 (III-2l)

In the formulas, $R^7$ and $R^8$ each independently represent an alkyl group having 1 to 5 carbon atoms, an alkenyl group having 2 to 5 carbon atoms, or an alkoxy group having 1 to 5 carbon atoms, and $R^7$ and $R^8$ preferably represent the same embodiment as $R^7$ and $R^8$ in General Formula (III).

As the General Formula (III), in a case where n represents 0, a compound represented by General Formula (III-3b) is preferable from a viewpoint of increasing a response speed.

[Chem. 16]

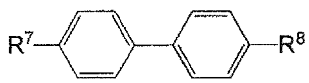 (III-3b)

In the formula, $R^7$ and $R^8$ each independently represent an alkyl group having 1 to 5 carbon atoms, an alkenyl group having 2 to 5 carbon atoms, or an alkoxy group having 1 to 5 carbon atoms, and $R^7$ and $R^8$ preferably represent the same embodiment as $R^7$ and $R^8$ in General Formula (III).

$R^7$ preferably represents an alkyl group having 2 to 5 carbon atoms and more preferably represents an alkyl group having 3 carbon atoms. $R^8$ preferably represents an alkoxy group having 1 to 3 carbon atoms and more preferably represents an alkoxy group having 2 carbon atoms.

The liquid crystal layer in the liquid crystal display device of the present invention may be used in a wide range of a nematic phase-isotropic liquid phase transition temperature ($T_{ni}$), preferably 60°C to 120°C, more preferably 70°C to 100°C, and particularly 70°C to 85°C.

At a temperature of 25°C, the dielectric anisotropy is preferably -2.0 to -6.0, more preferably -2.5 to -5.0, and particularly preferably -2.5 to -4.0.

At a temperature of 25°C, the refractive index anisotropy is preferably 0.08 to 0.13 and more preferably 0.09 to 0.12. Further more specifically, the refractive index anisotropy is preferably 0.10 to 0.12 in a case of corresponding to a thin cell gap and preferably 0.08 to 0.10 in a case of corresponding to a thick cell gap.

The rotational viscosity ($\gamma 1$) is preferably 150 or less, more preferably 130 or less, and particularly preferably 120 or less.

In the liquid crystal layer in the liquid crystal display device of the present invention, Z, which is a function of the rotational viscosity and the refractive index anisotropy, preferably represents a specific value.

[Equation 1]

$$Z = \gamma 1 / \Delta n^2$$

In the equation, $\gamma 1$ represents rotational viscosity and $\Delta n$ represents refractive index anisotropy.

Z is preferably 13,000 or less, more preferably 12,000 or less, and particularly preferably 11,000 or less.

In a case where an active matrix display element is used, the liquid crystal layer in the liquid crystal display device of the present invention necessarily has specific resistance of $10^{12}$ ($\Omega \cdot m$) or more, preferably $10^{13}$ ($\Omega \cdot m$) and more preferably $10^{14}$ ($\Omega \cdot m$) or more.

The liquid crystal layer in the liquid crystal display device of the present invention, in addition to the aforementioned compounds, may contain a normal nematic liquid crystal, a smectic liquid crystal, a cholesteric liquid crystal, an antioxidant, an ultraviolet ray absorber, a polymerizable monomer, or the like depending on the use.

As the polymerizable monomer, a bifunctional monomer represented by General Formula (V) is preferable.

[Chem. 17]

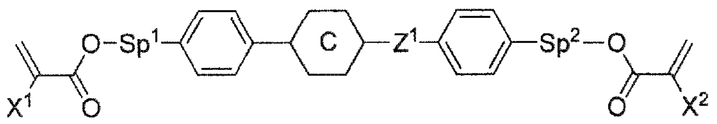 (V)

In the formula, $X^1$ and $X^2$ each independently represent a hydrogen atom or a methyl group,

$Sp^1$ and $Sp^2$ each independently represent a single bond, an alkylene group having 1 to 8 carbon atoms or $-O-(CH_2)_s-$ (where s represents an integer of 2 to 7 and an oxygen atom is bonded to an aromatic ring),
$Z^1$represents $-OCH_2-$, $-CH_2O-$, -COO-, -OCO-, $-CF_2O-$, $-OCF_2-$, $-CH_2CH_2-$, $-CF_2CF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ (where $Y^1$ and $Y^2$ each independently represent a fluorine atom or a hydrogen atom), -C=C-, or a single bond,
C represents a 1,4-phenylene group, a trans-1,4-cyclohexylene group, or a single bond, and
all of the 1,4-phenylene groups in the formula may have an arbitrary hydrogen atom substituted with a fluorine atom.

$X^1$ and $X^2$ are preferably any of all diacrylate derivatives representing a hydrogen atom and all dimethacrylate derivatives having a methyl group, and a compound in which one represents a hydrogen atom and the other represents a methyl group is preferable. With regard to a polymerization rate of these compounds, the diacrylate derivatives are the fastest, the dimethacrylate derivatives are the slowest, and an unsymmetrical compound is intermediate thereof, and a preferred aspect may be used according to the use thereof. In the PSA display element, the dimethacrylate derivatives are particularly preferable.

$Sp^1$ and $Sp^2$ each independently represent a single bond, an alkylene group having 1 to 8 carbon atoms, or $-O-(CH_2)_s-$, and in the PSA display element, at least one preferably represents a single bond, and a compound in which both $Sp^1$ and $Sp^2$ represent a single bond, or an aspect in which one represents a single bond and the other represents an alkylene group having 1 to 8 carbon atoms or $-O-(CH_2)_s-$ is preferable. In this case, an alkyl group having 1 to 4 carbon atoms is preferable and s is preferably 1 to 4.

$Z^1$ preferably represents $-OCH_2-$, $-CH_2O-$, -COO-, -OCO-, $-CF_2O-$, $-OCF_2-$, $-CH_2CH_2-$, $-CF_2CF_2-$, or a single bond, more preferably represents -COO-, -OCO-, or a single bond, and particularly preferably represents a single bond.

C represents a 1,4-phenylene group in which an arbitrary hydrogen atom may be substituted with a fluorine atom, a trans-1,4-cyclohexylene group, or a single bond, and preferably represents a 1,4-phenylene group or a single bond. In a case where C represents a ring structure other than a single bond, $Z^1$ preferably represents a linking group other than a single bond, and in a case where C represents a single bond, $Z^1$ preferably represents a single bond.

From these viewpoints, specifically, in General Formula (V), a ring structure between $Sp^1$ and $Sp^2$ is preferably a structure shown below.

In General Formula (V), in a case where C represents a single bond and the ring structure is formed by two rings, Formula (Va-1) to Formula (Va-5) are preferable, Formula (Va-1) to Formula (Va-3) are more preferable, and Formula (Va-1) is particularly preferable.

[Chem. 18]

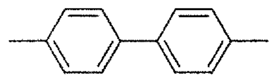

(Va-1)

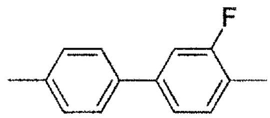

(Va-2)

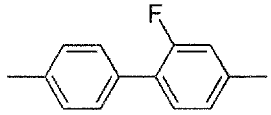

(Va-3)

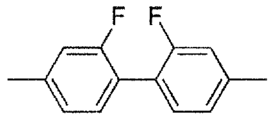

(Va-4)

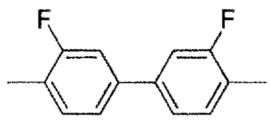

(Va-5)

In the formulas, both terminals are bonded to $Sp^1$ or $Sp^2$.

An alignment regulation force of the polymerizable compound including these skeletons after polymerization is optimal for a PSA type liquid crystal display element, since a satisfactory alignment state is obtained, display unevenness is suppressed or is not generated at all.

From the above, as the polymerizable monomer, General Formula (V-1) to General Formula (V-4) are particularly preferable and General Formula (V-2) is most preferable.

[Chem. 19]

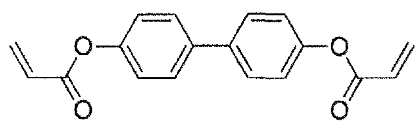

(V-1)

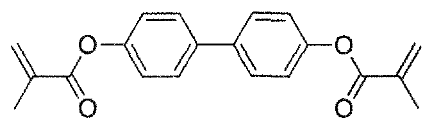

(V-2)

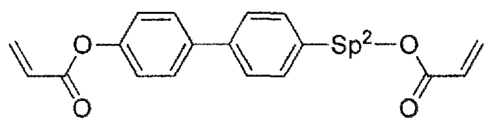

(V-3)

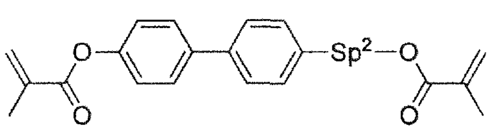

(V-4)

In the formulas, $Sp^2$ represents an alkylene group having 2 to 5 carbon atoms.

In a case where the polymerizable monomer is added, polymerization is performed even in a case where the polymerization initiator is not present, but the polymerization initiator may be contained in order to promote polymerization. Examples of the polymerization initiator include benzoin ethers, benzophenones, acetophenones, benzyl ketals, and acyl phosphine oxides. In addition, a stabilizer may be added in order to improve storage stability. Examples of the stabilizer which may be used include hydroquinones, hydroquinone monoalkyl ethers, tertiary butyl catechols, pyrogallols, thiophenols, nitro compounds, β-naphthylamines, β-naphthols, and nitroso compounds.

The liquid crystal layer of the present invention is useful for a liquid crystal display element, useful for an Active Matrix Liquid Crystal Display element (AM-LCD), a TN (nematic liquid crystal display element), a Super Twisted Nematic Liquid Crystal Display element (STN-LCD), an In-Plane Switching Liquid Crystal Display element (OCB-LCD and IPS-LCD), and particularly useful for an AM-LCD, and the liquid crystal layer of the present invention may be used for a liquid crystal display element for a PSA mode, a PSVA mode, a VA mode, an IPS mode, or an ECB mode.

(Retardation film)

(Polymerizable liquid crystal compound)

The liquid crystal compound (polymerizable liquid crystal compound) having the polymerizable functional group of the present invention shows crystallinity in a composition including other liquid crystal compounds. In addition, the polymerizable liquid crystal compound may not show crystallinity by itself.

For example, a bar-like polymerizable liquid crystal compound having a rigid moiety referred to as mesogen in which a plurality of structures such as a 1,4-phenylene group and a 1,4-cyclohexylene group are linked to each other, as disclosed in Handbook of Liquid Crystals (edited by D.Demus, J.W.Goodby, G.W.Gray, H.W.Spiess, and V.Vill, published by Wiley-VCH Verlag GmbH & Co. KGaA, 1998), Kikan Kagaku Sosetsu No. 22, Chemistry of Liquid Crystals (edited by The Chemical Society of Japan, 1994), or JP-A-7-294735, JP-A-8-3111, JP-A-8-29618, JP-A-11-80090, JP-A-11-116538, JP-A-11-148079, or the like, and a polymerizable functional group such as a vinyl group, an acryl group, and a (meth) acryl group; or a bar-like polymerizable liquid crystal compound having an maleimide group, as disclosed in JP-A-2004-2373 or JP-A-2004-99446 is exemplified. Among these, a bar-like liquid crystal compound having a polymerizable group is preferable since it is easy to produce a liquid crystal whose liquid crystal temperature range includes a temperature lower and higher than room temperature.

Furhther, the polymerizable liquid crystal composition of the present invention is constituted by one or more of the polymerizable liquid crystal compound, and the polymerization initiator, and if necessary, a surfactant and other additives. In a case of producing a cholesteric liquid crystal, the polymerizable liquid crystal composition of the present invention further contains a chiral compound.

As a retardation film in the liquid crystal display device of the present invention, an optically anisotropic body obtained by polymerizing a polymerizable liquid crystal composition 25% by weight or more of a liquid crystal compound having two or more polymerizable functional groups is used.

As the liquid crystal compound having two or more polymerizable functional groups, specifically, a compound represented by the following General Formula (1) is preferable.

[Chem. 20]

$$P^1\text{-}(Sp^1)_{m1}\text{-}MG\text{-}R^1 \qquad (1)$$

In the formula, $P^1$ represents a polymerizable functional group, $Sp^1$ represents an alkylene group having 0 to 18 carbon atoms (the alkylene group may be substituted with one or more halogen atoms, a CN group, or an alkyl group having 1 to 8 carbon atoms having a polymerizable functional group, and one $CH_2$ group present in this group or two or more $CH_2$ groups non-adjacent to each other each independently may be substituted with -O-, -S-, -NH-, -N ($CH_3$)-, -CO-, -COO-, -OCO-, -OCOO-, -SCO-, -COS-, or -C≡C-as long as an oxygen atom is not directly bonded to another oxygen atom, m1 represents 0 or 1, MG represents a mesogenic group or a mesogenic supporting group, $R^1$ represents a hydrogen atom, a halogen atom, a cyano group, or an alkyl group having 1 to 18 carbon atoms, the alkyl group may be substituted with one or more halogen atoms or CN, one $CH_2$ group present in this group or two or more $CH_2$ groups non-adjacent to each other each independently may be substituted with -O-, -S-, -NH-, -N($CH_3$)-, -CO-, -COO-, -OCO-, -OCOO-, -SCO-, -COS-, or -C≡C-as long as an oxygen atom is not directly bonded to another oxygen atom, or $R^1$ represents a structure represented by General Formula (1-a):

[Chem. 21]

$$\text{-}(Sp^{1a})_{ma}\text{-}P^{1a} \qquad (1\text{-}a)$$

(wherein $P^{1a}$ represents a polymerizable functional group, $Sp^{1a}$ represents the same meaning as the $Sp^1$, and ma represents 0 or 1),
the mesogenic group or the mesogenic supporting group represented by MG is represented by General Formula (1-b):

[Chem. 22]

$$\text{-}Z0\text{-}(A1\text{-}Z1)_n\text{-}(A2\text{-}Z2)_l\text{-}(A3\text{-}Z3)_k\text{-}A4\text{-}Z4\text{-}A5\text{-}Z5\text{-} \qquad (1\text{-}b)$$

wherein A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and
may have, as a substituent, one or more of F, Cl, $CF_3$, $OCF_3$, a CN group, an alkyl group having 1 to 8 carbon atoms, an alkoxy group, an alkanoyl group, an alkanoyloxy group, an alkenyl group having 2 to 8 carbon atoms, an alkenyloxy group, an alkenoyl group, an alkenoyloxy group, and a substituent represented by General Formula (1-c):

[Chem. 23]

$$-(A)_{n1}(Sp^{1c})_{mc}P^{c} \qquad (1\text{-}c)$$

(wherein $P^c$ represents a polymerizable functional group, A represents -O-, -COO-, -OCO-, $-OCH_2-$, $-CH_2O-$, $-CH_2CH_2OCO-$, $-COOCH_2CH_2-$, $-OCOCH_2CH_2-$, or a single bond, $Sp^{1c}$ represents the same meaning as the $Sp^1$, n1 represents 0 or 1, and mc represents 0 or 1),
Z0, Z1, Z2, Z3, Z4, and Z5 each independently represent -COO-, -OCO-, $-CH_2CH_2-$, $-OCH_2-$, $-CH_2O-$, -CH=CH-, -C=C-, -CH=CHCOO-, -OCOCH=CH-, $-CH_2CH_2COO-$, $-CH_2CH_2OCO-$, $-COOCH_2CH_2-$, $-OCOCH_2CH_2-$, -CONH-, -NHCO-, an alkyl group having 2 to 10 carbon atoms which may have a halogen atom or a single bond, and
n, 1, and k each independently represent 0 or 1 and satisfy $0 \leq n+1+k \leq 3$),
with the proviso that in the Formula (1), two or more polymerizable functional groups are present.

$P^1$, $P^{1a}$, and $P^c$ preferably represent a substituent selected from the polymerizable group represented by the following Formula (P-1) to Formula (P-20).

[Chem. 24]

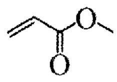
(P-1)
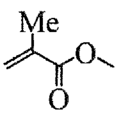
(P-2)
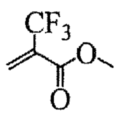
(P-3)
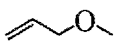
(P-4)
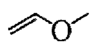
(P-5)
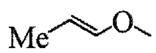
(P-6)
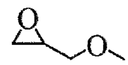
(P-7)

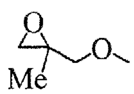
(P-8)
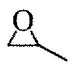
(P-9)
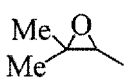
(P-10)
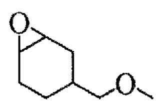
(P-11)
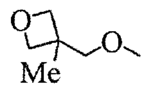
(P-12)
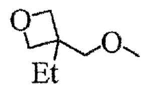
(P-13)

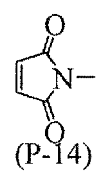
(P-14)
HS—
(P-15)
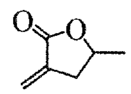
(P-16)
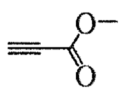
(P-17)
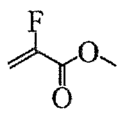
(P-18)
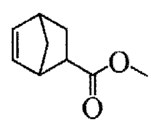
(P-19)

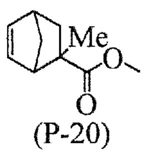
(P-20)

Among these polymerizable functional groups, Formula (P-1), or Formulas (P-2), (P-7), (P-12), and (P-13) are

preferable and Formulas (P-1), (P-7), and (P-12) are more preferable from a viewpoint of increasing polymerizing properties and storage stability.

One type of 2 or more types of the liquid crystal compound having two or more polymerizable functional groups may be used and 1 type to 6 types are preferable and 2 types to 5 types are more preferable.

The content of the liquid crystal compound having two or more polymerizable functional groups is preferably 25% to 100% by mass, more preferably 30% to 100% by mass, and particularly preferably 35% to 100% by mass within the polymerizable liquid crystal composition.

As the liquid crystal compound having two or more polymerizable functional groups, a compound having two polymerizable functional groups is preferable and a compound represented by the following General Formula (2) is preferable.

[Chem. 25]

$$P^{2a}\text{-}(Sp^{2a})_{m2}\text{-}Z0\text{-}(A1\text{-}Z1)_n\text{-}(A2\text{-}Z2)_l\text{-}(A3\text{-}Z3)_k\text{-}A4\text{-}Z4\text{-}A5\text{-}Z5\text{-}(Sp^{2b})_{n2}\text{-}P^{2b} \qquad (2)$$

In the formula, A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and

a substituent thereof represents one or more of F, Cl, $CF_3$, $OCF_3$, CN groups, alkyl groups having 1 to 8 carbon atoms, alkoxy groups, alkanoyl groups, alkanoyloxy groups, alkenyl groups having 2 to 8 carbon atoms, alkenyloxy groups, alkenoyl groups, or alkenoyloxy groups. In addition, Z0, Z1, Z2, Z3, Z4, and Z5 each independently represent -COO-, -OCO-, $-CH_2CH_2-$, $-OCH_2-$, $-CH_2O-$, -CH=CH-, -C≡C-, -CH=CHCOO-, -OCOCH=CH-, $-CH_2CH_2COO-$, $-CH_2CH_2OCO-$, $-COOCH_2CH_2-$, $-OCOCH_2CH_2-$, -CONH-, -NHCO-, or an alkyl group having 2 to 10 carbon atoms which may have a halogen atom or a single bond, and

n, k, and l each independently represent 0 or 1 and satisfy $0 \leq n + l + k \leq 3$.

$P^{2a}$ and $P^{2b}$ represent a polymerizable functional group, $Sp^{2a}$ and $Sp^{2b}$ each independently represent an alkylene group having 0 to 18 carbon atoms (the alkylene group may be substituted with one or more halogen atoms or CN, and one $CH_2$ group present in this group or two or more $CH_2$ groups non-adjacent to each other each independently may be substituted with -O-, -S-, -NH-, $-N(CH_3)-$, -CO-, -COO-, -OCO-, -OCOO-, -SCO-, -COS-, or -C≡C-as long as an oxygen atom is not directly bonded to another oxygen atom, and m2 and n2 each independently represent 0 or 1.

n, l, and k each independently represent 0 or 1 and satisfy $0 \leq n+l+k \leq 3$.

$P^{2a}$ and $P^{2b}$ preferably represent a substituent selected from the polymerizable group represented by the following Formula (P-1) to Formula (P-20).

[Chem. 26]

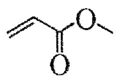
(P-1)

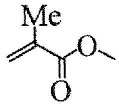
(P-2)

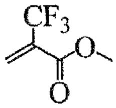
(P-3)

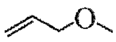
(P-4)

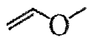
(P-5)

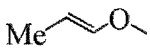
(P-6)

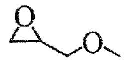
(P-7)

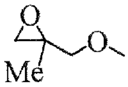
(P-8)

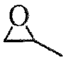
(P-9)

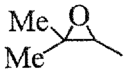
(P-10)

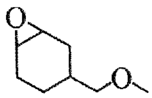
(P-11)

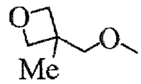
(P-12)

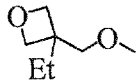
(P-13)

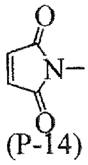
(P-14)

HS—
(P-15)

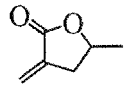
(P-16)

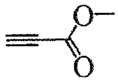
(P-17)

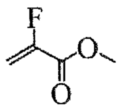
(P-18)

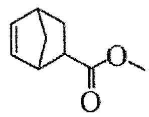
(P-19)

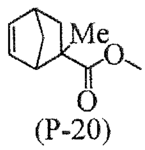
(P-20)

Among these polymerizable functional groups, Formula (P-1), or Formulas (P-2), (P-7), (P-12), and (P-13) are preferable and Formulas (P-1), (P-7), and (P-12) are more preferable, from a viewpoint of increasing polymerizing properties and storage stability.

Further, as one example of General Formula (2), General Formulas (2-1) to (2-4) may be exemplified but not limited to these general formulas.

[Chem. 27]

$$P^{2a}\text{-}(Sp^{2a})_{m2}\text{-Z0-A4-Z4-A5-Z5-}(Sp^{2b})_{n2}\text{-}P^{2b} \quad (2\text{-}1)$$

$$P^{2a}\text{-}(Sp^{2a})_{m2}\text{-Z0-A3-Z3-A4-Z4-A5-Z5-}(Sp^{2b})_{n2}\text{-}P^{2b} \quad (2\text{-}2)$$

$$P^{2a}\text{-}(Sp^{2a})_{m2}\text{-Z0-A2-Z2-A3-Z3-A4-Z4-A5-Z5-}(Sp^{2b})_{n2}\text{-}P^{2b} \quad (2\text{-}3)$$

$$P^{2a}\text{-}(Sp^{2a})_{m2}\text{-Z0-A1-Z1-A2-Z2-A3-Z3-A4-Z4-A5-Z5-}(Sp^{2b})_{n2}\text{-}P^{2b} \quad (2\text{-}4)$$

In the formulas, $P^{2a}$, $P^{2b}$, $Sp^{2a}$, $Sp^{2b}$, A1, A2, A3, A4, A5, Z0, Z1, Z2, Z3, Z4, Z5, m2 and n2 represent the same definition as in General Formula (2).

As a specific example of the polymerizable liquid crystal compound having two polymerizable functional groups, compounds of Formulas (2-5) to (2-29) are exemplified, but not limited to the following compounds.

[Chem. 28]

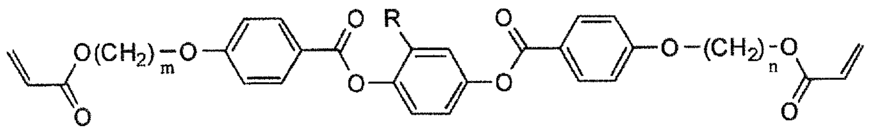

(2-5)

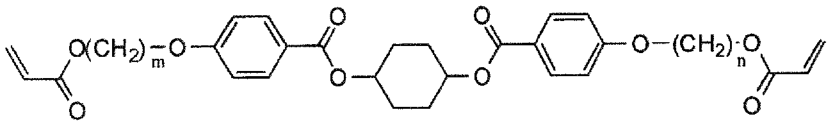

(2-6)

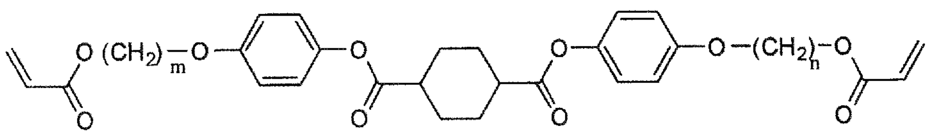

(2-7)

[Chem. 29]

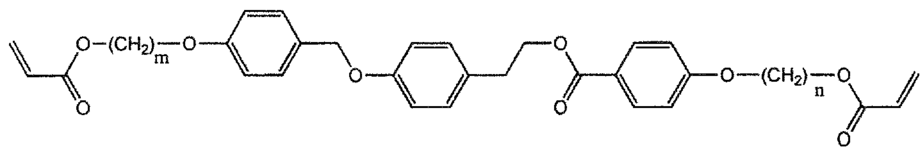

(2-8)

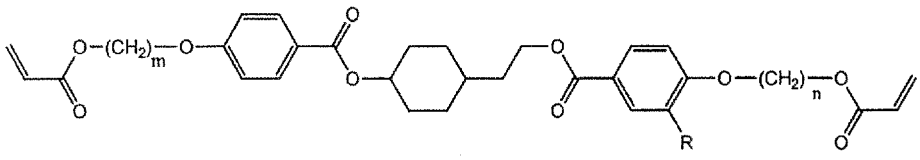

(2-9)

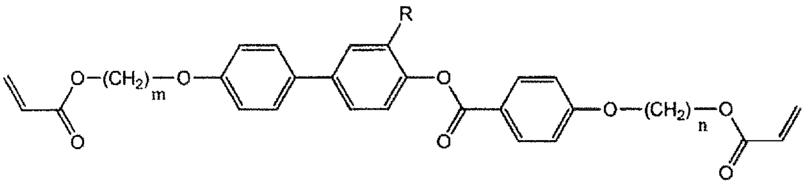

(2-10)

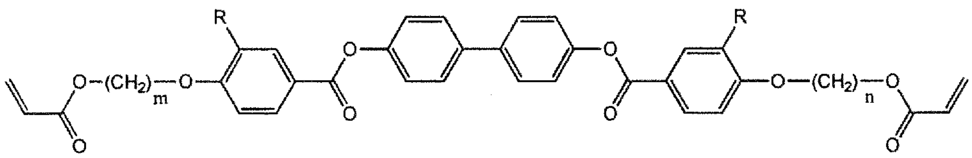

(2-11)

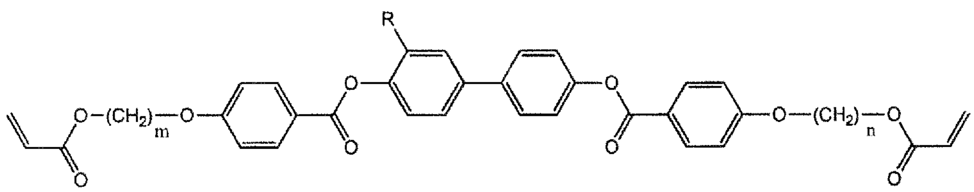

(2-12)

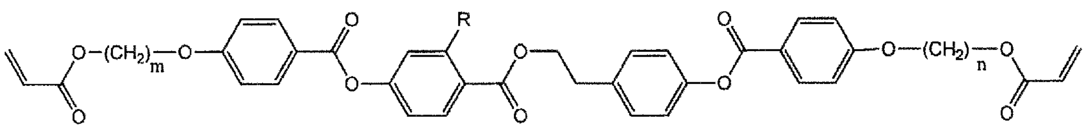

(2-13)

[Chem. 30]

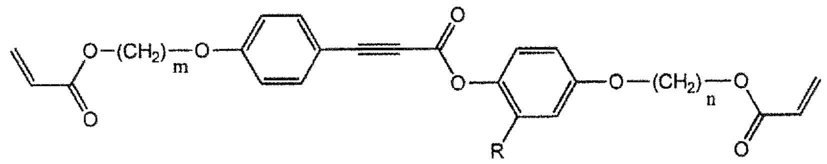

(2-14)

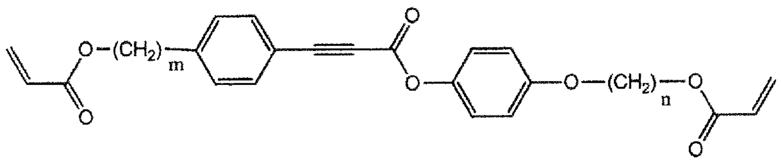

(2-15)

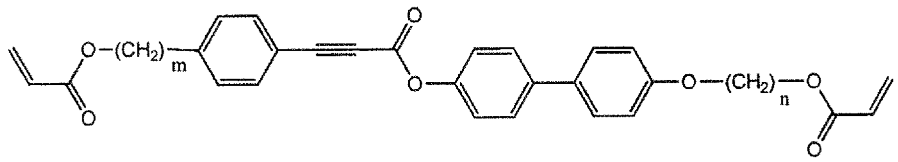

(2-16)

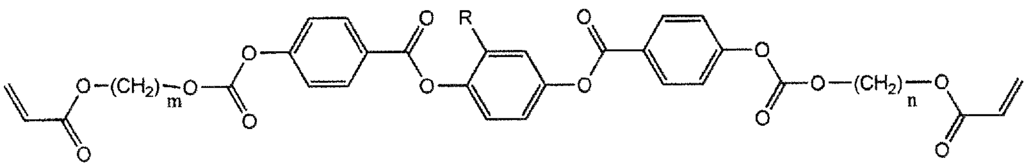

(2-17)

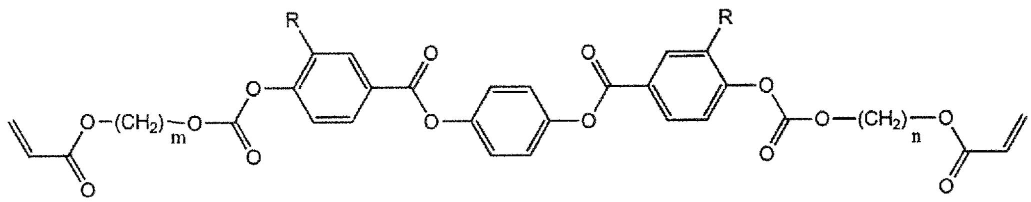

(2-18)

[Chem. 31]

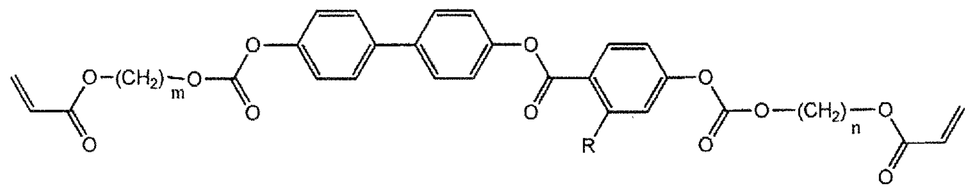

(2-19)

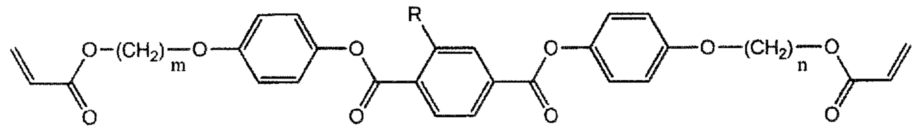

(2-20)

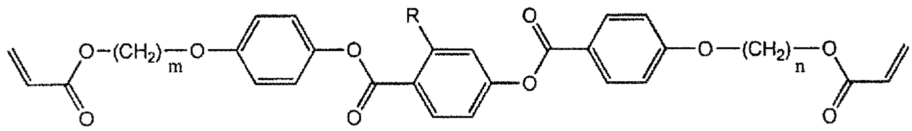

(2-21)

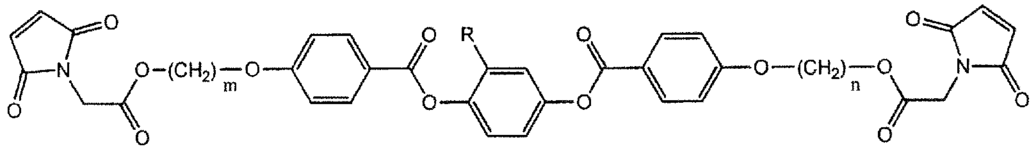

(2-22)

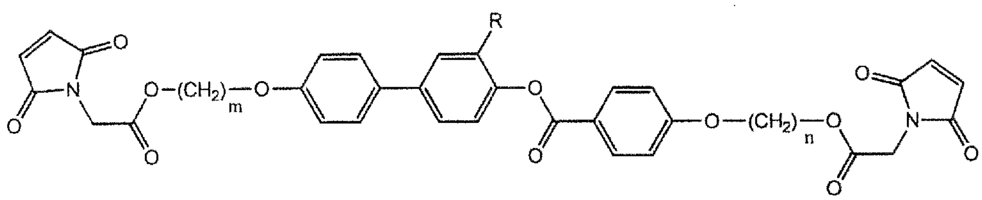

(2-23)

[Chem. 32]

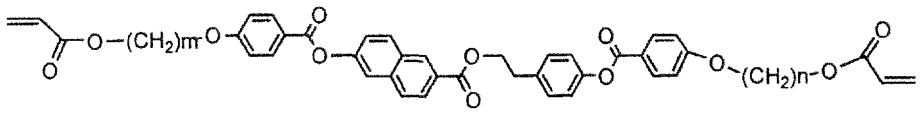

(2-24)

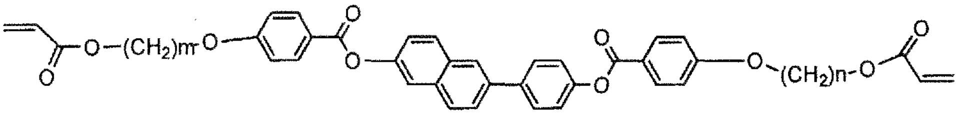

(2-25)

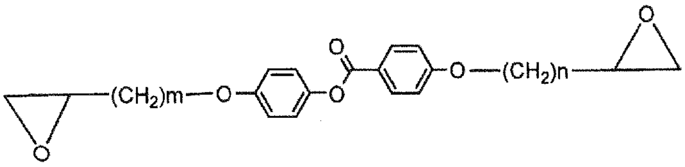

(2-26)

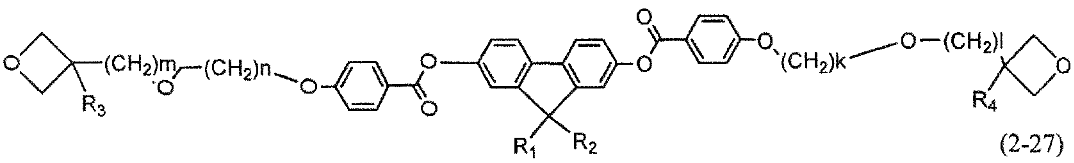

(2-27)

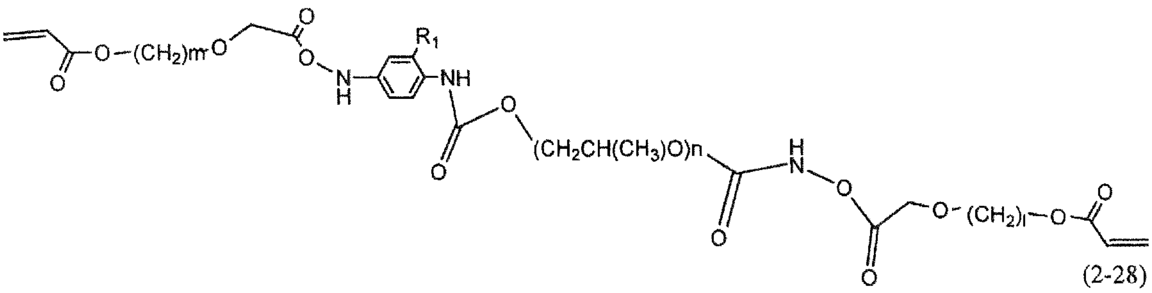

(2-28)

In the formulas, m and n each independently represent an integer of 1 to 18, R represents a hydrogen atom, a halogen atom, an alkyl group having 1 to 6 carbon atoms, an alkoxy group having 1 to 6 carbon atoms, or a cyano group, and in a case where these groups represent an alkyl group having 1 to 6 carbon atoms or an alkoxy group having 1 to 6 carbon atoms, all of the groups may be unsubstituted or may be substituted with 1 or 2 or more halogen atoms.

One type or 2 or more types of the liquid crystal compound having two polymerizable functional groups may be used, and 1 type to 5 types are preferable and 2 types to 5 types are more preferable.

The content of the liquid crystal compound having two polymerizable functional groups is preferably 25% to 100% by mass, more preferably 30% to 100% by mass, and particularly preferably 35% to 100% by mass within the polymerizable composition.

The liquid crystal compound having two or more polymerizable functional groups is preferably a compound having three polymerizable functional groups. Examples thereof include General Formulas (3-1) to (3-18) and not limited to the following general formulas.

[Chem. 33]

$$P^{3a}\text{-}(Sp^{3a})_{m3}\text{-Z0-A4-Z4-A5-Z5-}(Sp^{3b})_{n3}\text{-}P^{3b} \quad (3\text{-}1)$$
$$(Sp^{3c})_{k3}\text{-}P^{3c}$$

$$P^{3a}\text{-}(Sp^{3a})_{m3}\text{-Z0-A4-Z4-A5-Z5-}(Sp^{3b})_{n3}\text{-}P^{3b} \quad (3\text{-}2)$$
$$A\text{-}(Sp^{3c})_{k3}\text{-}P^{3c}$$

$$P^{3a}\text{-}(Sp^{3a})_{m3}\text{-Z0-A3-Z3-A4-Z4-A5-Z5-}(Sp^{3b})_{n3}\text{-}P^{3b} \quad (3\text{-}3)$$
$$(Sp^{3c})_{k3}\text{-}P^{3c}$$

$$P^{3a}\text{-}(Sp^{3a})_{m3}\text{-Z0-A3-Z3-A4-Z4-A5-Z5-}(Sp^{3b})_{n3}\text{-}P^{3b} \quad (3\text{-}4)$$
$$A\text{-}(Sp^{3c})_{k3}\text{-}P^{3c}$$

$$P^{3a}\text{-}(Sp^{3a})_{m3}\text{-Z0-A3-Z3-A4-Z4-A5-Z5-}(Sp^{3b})_{n3}\text{-}P^{3b} \quad (3\text{-}5)$$
$$(Sp^{3c})_{k3}\text{-}P^{3c}$$

$$P^{3a}\text{-}(Sp^{3a})_{m3}\text{-Z0-A3-Z3-A4-Z4-A5-Z5-}(Sp^{3b})_{n3}\text{-}P^{3b} \quad (3\text{-}6)$$
$$A\text{-}(Sp^{3c})_{k3}\text{-}P^{3c}$$

$$P^{3a}\text{-}(Sp^{3a})_{m3}\text{-Z0-A2-Z2-A3-Z3-A4-Z4-A5-Z5-}(Sp^{3b})_{n3}\text{-}P^{3b} \quad (3\text{-}7)$$
$$(Sp^{3c})_{k3}\text{-}P^{3c}$$

$$P^{3a}\text{-}(Sp^{3a})_{m3}\text{-Z0-A2-Z2-A3-Z3-A4-Z4-A5-Z5-}(Sp^{3b})_{n3}\text{-}P^{3b} \quad (3\text{-}8)$$
$$A\text{-}(Sp^{3c})_{k3}\text{-}P^{3c}$$

[Chem. 34]

$$P^{3a}\text{-}(Sp^{3a})_{m3}\text{-}Z0\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}9)$$
$$(Sp^{3c})_{k3}\text{-}P^{3c}$$

$$P^{3a}\text{-}(Sp^{3a})_{m3}\text{-}Z0\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}10)$$
$$A\text{-}(Sp^{3c})_{k3}\text{-}P^{3c}$$

$$P^{3a}\text{-}(Sp^{3a})_{m3}\text{-}Z0\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}11)$$
$$(Sp^{3c})_{k3}\text{-}P^{3c}$$

$$P^{3a}\text{-}(Sp^{3a})_{m3}\text{-}Z0\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}12)$$
$$A\text{-}(Sp^{3c})_{k3}\text{-}P^{3c}$$

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}13)$$
$$(Sp^{3c})_{k3}\text{-}P^{3c}$$

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}14)$$
$$A\text{-}(Sp^{3c})_{k3}\text{-}P^{3c}$$

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}15)$$
$$(Sp^{3c})_{k3}\text{-}P^{3c}$$

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5\text{-}Z5\text{-}(Sp^{3b})_{n3}\text{-}P^{3b} \qquad (3\text{-}16)$$
$$A\text{-}(Sp^{3c})_{k3}\text{-}P^{3c}$$

[Chem. 35]

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5(\text{-}(Sp^{3c})_{k3}\text{-}P^{3c})\text{-}Z5\text{-}(Sp^{3b})_{n3}\text{-}P^{3b} \quad (3\text{-}17)$$

$$P^{3a}\text{-}(Sp^{3a})_{m3}\text{-}Z0\text{-}A1\text{-}Z1\text{-}A2\text{-}Z2\text{-}A3\text{-}Z3\text{-}A4\text{-}Z4\text{-}A5(\text{-}A\text{-}(Sp^{3c})_{k3}\text{-}P^{3c})\text{-}Z5\text{-}(Sp^{3b})_{n3}\text{-}P^{3b} \quad (3\text{-}18)$$

In the formulas, A1, A2, A3, A4, and A5 represent the same definition as in General Formula (2). In addition, Z0, Z1, Z2, Z3, Z4, and Z5 represent the same definition as in General Formula (2).

$P^{3a}$, $P^{3b}$, and $P^{3b}$ each independently represent a polymerizable functional group, $Sp^{3a}$, $Sp^{3b}$, and $Sp^{3c}$ each independently represent an alkylene group having 0 to 18 carbon atoms (the alkylene group may be substituted with one or more halogen atoms or CN, and one $CH_2$ group present in this group or two or more $CH_2$ groups non-adjacent to each other each independently may be substituted with -O-, -S-, -NH-, -N($CH_3$)-, -CO-, -COO-, -OCO-, -OCOO-, -SCO-, -COS-, or -C≡C- as long as an oxygen atom is not directly bonded to another oxygen atom, and m3, n3, and k3 each independently represent 0 or 1.

Specific examples of the polymerizable liquid crystal compound having two polymerizable functional groups include compounds of Formulas (3-19) to (3-26), but the examples are not limited to the following compounds.

[Chem. 36]

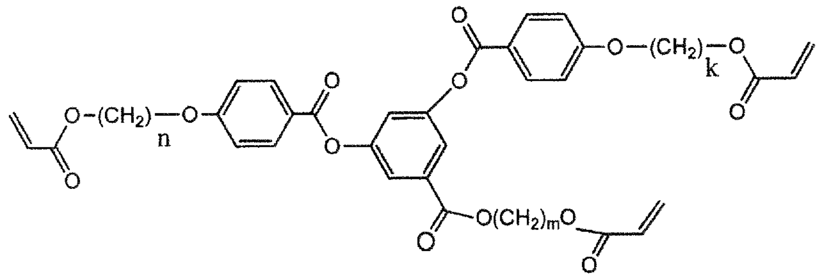

(3-19)

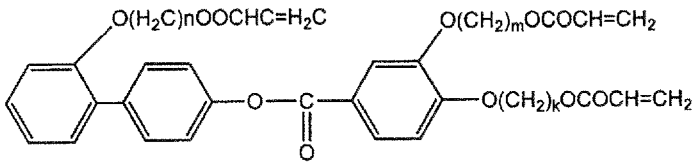

(3-20)

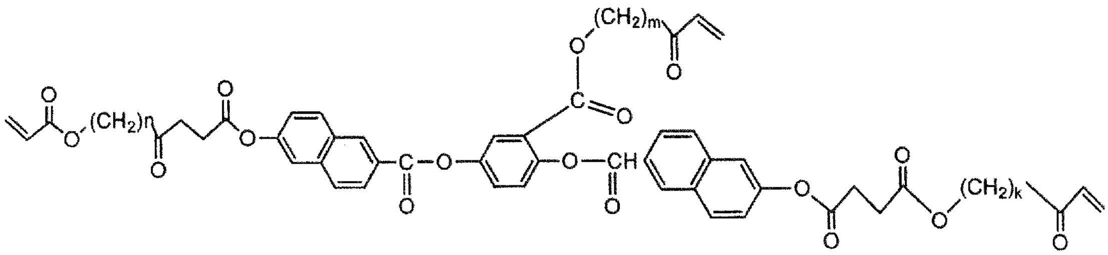

(3-21)

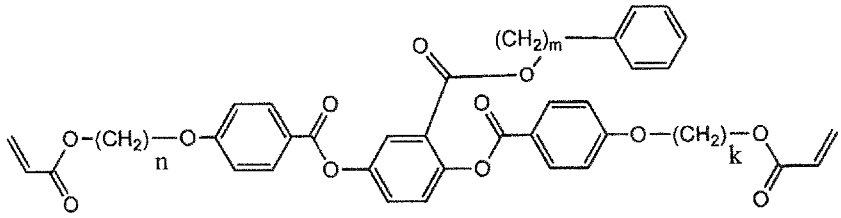

(3-22)

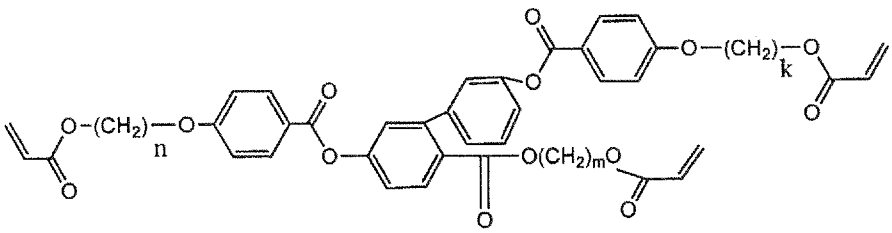

(3-23)

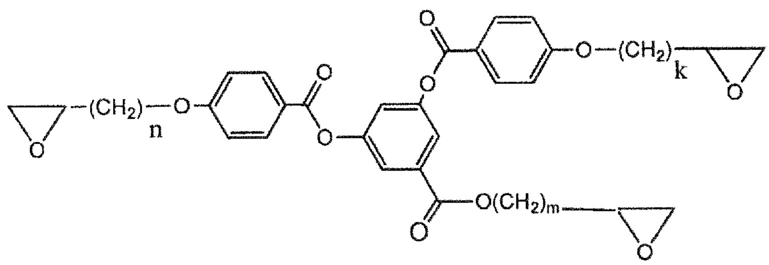

(3-24)

[Chem. 37]

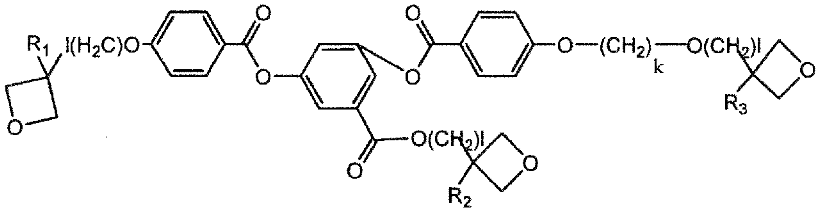

(3-25)

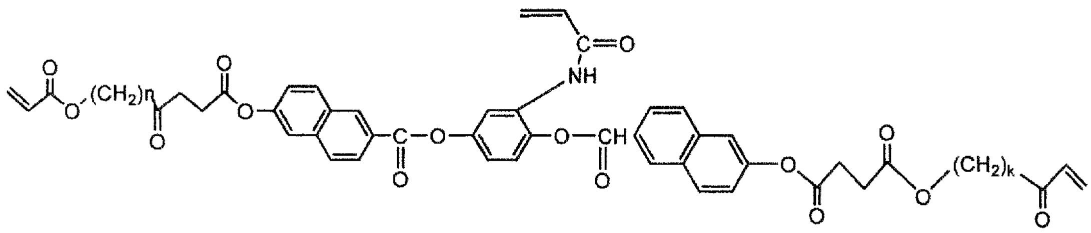

(3-26)

One type or 2 or more types of the liquid crystal compound having three polymerizable functional groups may be used, but 1 type to 4 types are preferable and 1 type to 3 types are more preferable.

The content of the liquid crystal compound having three polymerizable functional groups is preferably 0% to 80% by mass, more preferably 0% to 70% by mass, and particularly preferably 0% to 60% by mass within the polymerizable liquid crystal composition.

The polymerizable liquid crystal composition of the present invention may further contain a liquid crystal compound having one polymerizable functional group.

Specific preferred examples of the liquid crystal compound having one polymerizable functional group include a compound represented by the following General Formula (4).

[Chem. 38]

$$P^4\text{-}(Sp^4)_{m4}\text{-}MG\text{-}R^4 \qquad (4)$$

In the formula, $P^4$ represents a polymerizable functional group, $Sp^4$ represents an alkylene group having 0 to 18 carbon atoms (the alkylene group may be substituted with one or more halogen atoms or CN, and one $CH_2$ group present in this group or two or more $CH_2$ groups non-adjacent to each other each independently may be substituted with -O-, -S-, -NH-, -N ($CH_3$)-, -CO-, -COO-, -OCO-, -OCOO-, -SCO-, -COS-, or -C=C- as long as an oxygen atom is not directly bonded to another oxygen atom, m4 represents 0 or 1, MG represents a mesogenic group or a mesogenic supporting group,

$R^4$ represents a hydrogen atom, a halogen atom, a cyano group, or an alkyl group having 1 to 18 carbon atoms, but the alkyl group may be substituted with one or more halogen atoms or CN, and one $CH_2$ group present in this group or two or more $CH_2$ groups to each other each independently may be substituted with -O-, -S-, -NH-, -N($CH_3$)-, -CO-, -COO-, -OCO-, -OCOO-, -SCO-, -COS-, or -C≡C- as long as an oxygen atom is not directly bonded to another oxygen atom.

$P^4$ preferably represents a substituent selected from polymerizable groups represented by the following Formula (P-1) to Formula (P-20).

[Chem. 39]

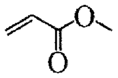 (P-1) 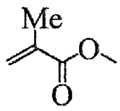 (P-2) 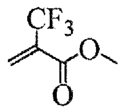 (P-3) 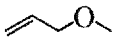 (P-4) 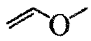 (P-5) 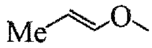 (P-6) 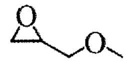 (P-7)

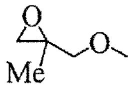 (P-8) 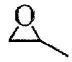 (P-9) 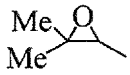 (P-10) 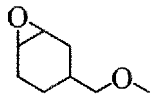 (P-11) 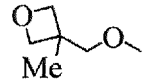 (P-12) 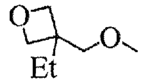 (P-13)

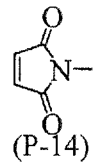 (P-14) HS— (P-15) 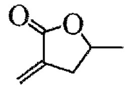 (P-16) 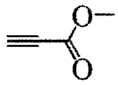 (P-17) 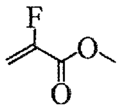 (P-18) 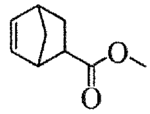 (P-19)

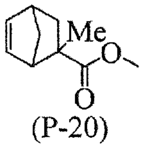 (P-20)

Among these polymerizable functional groups, Formula (P-1) or Formulas (P-2), (P-7), (P-12), and (P-13) are preferable, and Formulas (P-1), (P-7), and (P-12) are more preferable, from a viewpoint of increasing polymerizing properties storage stability.

Examples of the mesogenic group or the mesogenic supporting group represented by MG include a group represented by General Formula (4-b).

[Chem. 40]

$$\text{-Z0-(A1-Z1)}_{n4}\text{-(A2-Z2)}_{k4}\text{-(A3-Z3)}_{l4}\text{-A4-Z4-A5-Z5-} \qquad (4\text{-}b)$$

In General Formula (4-b), A1, A2, A3, A4 and A5 each independently represent a 1,4-phenylene group, a 1,4-cyclohexylene group, a 1,4-cyclohexenyl group, a tetrahydropyran-2, 5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1, 2, 3, 4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and may have, as a substituent, one or more of F, Cl, $CF_3$, $OCF_3$, CN groups, alkyl groups having 1 to 8 carbon atoms, alkoxy groups, alkanoyl groups, alkanoyloxy groups, or alkenyl groups having 2 to 8 carbon atoms, Z0, Z1, Z2, Z3, Z4 and Z5 each independently represent -COO-, -OCO-, $-CH_2CH_2-$, $-OCH_2-$, $-CH_2O-$, -CH=CH-, -C≡C-, -CH=CHCOO-, -OCOCH=CH-, $-CH_2CH_2COO-$, $-CH_2CH_2OCO-$, $-COOCH_2CH_2-$, $-OCOCH_2CH_2-$, -CONH-, -NHCO-, an alkyl group having 2 to 10 carbon atoms which may have a halogen atom, or a single bond, and n, l, and k each independently represent 0 or 1 and satisfy $0 \leq n + l + k \leq 3$.

As one example of General Formula (4), General Formulas (4-1) to (4-4) are exemplified, but the example is not limited to the following general formulas.

[Chem. 41]

$$P^{4a}\text{-(Sp}^{4a})_{m4}\text{-Z0-A4-Z4-A5-Z5-(Sp}^{4b})_{n4}\text{-}R^4 \qquad (4\text{-}1)$$

$$P^{4a}\text{-(Sp}^{4a})_{m4}\text{-Z0-A3-Z3-A4-Z4-A5-Z5-(Sp}^{4b})_{n4}\text{-}R^4 \qquad (4\text{-}2)$$

$P^{4a}-(Sp^{4a})_{m4}-Z0-A2-Z2-A3-Z3-A4-Z4-A5-Z5-(Sp^{4b})_{n4}-R^4$ (4-3)

$P^{4a}-(Sp^{4a})_{m4}-Z0-A1-Z1-A2-Z2-A3-Z3-A4-Z4-A5-Z5-(Sp^{4b})_{n4}-R^4$ (4-4)

In the formulas, A1, A2, A3, A4, and A5 represent the same definition as in General Formula (4-b). Also, Z0, Z1, Z2, Z3, Z4, and Z5 represent the same definition as in General Formula (4-b).

$P^{4a}$ and $P^{4b}$ each independently represent a polymerizable functional group, $Sp^{4a}$ and $Sp^{4b}$ each independently represent an alkylene group having 0 to 18 carbon atoms (the alkylene group may be substituted with one or more halogen atoms or CN, and one $CH_2$ group present in this group or two or more $CH_2$ groups non-adjacent to each other each independently may be substituted with -O-, -S-, -NH-, $-N(CH_3)-$, -CO-, -COO-, -OCO-, -OCOO-, -SCO-, -COS-, or -C≡C- as long as an oxygen atom is not directly bonded to another oxygen atom), and m4 and n4 each independently represent 0 or 1.

Examples of the compound represented by General Formula (4) include compounds represented by the following Formulas (4-5) to (4-31), but the examples are not limited to these.

[Chem. 42]

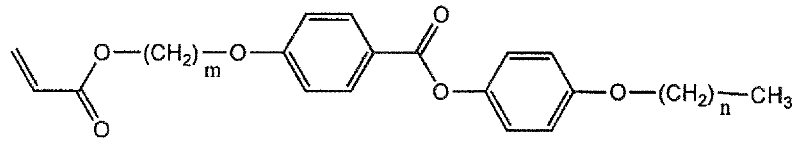

(4-5)

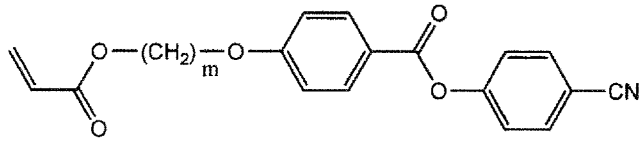

(4-6)

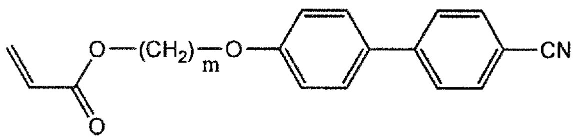

(4-7)

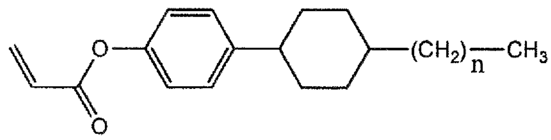

(4-8)

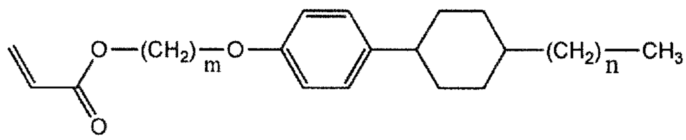

(4-9)

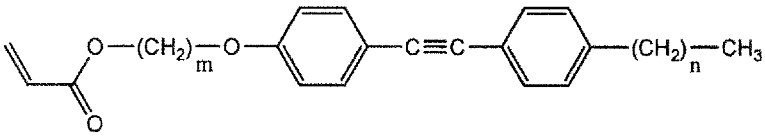

(4-10)

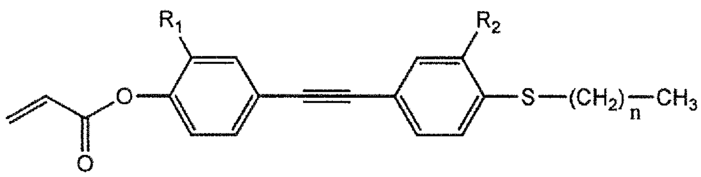

(4-11)

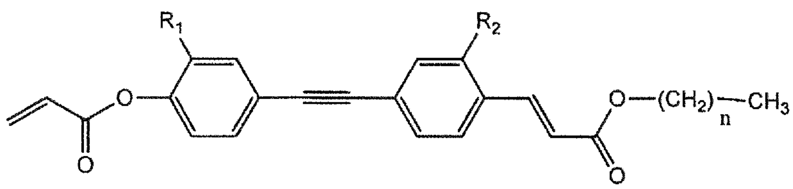

(4-12)

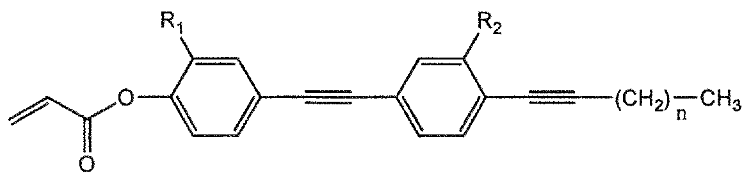

(4-13)

[Chem. 43]

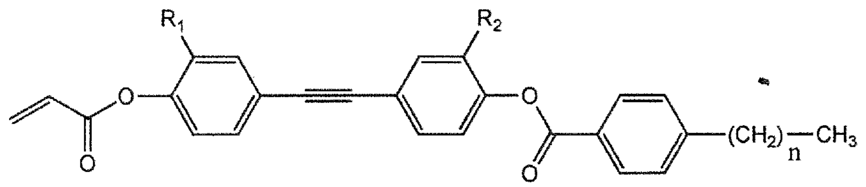
(4-14)

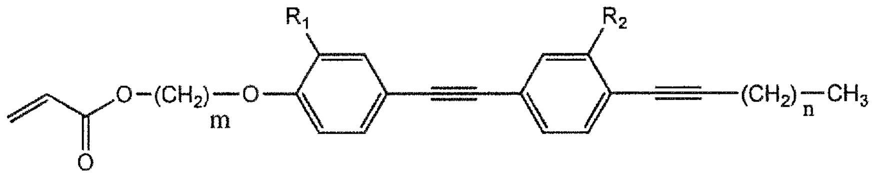
(4-15)

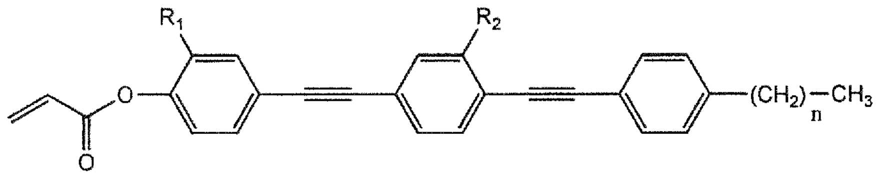
(4-16)

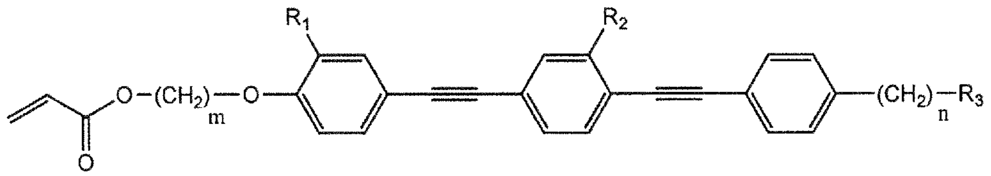
(4-17)

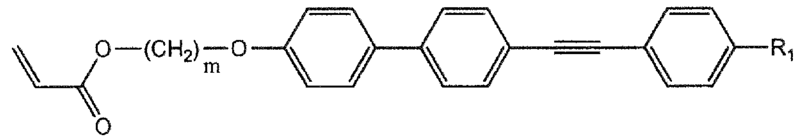
(4-18)

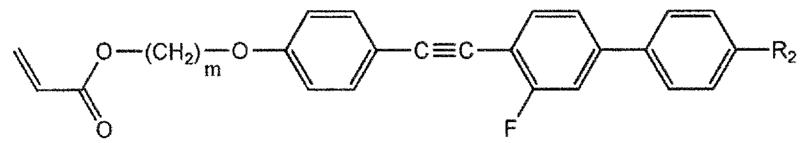
(4-19)

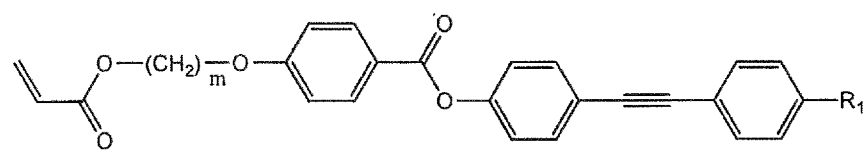
(4-20)

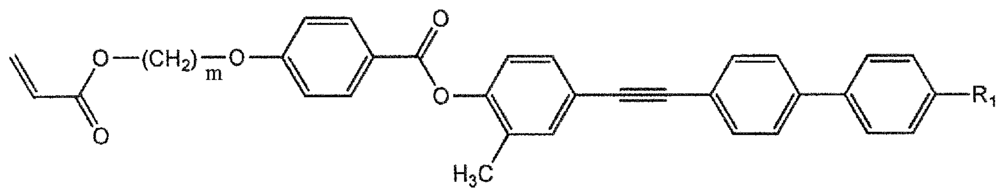
(4-21)

[0147]

[Chem. 44]

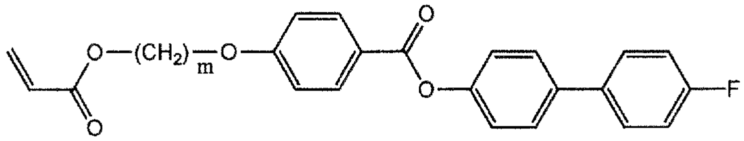

(4-22)

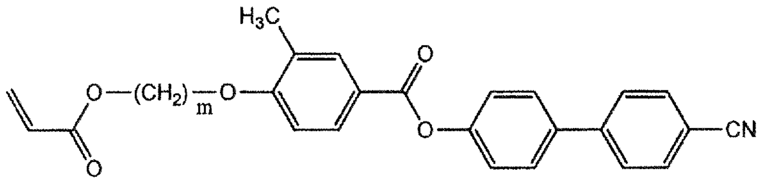

(4-23)

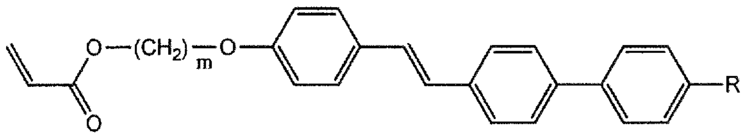

(4-24)

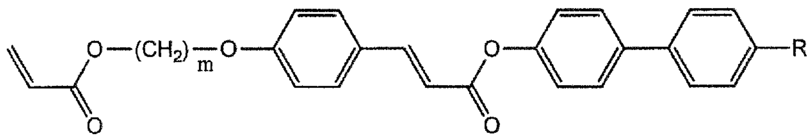

(4-25)

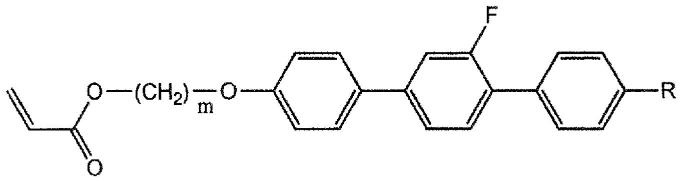

(4-26)

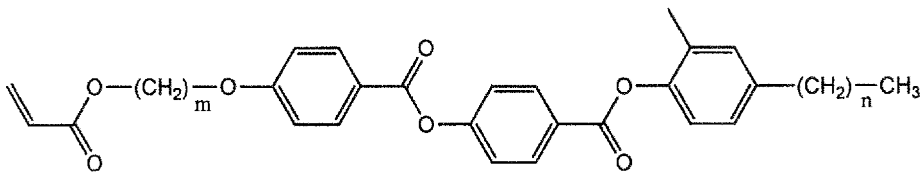

(4-27)

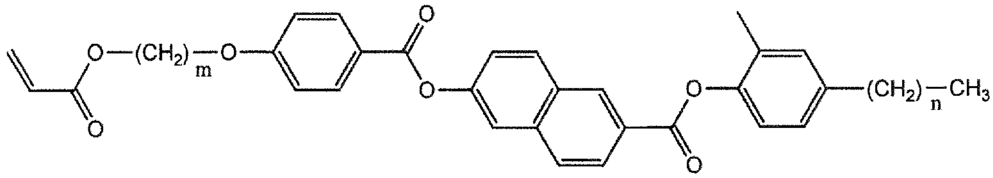

(4-28)

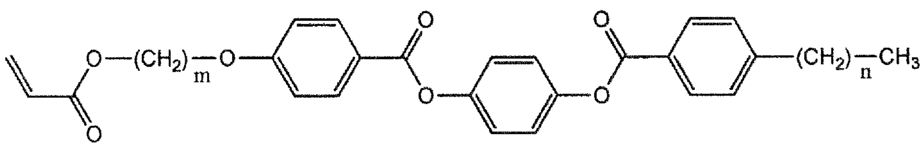

(4-29)

[Chem. 45]

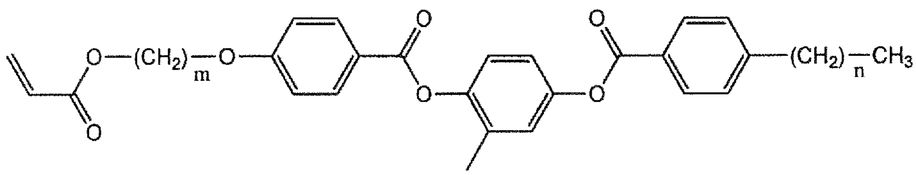
(4-30)

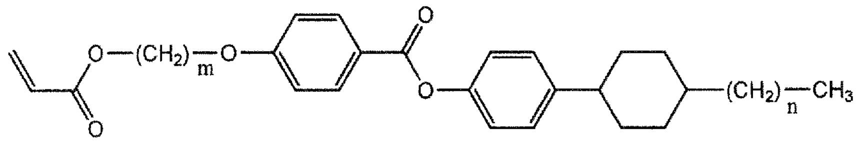
(4-31)

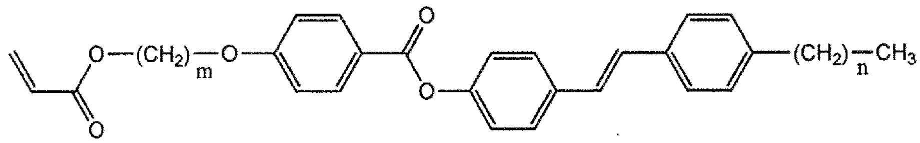
(4-32)

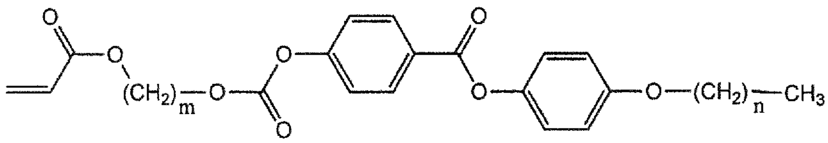
(4-33)

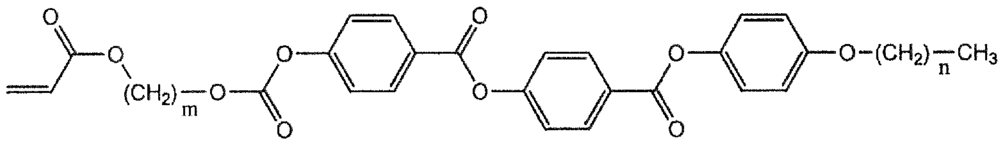
(4-34)

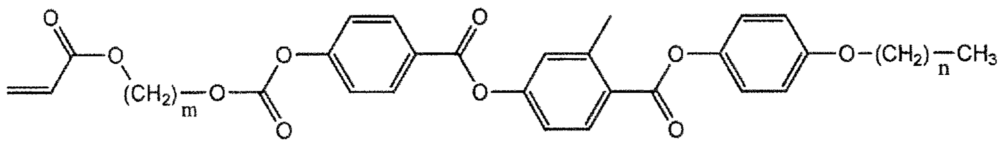
(4-35)

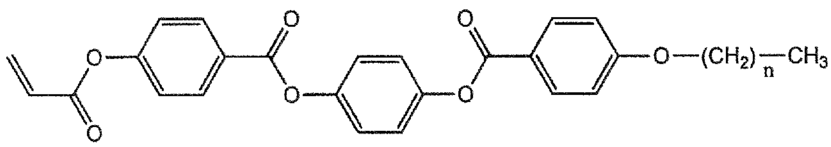
(4-36)

[Chem. 46]

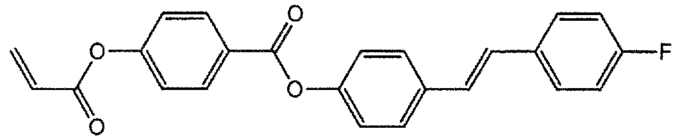

(4-37)

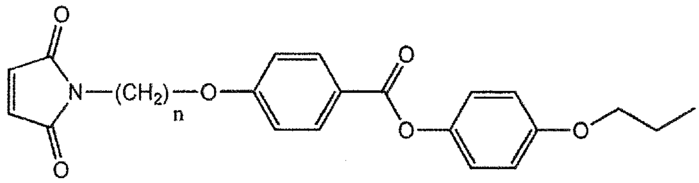

(4-38)

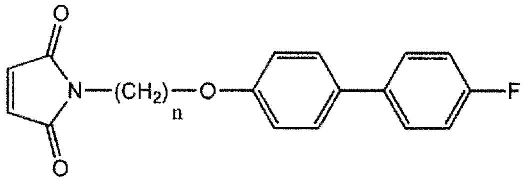

(4-39)

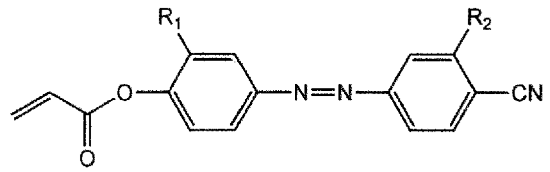

(4-40)

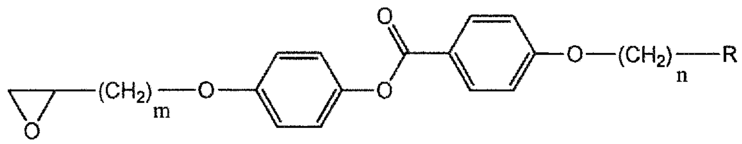

(4-41)

In the formulas, m and n each independently represent an integer of 1 to 18, R, $R_1$, and $R_2$ each independently represent a hydrogen atom, an alkyl group having 1 to 6 carbon atoms, an alkoxy group having 1 to 6 carbon atoms, a carboxyl group, or a cyano group, in a case where these groups represent an alkyl group having 1 to 6 carbon atoms or an alkoxy group having 1 to 6 carbon atoms, all of the groups may be unsubstituted or may be substituted with 1 or 2 or more halogen atoms.

One type or 2 or more types of the liquid crystal compound having one polymerizable functional group may be used, but 1 type to 5 types are preferable and 1 type to 4 types are more preferable.

The content of the liquid crystal compound having one polymerizable functional group is preferably 0% by mass or more, more preferably 10% by mass or more, particularly preferably 20% by mass or more, preferably 75% by mass or less, more preferably 70% by mass or less, and particularly preferably 65% by mass or less within the polymerizable liquid crystal composition.

(Other components)

(Chiral compound)

In the polymerizable liquid crystal composition of the present invention, a chiral compound may be blended for the purpose of obtaining a chiral nematic phase. Among the chiral compound, a compound having a polymerizable functional group within a molecule is preferable. In addition, the chiral compound of the present invention may show crystallinity or non-crystallinity.

The chiral compound used in the present invention preferably has one or more polymerizable functional groups. As this compound, for example, a polymerizable chiral compound including chiral saccharides such as isosorbide, isomannitol, and glucoside and having a rigid moiety such as a 1, 4-phenylene group and a 1,4-cyclohexylene and a polymerizable functional group such as a vinyl group, an acryloyl group, a (meta) acryloyl group, and a maleimide group, as disclosed in JP-A-11-193287, JP-A-2001-158788, JP-T-2006-52669, JP-A-2007-269639, JP-A-2007-269640, 2009-84178 and the like; a polymerizable chiral compound including terpenoid derivatives as disclosed in JP-A-8-239666;

a polymerizable chiral compound including a mesogenic group and spacers having a chiral moiety as disclosed in NATURE VOL 35 pages 467 to 469 (published on November 30, 1995), NATURE VOL 392 pages 476 to 479 (published on April 2, 1998) ; or a polymerizable chiral compound including a binaphthyl group as disclosed in JP-T-2004-504285 and JP-A-2007-248945 is exemplified. Among these, a chiral compound having a great helical twisting power (HTP) is preferable for the polymerizable liquid crystal composition of the present invention.

It is necessary to adjust the blending amount of the chiral compound appropriately depending on the helical twisting power of the compound, but the chiral compound is preferably contained in the amount of 0% to 25% by mass, more preferably 0% to 20% by mass, and particularly preferably 0% to 15% by mass within the polymerizable liquid crystal composition.

As one example of general formula of the chiral compound, General Formulas (5-1) to (5-4) may be exemplified but the example is not limited to the following general formulas.

[Chem. 47]

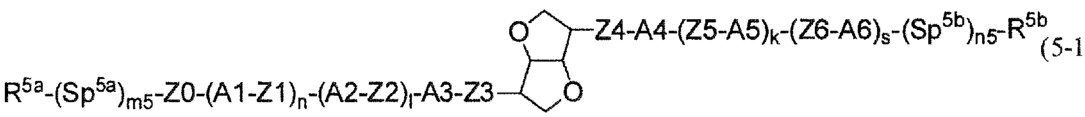
(5-1)

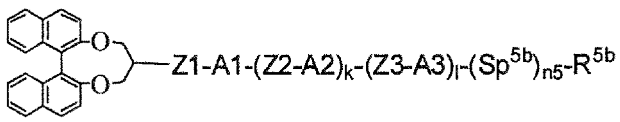
(5-2)

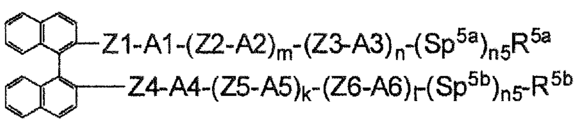
(5-3)

$$R^{5a}\text{-}(Sp^{5a})_{m5}\text{-}Z0\text{-}(A1\text{-}Z1)_n\text{-}(A2\text{-}Z2)_l\text{-}A3\text{-}Z3\text{-}A4\text{-}Z4\text{-}A5\text{-}Z5\text{-}CH_2\underset{*}{C}H(R^{5a})R^{5b} \quad (5\text{-}4)$$

In the formulas, $Sp^5$ represents an alkylene group having 0 to 18 carbon atoms, the alkylene group may be substituted with one or more halogen atoms, a CN group, or an alkyl group having 1 to 8 carbon atoms having a polymerizable functional group, and one $CH_2$ group present in this group or two or more $CH_2$ groups non-adjacent to each other each independently may be substituted with -O-, -S-, -NH-, -N($CH_3$)-, -CO-, -COO-, -OCO-, -OCOO-, -SCO-, -COS-, or -C≡C- as long as an oxygen atom is not directly bonded to another oxygen atom,
A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, n, 1, and k each independently represent 0 or 1 and satisfy $0 \leq n + 1 + k \leq 3$,
m5 represents 0 or 1,
$R^{5a}$ and $R^{5b}$ represent a hydrogen atom, a halogen atom, a cyano group, or an alkyl group having 1 to 18 carbon atoms, the alkyl group may be substituted with one or more halogen atoms or CN, and one $CH_2$ group present in this group or two or more $CH_2$ groups non-adjacent to each other each independently may be substituted with -O-, -S-, -NH-, -N($CH_3$)-, -CO-, -COO-, -OCO-, -OCOO-, -SCO-, -COS-, or -C≡C- as long as an oxygen atom is not directly bonded to another oxygen atom, or
$R^{5d}$ and $R^{5b}$ represent General Formula (5-a).

[Chem. 48]

**-P^5a** **(5-a)**

In the formula, $P^{5a}$ represents a polymerizable functional group and $Sp^{5a}$ represents the same meaning as $Sp^1$.

$P^{5a}$ preferably represents a substituent selected from the polymerizable groups represented by the following Formula (P-1) to Formula (P-20).

[Chem. 49]

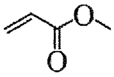
(P-1)
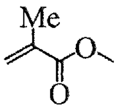
(P-2)
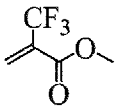
(P-3)
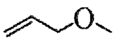
(P-4)
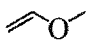
(P-5)
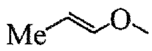
(P-6)
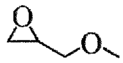
(P-7)

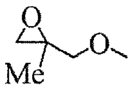
(P-8)
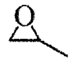
(P-9)
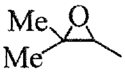
(P-10)
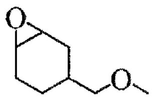
(P-11)
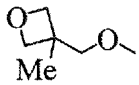
(P-12)
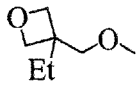
(P-13)

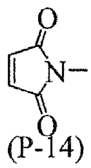
(P-14)
HS—
(P-15)
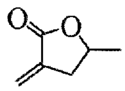
(P-16)
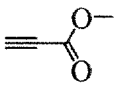
(P-17)
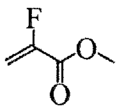
(P-18)
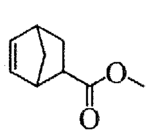
(P-19)

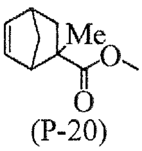
(P-20)

Among the polymerizable functional groups, Formula (P-1), or Formulas (P-2), (P-7), (P-12), and (P-13) are preferable and Formulas (P-1), (P-7), and (P-12) are more preferable from a viewpoint of increasing polymerizing properties and storage stability.

Specific examples of the chiral compound may include compounds of compounds (5-5) to (5-25) but the examples are not limited to the following compounds.

[Chem. 50]

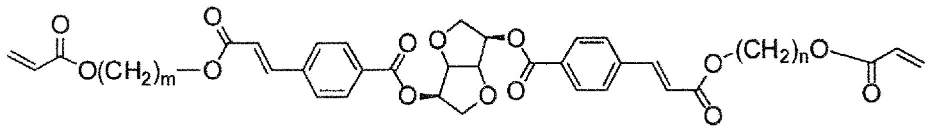

(5-5)

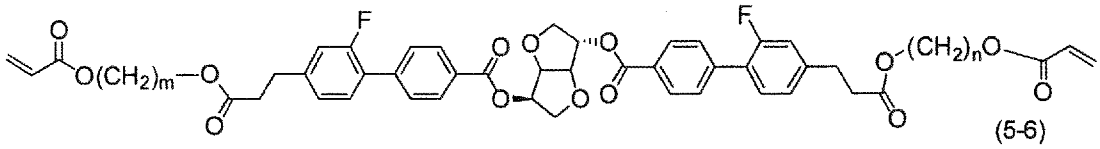

(5-6)

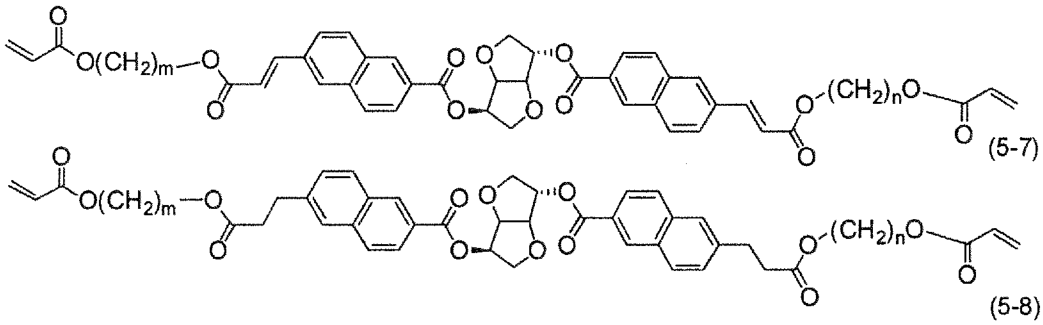

(5-7)

(5-8)

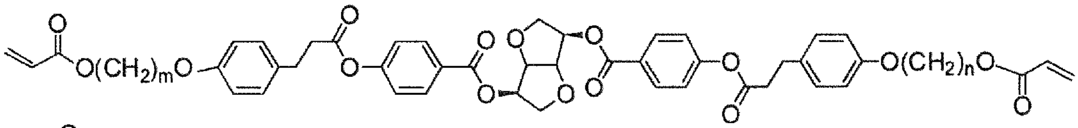

(5-9)

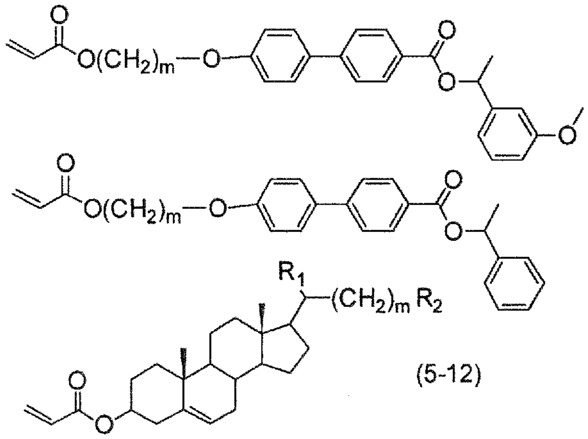

(5-10)

(5-11)

(5-12)

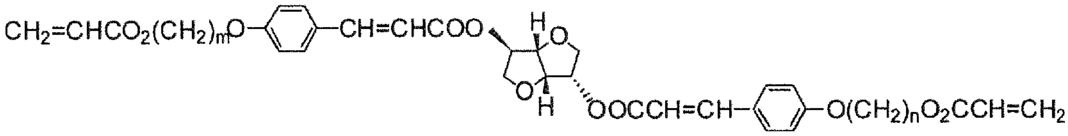

(5-13)

[Chem. 51]

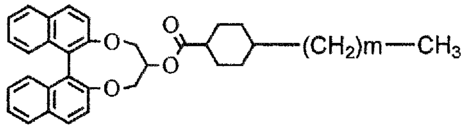

(5-14)

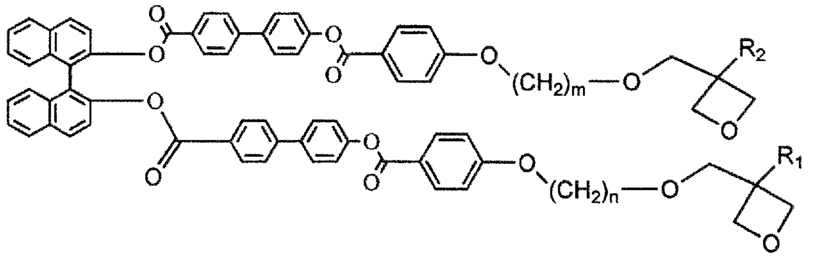

(5-15)

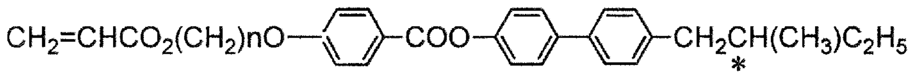

(5-16)

[Chem. 52]

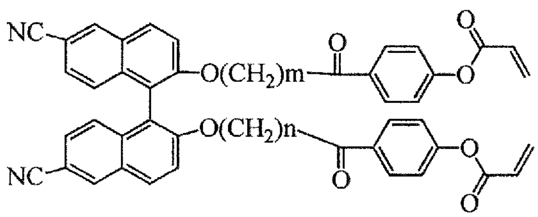

(5-17)

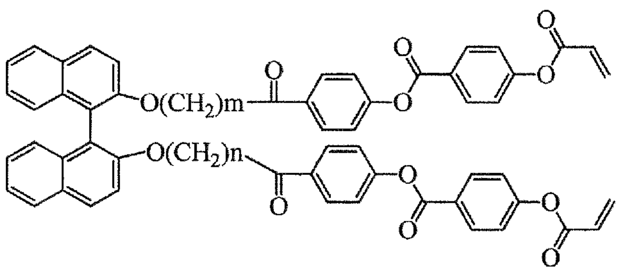

(5-18)

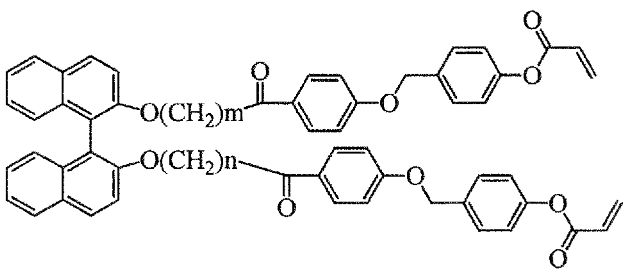

(5-19)

[Chem. 53]

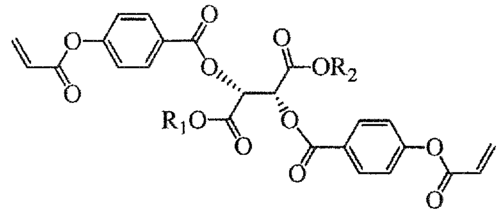

(5-20)

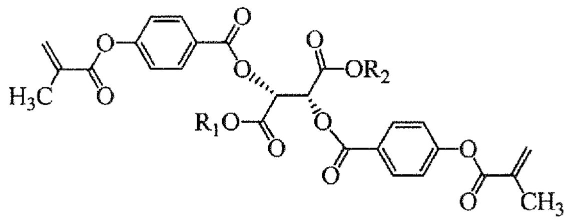

(5-21)

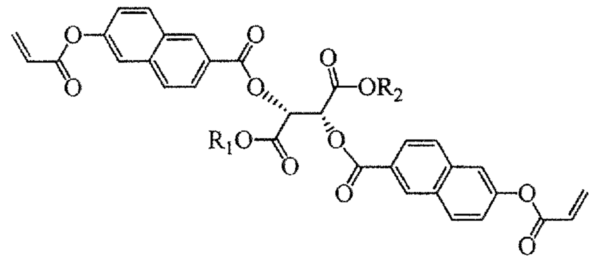

(5-22)

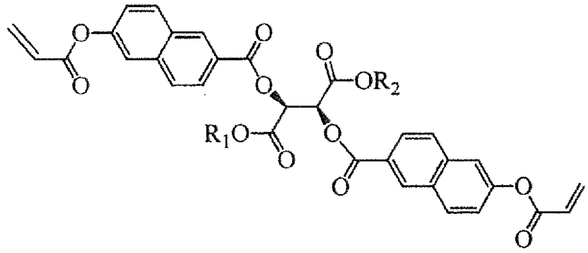

(5-23)

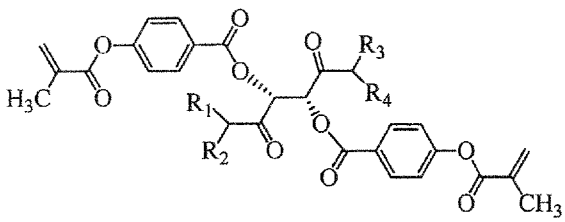

(5-24)

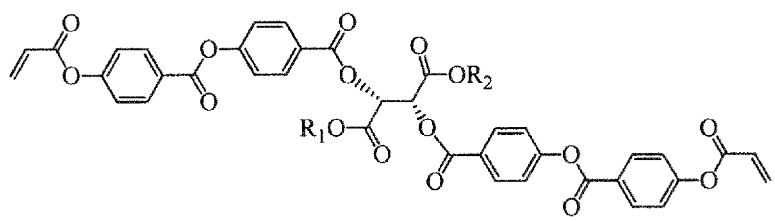

(5-25)

[Chem. 54]

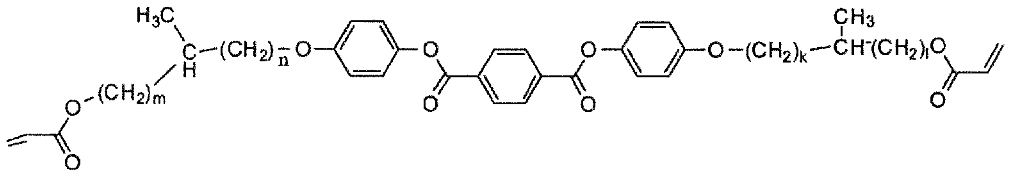

(5-26)

In the formulas, m, n, k, and l each independently represent an integer of 1 to 18, $R_1$ to $R_4$ each independently represent a hydrogen atom, an alkyl group having 1 to 6 carbon atoms, an alkoxy group having 1 to 6 carbon atoms, a carboxyl group, or a cyano group. In a case where these groups represent an alkyl group having 1 to 6 carbon atoms or an alkoxy group having 1 to 6 carbon atoms, all of the groups may be unsubstituted or may be substituted with 1 or 2 or more halogen atoms.

(Organic solvent)

An organic solvent is added to the polymerizable liquid crystal composition of the present invention and the composition may be used as a polymerizable liquid crystal composition solution. The organic solvent to be used is not particularly limited, but an organic solvent allowing the polymerizable liquid crystal compound to show satisfactory solubility is preferable, and an organic solvent which can be dried at a temperature of 100°C or less is preferable. Examples of this solvent include aromatic hydrocarbon such as toluene, xylene, cumene, and mesitylene, an ester-based solvent such as methyl acetate, ethyl acetate, propyl acetate, and butyl acetate, a ketone-based solvent such as methyl ethyl ketone, methyl isobutyl ketone, cyclohexanone, and cyclopentanone, an ether-based solvent such as tetrahydrofuran, 1, 2-dimethoxyethane, and anisole, an amide-based solvent such as N,N-dimethyl formamide and N-methyl-2-pyrrolidone, propylene glycol monomethyl ether acetate, diethylene glycol monomethyl ether acetate, γ-butyrolactone and chlorobenzene. These may be used alone or two or more types may be used in combination, and one or more types of the ketone-based solvent, an ether-based solvent, an ester-based solvent and an aromatic hydrocarbon-based solvent is preferably used from a viewpoint of solution stability.

The ratio of the organic solvent to be used is not particularly limited as long as the solvent does not remarkably impair a coated state, since the polymerizable liquid crystal composition used in the present invention is normally coated. The content of the organic solvent contained in the polymerizable liquid crystal composition solution is preferably 1% to 60% by mass, more preferably 3% to 55% by mass, and particularly preferably 5% to 50% by mass.

When the polymerizable liquid crystal compound is dissolved in the organic solvent, the compound is preferably heated and stirred in order to dissolve uniformly. The heating temperature at the time of heating and stirring may be appropriately adjusted in consideration of solubility of the polymerizable liquid crystal compound to be used in the organic solvent, and the heating temperature is preferably 15°C to 110°C, more preferably 15°C to 105°C, still more preferably 15°C to 100°C, and particularly preferably 20°C to 90°C from a viewpoint of productivity.

In addition, when the polymerizable liquid crystal composition is prepared, the composition is preferably stirred and mixed by a dispersion stirrer. As a specific example of the dispersion stirrer, a disperser having an impeller such as a disper, a propeller, and a turbine blade, a paint shaker, a planetary type stirrer, a shaking apparatus, a shaker, or rotary evaporator can be used. In addition to the above, an ultrasonic irradiation apparatus can be used.

It is preferable to appropriately adjust the number of stirring revolution depending on a stirrer to be used, when the polymerizable liquid crystal composition solution is prepared. The number of stirring revolution is preferably 10 rpm to 1000 rpm, more preferably 50 rpm to 800 rpm, and particularly preferably 150 rpm to 600 rpm, in order to obtain a uniform polymerizable liquid crystal composition solution.

(Polymerization inhibitor)

A polymerization inhibitor is preferably added in order to increase solution solubility of the polymerizable liquid crystal composition of the present invention. Examples of the polymerization inhibitor include a phenol-based compound, a quinone-based compound, an amine-based compound, a thioether-based compound and a nitroso compound.

Examples of the phenol-based compound include p-methoxyphenol, cresol, t-butyl catechol, 3.5-di-t-butyl-4-hydroxytoluene, 2.2'-methylene bis(4-methyl-6-t-butyl phenol), 2.2'-methylene bis(4-ethyl-6-t-butyl phenol), 4.4'-thiobis(3-methyl-6-t-butyl phenol), 4-methoxy-1-naphthol, and 4,4'-dialkoxy-2,2'-bi-1-naphthol.

Examples of the quinone-based compound include hydroquinone, methylhydroquinone, tert-butylhydroquinone, p-benzoquinone, methyl-p-benzoquinone, tert-butyl-p-benzoquinone, 2,5-diphenylbenzoquinone, 2-hydroxy-1,4-naphthoquinone, 1,4-naphthoquinone, 2,3-dichloro-1,4-naphthoquinone, anthraquinone, and diphenoquinone.

Examples of the amine-based compound include p-phenylene diamine, 4-aminodiphenylamine, N.N'-diphenyl-p-phenylene diamine, N-i-propyl-N'-phenyl-p-phenylene diamine, N-(1.3-dimethyl butyl)-N'-phenyl-p-phenylene diamine, N.N'-di-2-naphthyl-p-phenylene diamine, diphenylamine, N-phenyl-β-naphthylamine, 4.4'-dicumyl-diphenylamine, and 4.4'-dioctyl-diphenylamine.

Examples of the thioether-based compound include phenothiazine and distearyl thiodipropionate.

Examples of the nitroso-based compound include N-nitroso diphenylamine, N-nitroso phenyl naphthylamine, N-nitroso dinaphthylamine, p-nitroso phenol, nitroso benzene, p-nitroso diphenylamine, α-nitroso-β-naphthol, N,N-dimethyl p-nitroso aniline, p-nitroso diphenylamine, p-nitrone dimethylamine, p-nitrone-N,N-diethylamine, N-nitroso ethanolamine, N-nitroso di-n-butylamine, N-nitroso-N-n-butyl-4-butanolamine, N-nitroso-diisopropanolamine, N-nitroso-N-ethyl-4-butanolamine, 5-nitroso-8-hydroxyquinoline, N-nitroso morpholine, N-nitroso-N-phenyl hydroxylamine ammonium salt, nitroso benzene, 2,4.6-tri-tert-butyl nitrone benzene, N-nitroso-N-methyl-p-toluene sulfonamide, N-nitroso-N-ethyl urethane, N-nitroso-N-n-propyl urethane, 1-nitroso-2-naphthol, 2-nitroso-1-naphthol, 1-nitroso-2-naphthol-3,6-sodium sulfate, 2-nitroso-1-naphthol-4-sodium sulfate, 2-nitroso-5-methyl aminophenol hydrochloride, and 2-nitroso-5-methyl aminophenol hydrochloride.

The addition amount of the polymerization inhibitor is preferably 0.01% to 1.0% by mass and more preferably 0.05% to 0.5% by mass with respect to the polymerizable liquid crystal composition.

(Antioxidant)

An antioxidant is preferably added in order to increase solution solubility of the polymerizable liquid crystal composition of the present invention. Examples of this compound include hydroquinone derivatives, a nitrosamine-based polymerization inhibitor, and a hindered phenol-based antioxidant, and specific examples thereof include tert-butyl hydroquinone, methyl hydroquinone, "Q-1300" and "Q-1301" of Wako Pure Chemical Industries, Ltd., and "IRGANOX 1010", "IRGANOX 1035", "IRGANOX 1076", "IRGANOX 1098", "IRGANOX 1135", "IRGANOX 1330", "IRGANOX 1425", "IRGANOX 1520", "IRGANOX 1726", "IRGANOX 245", "IRGANOX 259", "IRGANOX 3114", "IRGANOX 3790", "IRGANOX 5057", "IRGANOX 565" of BASF SE.

The addition amount of the antioxidant is preferably 0.01% to 2.0% by mass and more preferably 0.05% to 1.0% by mass with respect to the polymerizable liquid crystal composition.

(Photopolymerization initiator)

The polymerizable liquid crystal composition of the present invention preferably contains a photopolymerization initiator. At least 1 type or more of the photopolymerization initiator is preferably contained. Specific examples thereof include "Irgacure 651", "Irgacure 184", "Darocur 1173", "Irgacure 907", "Irgacure 127", "Irgacure 369", "Irgacure 379", "Irgacure 819", "Irgacure 2959", "Irgacure 1800", "Irgacure 250", "Irgacure 754", "Irgacure 784", "Irgacure OXE01", "Irgacure OXE02", "Lucirin TPO", "Darocur 1173", and "Darocur MBF" manufactured by BASF SE, "Esacure 1001M", "Esacure KIP150", "Speedcure BEM", "Speedcure BMS", "Speedcure MBP", "Speedcure PBZ", "Speedcure ITX", "Speedcure DETX", "Speedcure EBD", "Speedcure MBB", and "Speedcure BP" manufactured by LAMBSON, LTD., "Kayacure DMBI" manufactured by Nippon Kayaku Co., Ltd., "TAZ-A" manufactured by Nihon Siberhegner K.K. (currently, DKSH Japan K.K.), "ADEKA OPTOMER SP-152", "ADEKA OPTOMER SP-170", "ADEKA OPTOMER N-1414", "ADEKA OPTOMER N-1606", "ADEKA OPTOMER N-1717", and "ADEKA OPTOMER N-1919" manufactured by ADEKA Corporation.

The use amount of the photopolymerization initiator is preferably 0.1% to 10% by mass and particularly preferably 0.5% to 5% by mass with respect to the polymerizable liquid crystal composition. These may be used alone or two or more types may be used in combination, and a sensitizer may be added.

(Thermal polymerization initiator)

As a thermal polymerization initiator used at the time of thermal polymerization, a well-known thermal polymerization initiator may be used and for example, organic peroxides such as methyl acetoacetate peroxide, cumene hydroperoxide, benzoyl peroxide, bis(4-t-butyl cyclohexyl)peroxy dicarbonate, t-butylperoxy benzoate, methyl ethyl ketone peroxide, 1,1-bis(t-hexylperoxy)3,3,5-trimethyl cyclohexane, p-pentahydroperoxide, t-butyl hydroperoxide, dicumyl peroxide, isobutyl peroxide, di(3-methyl-3-methoxybutyl)peroxydicarbonate, and 1,1-bis(t-butyl peroxy)cyclohexane; an azonitrile compound such as 2,2'-azobisisobutyronitrile and 2,2'-azobis(2,4-dimethyl valeronitrile); an azoamidine compound such as 2,2'-azobis(2-methyl-N-phenyl propione-amidine)dihydrochloride; an azoamide compound such as 2,2'azobis{2-methyl-N-[1,1-bis(hydroxymethyl)-2-hydroxyeth yl]propionamide}; and an alkylazo compound such as 2,2'azobis (2,4,4-trimethyl pentane) may be used. The content of the thermal polymerization initiator is preferably 0.1 to 10 mass and particularly preferably 1% to 6% by mass. These may be used alone or 2 or more types thereof may be

used in combination.

(Surfactant)

The polymerizable liquid crystal composition of the present invention may contain at least 1 type or more of a surfactant in order to reduce unevenness of the film thickness when the composition is made into an optically anisotropic body. Examples of the surfactant which may be contained include alkyl carboxylate, alkyl phosphate, alkyl sulfonate, fluoroalkyl carboxylate, fluoroalkyl phosphate, fluoroalkyl sulfonate, polyoxyethylene derivatives, fluoroalkyl ethylene oxide derivatives, polyethylene glycol derivatives, an alkyl ammonium salt, and a fluoroalkyl ammonium salt, and a fluorine-containing surfactant is particularly preferable.

Specific examples thereof include "Megafac F-114", "Megafac F-251", "Megafac F-281", "Megafac F-410", "Megafac F-430", "Megafac F-444", "Megafac F-472SF", "Megafac F-477", "Megafac F-510", "Megafac F-511", "Megafac F-552", "Megafac F-553", "Megafac F-554", "Megafac F-555", "Megafac F-556", "Megafac F-557", "Megafac F-558", "Megafac F-559", "Megafac F-560", "Megafac F-561", "Megafac F-562", "Megafac F-563", "Megafac F-565", "Megafac F-567", "Megafac F-568", "Megafac F-569", "Megafac F-570", "Megafac F-571", "Megafac R-40", "Megafac R-41", "Megafac R-43", "Megafac R-94", "Megafac RS-72-K", "Megafac RS-75", "Megafac RS-76-E", "Megafac RS-76-NS", "Megafac RS-90", "Megafac EXP.TF-1367", "Megafac EXP.TF1437", "Megafac EXP.TF1537", and "Megafac EXP.TF-2066" (all of the above are manufactured by DIC Corporation),

"Ftergent 100", "Ftergent 100C", "Ftergent 110", "Ftergent 150", "Ftergent 150CH", "Ftergent 100A-K", "Ftergent 300", "Ftergent 310", "Ftergent 320", "Ftergent 400SW", "Ftergent 251", "Ftergent 215M", "Ftergent 212M", "Ftergent 215M", "Ftergent 250", "Ftergent 222F", "Ftergent 212D", "FTX-218", "Ftergent 209F", "Ftergent 245F", "Ftergent 208G", "Ftergent 240G", "Ftergent 212P", "Ftergent 220P", "Ftergent 228P", "DFX-18", "Ftergent 601AD", "Ftergent 602A", "Ftergent 650A", "Ftergent 750FM", "FTX-730FM", "Ftergent 730FL", "Ftergent 710FS", "Ftergent 710FM", "Ftergent 710FL", "Ftergent 750LL", "FTX-730LS", and "Ftergent 730LM", (all of the above are manufactured by NEOS COMPANY LIMITED),

"BYK-300", "BYK-302", "BYK-306", "BYK-307", "BYK-310", "BYK-315", "BYK-320", "BYK-322", "BYK-323", "BYK-325", "BYK-330", "BYK-331", "BYK-333", "BYK-337", "BYK-340", "BYK-344", "BYK-370", "BYK-375", "BYK-377", "BYK-350", "BYK-352", "BYK-354", "BYK-355", "BYK-356", "BYK-358N", "BYK-361N", "BYK-357", "BYK-390", "BYK-392", "BYK-UV3500", "BYK-UV3510", "BYK-UV3570", and "BYK-Silclean3700" (all of the above are manufactured by BYK Japan K.K.),

"TEGO Rad2100", "TEGO Rad2011", "TEGO Rad2200N", "TEGO Rad2250", "TEGO Rad2300", "TEGO Rad2500", "TEGO Rad2600", "TEGO Rad2650", "TEGO Rad2700", "TEGO Flow300", "TEGO Flow370", "TEGO Flow425", "TEGO Flow ATF2", "TEGO Flow ZFS460", "TEGO Glide100", "TEGO Glide110", "TEGO Glide130", "TEGO Glide410", "TEGO Glide411", "TEGO Glide415", "TEGO Glide432", "TEGO Glide440", "TEGO Glide450", "TEGO Glide482", "TEGO Glide A115", "TEGO Glide B1484", "TEGO Glide ZG400", "TEGO Twin4000", "TEGO Twin4100", "TEGO Twin4200", "TEGO Wet240", "TEGO Wet250", "TEGO Wet260", "TEGO Wet265", "TEGO Wet270", "TEGO Wet280", "TEGO Wet500", "TEGO Wet505", "TEGO Wet510", "TEGO Wet520", and "TEGO Wet KL245" (all of the above are manufactured by Evonik Japan Co., Ltd.), "FC-4430" and "FC-4432" (all of the above are manufactured by 3M Japan Limited), "Unidyne NS" (all of the above are manufactured by DAIKIN INDUSTRIES, LTD.), "Surflon S-241", "Surflon S-242", "Surflon S-243", "Surflon S-420", "Surflon S-611", "Surflon S-651", and "Surflon S-386" (all of the above are manufactured by AGC SEIMI CHEMICAL CO., LTD.), "DISPARLON OX-880EF", "DISPARLON OX-881", "DISPARLON OX-883", "DISPARLON OX-77EF", "DISPARLON OX-710", "DISPARLON 1922", "DISPARLON 1927", "DISPARLON 1958", "DISPARLON P-410EF", "DISPARLON P-420", "DISPARLON P-425", "DISPARLON PD-7", "DISPARLON 1970", "DISPARLON 230", "DISPARLON LF-1980", "DISPARLON LF-1982", "DISPARLON LF-1983", "DISPARLON LF-1084", "DISPARLON LF-1985", "DISPARLON LHP-90", "DISPARLON LHP-91", "DISPARLON LHP-95", "DISPARLON LHP-96", "DISPARLON OX-715", "DISPARLON 1930N", "DISPARLON 1931", "DISPARLON 1933", "DISPARLON 1934", "DISPARLON 1711EF", "DISPARLON 1751N", "DISPARLON 1761", "DISPARLON LS-009", "DISPARLON LS-001", and "DISPARLON LS-050" (all of the above are manufactured by Kusumoto Chemicals, Ltd.), "PF-151N", "PF-636", "PF-6320", "PF-656", "PF-6520", "PF-652-NF", and "PF-3320" (all of the above are manufactured by OMNOVA Solutions Inc.), "Polyflow No.7", "Polyflow No.50E", "Polyflow No.50EHF", "Polyflow No.54N", "Polyflow No.75", "Polyflow No.77", "Polyflow No.85", "Polyflow No.85HF", "Polyflow No.90", "Polyflow No.90D-50", "Polyflow No.95", "Polyflow No.99C", "Polyflow KL-400K", "Polyflow KL-400HF", "Polyflow KL-401", "Polyflow KL-402", "Polyflow KL-403", "Polyflow KL-404", "Polyflow KL-100", "Polyflow LE-604", "Polyflow KL-700", "Flowlen AC-300", "Flowlen AC-303", "Flowlen AC-324", "Flowlen AC-326F", "Flowlen AC-530", "Flowlen AC-903", "Flowlen AC-903HF", "Flowlen AC-1160", "Flowlen AC-1190", "Flowlen AC-2000", "Flowlen AC-2300C", "Flowlen AO-82", "Flowlen AO-98", and "Flowlen AO-108" (all of the above are manufactured by KYOEISHA CHEMICAL Co., LTD), "L-7001", "L-7002", "8032ADDITIVE", "57ADDTIVE", "L-7064", "FZ-2110", "FZ-2105", "67ADDTIVE", and "8616ADDTIVE" (all of the above are manufactured by Dow Corning Toray Co.,Ltd.).

The addition amount of the surfactant is preferably 0.01% to 2% by mass and more preferably 0.05% to 0.5% by mass with respect to the polymerizable liquid crystal composition.

In addition, by using the aforementioned surfactant, a tilt angle of an air interface can be effectively reduced in a case where the polymerizable liquid crystal composition of the present invention is made into an optically anisotropic body.

The polymerizable liquid crystal composition of the present invention has an effect of effectively reducing a tilt angle of an air interface when the composition is made into an optically anisotropic body and a compound having a repeating unit represented by the following General Formula (6) and a weight average molecular weight of 100 or more is exemplified as a surfactant other than the above.

[Chem. 55]

$$-(-CR^{11}R^{12}-CR^{13}R^{14}-)- \qquad (6)$$

In the formula, $R^{11}$, $R^{12}$, $R^{13}$ and $R^{14}$ each independently represent a hydrogen atom, a halogen atom, or a hydrocarbon group having 1 to 20 carbon atoms, and a hydrogen atom in the hydrocarbon group may be substituted with one or more halogen atoms.

Preferred examples of the compound represented by General Formula (6) include polyethylene, polypropylene, polyisobutylene, paraffin, fluidized paraffin, chlorinated polypropylene, chlorinated paraffin, and chlorinated fluidized paraffin.

The compound represented by General Formula (6) is preferably added in the step of mixing the polymerizable compound in the organic solvent, and heating and stirring the compound to prepare a polymerizable solution, but the compound may be added in the step of mixing the photopolymerization initiator in the polymerizable solution after the above, or may be added in both steps.

The addition amount of the compound represented by General Formula (6) is preferably 0.01% to 1% by mass and more preferably 0.05% to 0.5% by mass with respect to the polymerizable liquid crystal composition solution.

A chain-transfer agent is preferably added in order to further improve adhesion of an optically anisotropic body to a base material in a case where the polymerizable liquid crystal composition of the present invention solution is made into the optically anisotropic body. As the chain-transfer agent, a thiol compound is preferable, monothiol, dithiol, trithiol, and tetrathiol compounds are more preferable, and a trithiol compound is still more preferable. Specifically, compounds represented by the following General Formulas (6-1) to (6-12) are preferable.

[Chem. 56]

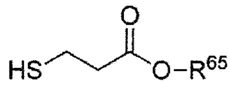

(6-1)

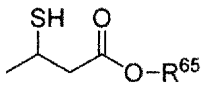

(6-2)

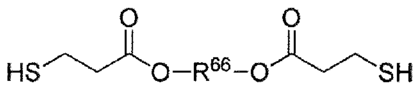

(6-3)

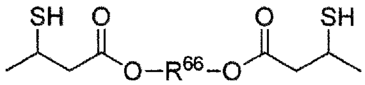

(6-4)

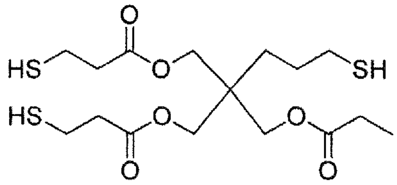

(6-5)

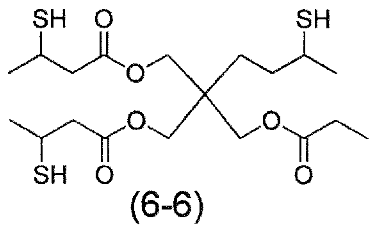

(6-6)

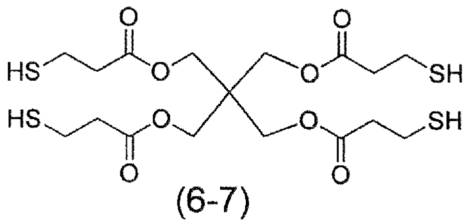

(6-7)

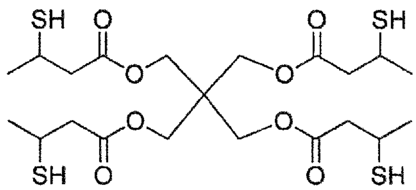

(6-8)

[Chem. 57]

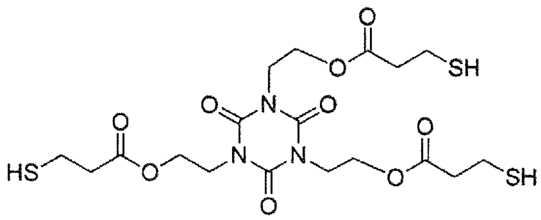

(6-9)

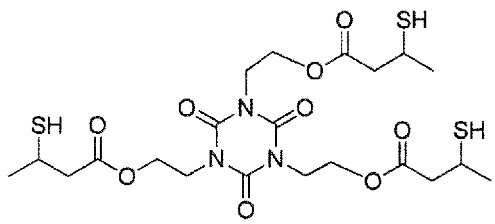

(6-10)

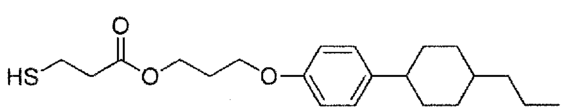

(6-11)

(6-12)

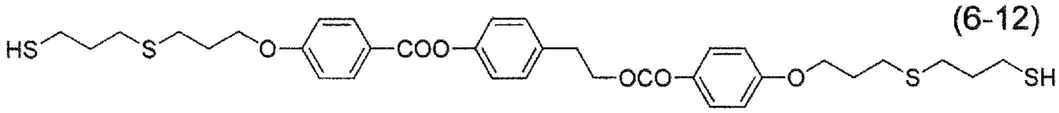

In the formulas, $R^{65}$ represents an alkyl group having 2 to 18 carbon atoms, the alkyl group may be linear or branched, one or more methylene groups in the alkyl group has an oxygen atom and a sulfur atom not directly bonded to each other and may be substituted with an oxygen atom, a sulfur atom, -CO-, -OCO-, -COO-, or -CH=CH-, $R^{66}$ represents an alkylene group having 2 to 18 carbon atoms, and one or more methylene groups in the alkylene group has an oxygen atom and a sulfur atom not directly bonded to each other and may be substituted with an oxygen atom, a sulfur atom, -CO-, -OCO-, -COO-, or -CH=CH-.

The chain-transfer agent is preferably added in the step of mixing the polymerizable liquid crystal compound in the organic solvent, and heating and stirring the compound to prepare a polymerizable solution, but the agent may be added in the step of mixing the polymerization initiator in the polymerizable solution after the above, or may be added in both steps.

The addition amount of the chain-transfer agent is preferably 0.5% to 10% by mass and more preferably 1.0% to 5.0% by mass with respect to the polymerizable liquid crystal composition.

Further, a non-polymerizable liquid crystal compound or a polymerizable compound having no crystallinity may be added if necessary, in order to adjust physical properties. The polymerizable compound having no crystallinity is preferably added in the step of mixing the polymerizable compound in the organic solvent, and heating and stirring the compound to prepare a polymerizable solution, but the non-polymerizable liquid crystal compound may be added in the step of mixing the polymerization initiator to the polymerizable solution after the above, or may be added in both steps. The addition amount of these compounds is preferably 20% by mass or less, more preferably 10% by mass or less, and still more preferably 5% by mass or less with respect to the polymerizable liquid crystal composition.

An additive such as a thixotropic agent, an ultraviolet ray absorber, an infrared ray absorber, an antioxidant, or a surface treating agent, may be added to the polymerizable mixture or the polymerizable composition of the present invention according to the purpose, to the extent that an aligning ability of the liquid crystal is not considerably degraded.

(Optically anisotropic body)

The polymerizable liquid crystal composition of the present invention is applied to a base material having an aligning ability, liquid crystal molecules in the polymerizable liquid crystal composition of the present invention are aligned uniformly in a state where a smectic phase and a nematic phase are retained and polymerized to obtain an optically anisotropic body of the present invention.

The retardation film of the present invention is not particularly limited as long as the retardation film improves view angle dependency by an influence of birefringence properties of the liquid crystal molecules, and various alignment modes can be applied. For example, an alignment mode of a positive A plate, a negative A plate, a positive C plate, a negative C plate, a biaxial plate, a positive O plate, and a negative O plate can be applied. Among these, a positive A plate and a negative C plate are preferably used. Further, lamination of the positive A plate and the negative C plate are more preferable.

Here, the positive A plate means an optically anisotropic body in which the polymerizable liquid crystal composition is homogeneously aligned. In addition, the negative C plate means an optically anisotropic body in which the polymerizable liquid crystal composition is aligned in a cholesteric manner.

In the liquid crystal cell according to one embodiment of the present invention, the positive A plate is preferably used as a first retardation film in order to widen a view angle by compensating dependency of a polarizing axis-orthogonal view angle. Here, the positive A plate satisfies a relationship of "nx > ny = nz", when a refractive index in an in-plane delayed phase axis direction of a film is nx, a refractive index in an in-plane advanced phase axis direction of a film is ny, and a refractive index in a thickness direction of a film is nz. As the positive A plate, an in-plane retardation value at a wavelength of 550 nm is preferably in the range of 30 to 500 nm. In addition, the retardation value in a thickness direction is not particularly limited. An Nz coefficient is preferably in the range of 0.9 to 1.1.

In addition, in order to eliminate birefringence of the liquid crystal molecules, so-called a negative C plate having negative refractive index anisotropy is preferably used as a second retardation film. In addition, the negative C plate may be laminated on the positive A plate.

Here, the negative C plate is a retardation film which satisfies "nx=ny>nz", when a refractive index in an in-plane delayed phase axis direction of a retardation film is nx, a refractive index in an in-plane advanced phase axis direction of a retardation film is ny, and a refractive index in a thickness direction of a retardation film is nz. The retardation value in a thickness direction of the negative C plate is preferably in the range of 20 to 400 nm.

In addition, the refractive index anisotropy in a thickness direction is represented by a retardation value Rth in a thickness direction defined in Equation (2). The retardation value Rth in a thickness direction can be calculated by using an in-plane retardation value $R_0$, a retardation value $R_{50}$ measured by inclining a delayed axis by 50° as an inclined axis, a thickness of a film d, and an average refractive index $n_0$ of a film to obtain nx, ny, and nz by numerical calculation from Equation (1) and the next Equations (4) to (7), and substituting these with Equation (2). In addition, the Nz coefficient= can be calculated from Equation (3). Hereinafter, the same applies to other descriptions in the present specification.

$$R_0 = (nx - ny) \times d \quad (1)$$

$$Rth = [(nx + ny)/2 - nz] \times d \quad (2)$$

$$Nz\ coefficient = (nx - nz)/(nx - ny) \quad (3)$$

$$R_{50} = (nx - ny') \times d/\cos(\phi) \quad (4)$$

$$(nx + ny + nz)/3 = n0 \quad (5)$$

where,

$$\phi = \sin^{-1}[\sin(50°)/n_0] \quad (6)$$

$$ny' = ny \times nz/[ny^2 \times \sin^2(\phi) + nz^2 \times \cos^2(\phi)]^{1/2} \quad (7)$$

In a commercially available apparatus for measuring retardation, the numerical calculation described herein is automatically performed within the apparatus and the in-plane retardation value $R_0$ or the retardation value Rth in a thickness direction is usually automatically displayed. Examples of this measuring apparatus include RETS-100 (manufactured by Otsuka Chemical Co., Ltd.).

(Base material)

The base material used for the optically anisotropic body of the present invention is a base material commonly used for a liquid crystal device, a display, an optical part, or an optical film. The base material is not particularly limited as long as the base material has thermal resistance against heating at the time of drying the applied polymerizable composition solution of the present invention. Examples of this base material include a glass base material, a metal base material, a ceramic base material, and an organic material such as a plastic base material. In particular, in a case where the base material is an organic material, examples thereof include cellulose derivatives, polyolefin, polyester, polyolefin, polycarbonate, polyacrylate, polyallylate, polyether sulfone, polyimide, polyphenylene sulfide, polyphenylene ether, nylon, and polystyrene. Among these, a plastic base material such as polyester, polystyrene, polyolefin, cellulose derivatives, polyallylate, and polycarbonate is preferable. The shape of the base material may have a curved surface in addition to a flat plate. This base material may have an electrode layer, a reflection prevention function, and a reflection function, if necessary.

The base material may be surface treated in order to improve coating properties and adhesive properties of the polymerizable liquid crystal composition of the present invention. Examples of the surface treatment include an ozone treatment, a plasma treatment, a corona treatment, and a silane coupling treatment.

(Coating)

Examples of a coating method for obtaining the optically anisotropic body of the present invention include the well-known methods such as an applicator method, a bar coating method, a spin coating method, a roll coating method, a direct gravure coating method, a reverse gravure coating method, a flexo coating method, an ink jet method, a die coating method, a cap coating method, a dip coating, and a slit coating method. After the polymerizable liquid crystal composition is applied, the composition is dried.

(Polymerization step)

A polymerization operation of the polymerizable liquid crystal composition of the present invention is generally performed by irradiating the composition with an ultraviolet ray or heating the composition, in a state where the liquid

crystal compound in the polymerizable liquid crystal composition is horizontally aligned, vertically aligned, or aligned in a hybrid manner or aligned in a cholesteric manner (plane alignment) with respect to the base material. In a case where polymerization is performed by irradiation with light, specifically, the composition is preferably irradiated with an ultraviolet ray of 390 nm or less and most preferably light having a wavelength of 250 to 370 nm. However, in a case where the polymerizable composition is decomposed by an ultraviolet ray of 390 nm or less, it is preferable to perform polymerization with an ultraviolet ray of 390 nm or more. The ray is preferably diffused and unpolarized.

(Polymerization method)

Examples of the method for polymerizing the polymerizable liquid crystal composition of the present invention include a method for irradiating the composition with an active energy ray and a thermal polymerization method. However, a method for irradiating the composition with an active energy ray is preferable from a viewpoint of advancing the reaction at room temperature. Among these, a method for irradiating the composition with light such as an ultraviolet ray is preferable from a viewpoint of a simple operation. The temperature at the time of irradiation is a temperature in which the polymerizable liquid crystal composition of the present invention can retain a liquid crystal phase, and the temperature of 50°C or less is preferable as much as possible in order to avoid inducement of thermal polymerization of the polymerizable liquid crystal composition. In addition, the liquid crystal composition normally shows a liquid crystal phase within from C (solid phase)-N (nematic) transition temperature (hereinafter, abbreviated as a C-N transition temperature.) to an N-I transition temperature range, in the step of increasing a temperature. Meanwhile, in the step of decreasing a temperature, since the composition takes a thermodynamically non-equilibrium state, the composition may retain a liquid crystal state, without being aggregated even in the C-N transition temperature or lower. This state is referred to as a supercooled state. In the present invention, the liquid crystal composition in a supercooled state is included in a state where the liquid crystal phase is retained. Specifically, the composition is preferably irradiated with an ultraviolet ray of 390 nm or less and most preferably irradiated with light having a wavelength of 250 to 370 nm. However, in a case where the polymerization composition is decomposed by irradiation with an ultraviolet ray of 390 nm or less, it is preferable to perform polymerization with an ultraviolet ray of 390 nm or more. The ray is preferably diffused and unpolarized. The irradiation intensity of the ultraviolet ray is preferably in the range of 0.05 $kW/m^2$ to 10 $kW/m^2$. In particular, the range of 0.2 $kW/m^2$ to 2 $kW/m^2$ is preferable. In a case where the intensity of the ultraviolet ray is less than 0.05 $kW/m^2$, it takes a great period of time to complete the polymerization. Meanwhile, in a case where the intensity exceeds 2 $kW/m^2$, there is possibility that the liquid crystal molecule in the polymerizable liquid crystal composition tends to be photodecomposed or generation of a great amount of polymerization heat increases the temperature during the polymerization, and a change in an order parameter of the polymerizable liquid crystal causes a disorder of retardation of the polymerized film.

In addition, in order to promote the proceeding of a polymerization reaction of a coating film, the coating film which has been polymerization cured by irradiation with an active energy ray may be thermally cured. The coating film is preferably thermally cured at high temperature, which is 200°C or more.

After only a particular portion is polymerized by irradiation with an ultraviolet ray using a mask, if an alignment state of the non-polymerized portion is changed by applying an electrical field, a magnetic field, or a temperature, and then the non-polymerized portion is polymerized, it is possible to obtain an optically anisotropic body having a plurality of areas with a different alignment direction.

In addition, when only the particular portion is polymerized by irradiation with an ultraviolet ray using a mask, if an electrical field, a magnetic field, or a temperature is applied to the polymerizable liquid crystal composition in the non-polymerized state in advance so as to control an alignment, and the composition is polymerized by irradiating the composition with a mask thereon with light, while the non-polymerized state is retained, it is possible to obtain an optically anisotropic body having a plurality of areas with a different alignment direction.

The optically anisotropic body obtained by polymerizing the polymerizable liquid crystal composition of the present invention can be used as a single optically anisotropic body by separating the optically anisotropic body from a substrate, or as an optically anisotropic body as it is without being separated from the substrate. In particular, since the optically anisotropic body hardly contaminates other members, it is useful to use the optically anisotropic body as a substrate to be laminated, or to use by attaching the optically anisotropic body to other substrates.

(Alignment treatment)

In addition, an alignment film may be provided in the base material such that the polymerizable composition is aligned when the polymerizable composition solution of the present invention is applied and dried. Examples of the alignment treatment include a stretching treatment, a rubbing treatment, an irradiation treatment with a polarized ultraviolet and visible ray, an ion beam treatment, and an oblique vapor deposition treatment of $SiO_2$ to the base material. In a case where the alignment film is used, a well-known alignment film is used as the alignment film. Examples of the well-known alignment film include polyimide, polysiloxane, polyamide, polyvinyl alcohol, polycarbonate, polystyrene, polyphenylene ether, polyallylate, polyethylene terephthalate, polyether sulfone, an epoxy resin, an epoxyacrylate resin, an acryl resin, and compounds such as a coumarin compound, a chalcone compound, a cinnamate compound, a fulgide compound, an anthraquinone compound, an azo compound, and an aryl ethene compound. As a compound for performing the alignment treatment by rubbing, a compound, in which crystallization of a material is promoted by inputting a heating step in the alignment treatment or after the alignment treatment, is preferable. Among the compounds for performing the alignment treatment other than rubbing, an optical alignment material is preferably used.

(Color filter)

The liquid crystal display device of the present invention may have a color filter. The color filter is configured to include a black matrix and at least a RGB three color pixel unit. Any methods may be used to form a color filter layer. According to one example, a step of obtaining a colored pixel is repeated the number of required times, in which a coloring composition including a pigment carrier and a color pigment dispersed therein is applied to be a predetermined pattern and the pattern is cured, so as to be able to form a color filter layer. As a pigment included in the coloring composition, an organic pigment and/or an inorganic pigment may be used. The coloring composition may include 1 type of the organic or the inorganic pigment and may include a plurality of types of the organic pigment and/or the inorganic pigment. The pigment preferably has high coloring development properties and heat resistance, and particularly resistance to thermal decomposition, and normally, the organic pigment is used. In below, specific examples of the organic pigment which can be used for the coloring composition are shown by a color index number.

As the organic pigment of a red coloring composition, for example, a red pigment such as C.I. Pigment Red 7, 14, 41, 48:2, 48:3, 48:4, 81:1, 81:2, 81:3, 81:4, 146, 168, 177, 178, 179, 184, 185, 187, 200, 202, 208, 210, 246, 254, 255, 264, 270, 272, and 279 can be used. As the organic pigment of the red coloring composition, a mixture of a red pigment and a yellow pigment may be used.

As the yellow pigment, for example, C. I. Pigment Yellow 1, 2, 3, 4, 5, 6, 10, 12, 13, 14, 15, 16, 17, 18, 24, 31, 32, 34, 35, 35:1, 36, 36:1, 37, 37:1, 40, 42, 43, 53, 55, 60, 61, 62, 63, 65, 73, 74, 77, 81, 83, 93, 94, 95, 97, 98, 100, 101, 104, 106, 108, 109, 110, 113, 114, 115, 116, 117, 118, 119, 120, 123, 126, 127, 128, 129, 138, 147, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 198, 213, and 214 can be used.

As the organic pigment of a green coloring composition, for example, a green pigment such as C.I.Pigment Green 7, 10, 36, and 37 can be used. As the organic pigment of the green coloring composition, a mixture of the green pigment and the yellow pigment may be used. As the yellow pigment, for example, the same pigment exemplified for the red coloring composition can be used.

As the organic pigment of a blue coloring composition, for example, a blue pigment such as C.I. Pigment Blue 15, 15:1, 15:2, 15:3, 15:4, 15:6, 16, 22, 60, and 64 can be used. As the organic pigment of the blue coloring composition, a mixture of the blue pigment and a violet pigment may be used. As the violet pigment, for example, C.I. Pigment Violet 1, 19, 23, 27, 29, 30, 32, 37, 40, 42, or 50 can be used.

As the inorganic pigment, metal oxide powders such as yellow lead, zinc yellow, bengala (red iron oxide (III)), cadmium red, ultramarine blue, Prussian blue, chromic oxide green, and cobalt green, metal sulfide powders, or metal powders can be used. The inorganic pigment can be used in combination with the organic pigment, for example, in order to achieve satisfactory coating properties, sensitivity, and development properties, while a balance of chroma and brightness is obtained.

The coloring composition may further include a coloring component other than the pigment. For example, the coloring composition may include a dye as long as the coloring composition can achieve sufficient thermal resistance. In this case, toning using the dye is possible.

The pigment carrier included in the aforementioned coloring composition is configured to include a resin, a precursor thereof or a mixture thereof. As the resin, a thermoplastic resin, a thermosetting resin, and a photosensitive resin are included, and as the precursor, a multifunctional monomer which generates a resin upon radiation exposure or an oligomer is included. These can be used alone or two or more types thereof may be used in combination. In a case where the coloring composition is cured upon irradiation with light such as an ultraviolet ray, for example, a photopolymerization initiator may be added to the coloring composition, or a sensitizer may be added in some cases. Also, the coloring composition may further include a chain-transfer agent such as multifunctional thiol. The coloring composition can be manufactured by, for example, finely dispersing one or more types of the pigment in the pigment carrier and the organic solvent, if necessary, with the aforementioned photopolymerization initiator, using a disperser such as a triple roll mill, a double roll mill, a sand mill, a kneader, and an attritor. The coloring composition including two or more types of the pigment may be manufactured by preparing a dispersion including a different pigment and mixing this dispersion. When the pigment is dispersed in the pigment carrier and the organic solvent, a dispersion auxiliary agent such as a resin type pigment dispersant, a surfactant and pigment derivatives can be used. The dispersion auxiliary agent improves dispersivity of the pigment and suppresses reaggregation of the dispersed pigment. Therefore, in a case where the

coloring composition obtained by dispersing the pigment in the pigment carrier and the organic solvent using the dispersion auxiliary agent is used, a color filter having excellent transparency is obtained.

The dispersion auxiliary agent is preferably used, for example, 0.1 to 40 parts by weight and more preferably 0.1 to 30 parts by weight with respect to 100 parts by weight of the pigment in the coloring composition.

The resin type pigment dispersant includes a moiety having affinity to the pigment which adsorbs to the pigment and a moiety having compatibility with the pigment carrier. The resin type pigment dispersant adsorbs to the pigment to stabilize dispersivity of the pigment in the pigment carrier. As the resin type pigment dispersant, for example, an oily dispersant including polycarboxylate such as polyurethane and polyacrylate, unsaturated polyamide, polycarboxylic acid, polycarboxylic acid amine salt, polycarboxylic acid partial amine salt, polycarboxylic acid ammonium salt, polycarboxylic acid alkylamine salt, polysiloxane, long-chain polyaminoamide phosphate, a hydroxyl group-containing polycarboxylate, modified products thereof, amide formed by reacting poly (lower alkylene imine) and polyester having a free carboxyl group and salts thereof; a water-soluble resin or a water-soluble polymer compound including an acrylic acid-styrene copolymer, a methacrylic acid-styrene copolymer, an acrylic acid-acrylate copolymer, an acrylic acid-methacrylate copolymer, a methacrylic acid-acrylate copolymer, a methacrylic acid-methacrylate copolymer, a styrene-maleic acid copolymer, polyvinyl alcohol, and polyvinyl pyrrolidone; polyesters, modified polyacrylates, ethylene oxide/propylene oxide added compounds, phosphates, and mixtures of two or more types thereof can be used.

In addition, a planarizing layer coated with an overcoat may be provided on the surface of the color filter layer.

(Alignment film)

The liquid crystal display device of the present invention may have an alignment film on the surface where the first substrate and the liquid crystal composition on the second substrate are in contact with each other, in order to cause the liquid crystal composition to be aligned.

As a material for the alignment film, a transparent organic material such as polyimide, polyamide, BCB (benzo cyclo butane polymer), and polyvinyl alcohol can be used. Particularly, a polyimide alignment film is preferable, in which polyamic acid synthesized from diamine such as aliphatic or alicyclic diamine including p-phenylene diamine and 4,4'-diaminodiphenyl methane, and butane tetracarboxylic acid anhydride, aliphatic or alicyclic tetracarboxylic acid anhydride such as 2,3,5-tricarboxycyclopentyl acetic acid anhydride, aromatic tetracarboxylic acid anhydride such as pyromellitic acid dianhydride, is imidated. In this case, as a method for imparting alignment, it is general to use rubbing, but in a case where a vertical alignment film is used, it is possible to use the film without imparting alignment.

As the material for the alignment film, an optical alignment material including chalcone, cinnamate, cinnamoyl, or an azo group in the compound can be used. The material may be used in combination with a material such as polyimide and polyamide, and in this case, for the alignment film, rubbing or an optical alignment technology may be used. Examples of the optical alignment material include polyimide having cyclic cycloalkane, fully aromatic polyacrylate, polyvinyl cinnamate disclosed in JP-A-5-232473, polyvinyl ester of paramethoxycinnamic acid, cinnamate derivatives disclosed in JP-A-6-287453 and JP-A-6-289374, and maleimide derivatives disclosed in JP-A-2002-265541. Specifically, compounds represented by the following Formula (7-1) to Formula (7-11) are preferable.

[Chem. 58]

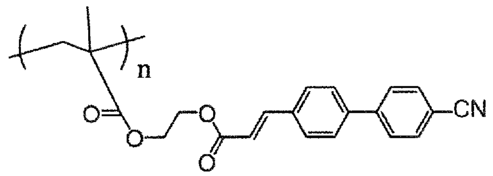

(7-1)

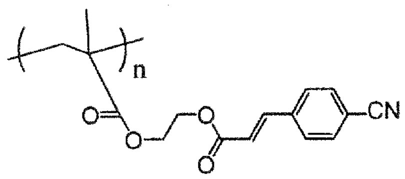

(7-2)

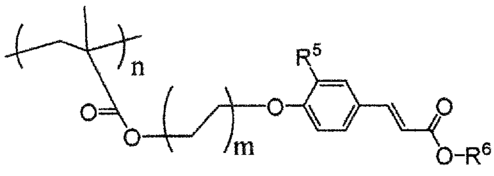

(7-3)

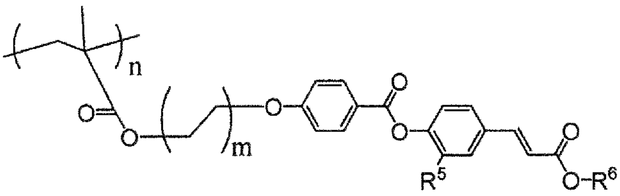

(7-4)

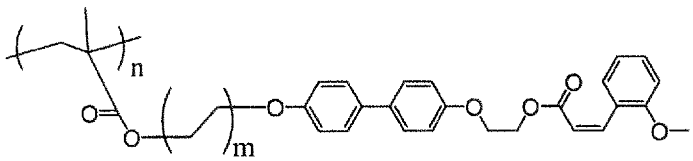

(7-5)

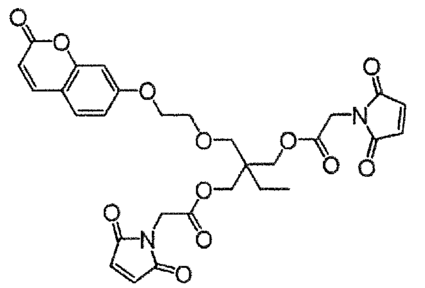

(7-6)

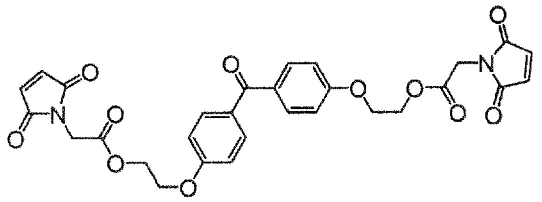

(7-7)

[Chem. 59]

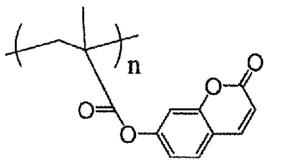

(7-8)

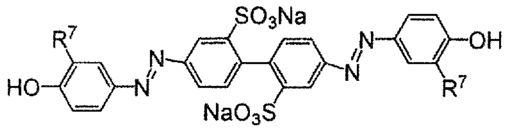

(7-9)

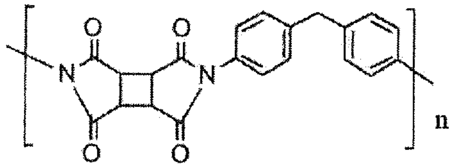

(7-10)

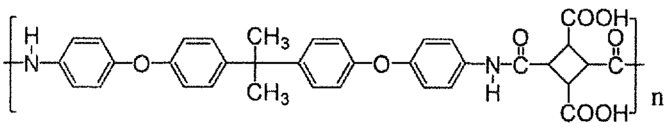

(7-11)

In the formulas, $R^5$ represents a hydrogen atom, a halogen atom, an alkyl group having 1 to 3 carbon atoms, an alkoxy group, or a nitro group, $R^6$ represents a hydrogen atom or an alkyl group having 1 to 10 carbon atoms, the alkyl group may be linear or branched, an arbitrary hydrogen atom in the alkyl group may be substituted with a fluorine atom, one $-CH_2-$ in the alkyl group or two or more $-CH_2-$ non-adjacent to each other each independently may be substituted with -O-, -S-, -CO-, -COO-, -OCO-, -CO-S-, -S-CO-, -O-CO-O-, -CO-NH-, -NH-CO-, or -C≡C-, and $CH_3$ at the terminal may be substituted with $CF_3$, $CCl_3$, a cyano group, a nitro group, an isocyano group, or a thioisocyano group. n represents 4 to 100, 000 and m represents an integer of 1 to 10.

$R^7$ represents a polymerizable functional group selected from the group consisting of a hydrogen atom, a halogen atom, a halogenated alkyl group, an allyloxy group, a cyano group, a nitro group, an alkyl group, a hydroxyalkyl group, an alkoxy group, a carboxy group or alkali metal salts thereof, an alkoxycarbonyl group, a halogenated methoxy group, a hydroxyl group, a sulfonyloxy group or alkali metal salts thereof, an amino group, a carbamoyl group, a sulfamoyl group or a (meta)acryloyl group, a (meta)acryloyloxy group, a (meta)acryloyl amino group, a vinyl group, a vinyloxy group and an maleimide group.

In the alignment film, it is general to form a resin film by applying the alignment film material to the substrate according to a method such as a spin coating method, but a uniaxial drawing method, a Langmuir-Blodgett method, or the like can be used.

(Transparent electrode)

In the liquid crystal display device of the present invention, as a material for a transparent electrode, conductive metal oxides can be used, and as the metal oxides, indium oxide ($In_2O_3$), tin oxide ($SnO_2$), zinc oxide (ZnO), indium tin oxide ($In_2O_3$-$SnO_2$), indium zinc oxide ($In_2O_3$-ZnO), niobium added titanium dioxide ($Ti_{1-x}Nb_xO_2$), fluorine-doped tin oxide, graphene nanoribbon, or metal nanowires can be used, and zinc oxide (ZnO), indium tin oxide ($In_2O_3$-$SnO_2$), or indium zinc oxide ($In_2O_3$-ZnO) is preferable. For patterning of this transparent conductive film, a photoetching method or a method for using a mask can be used.

A combination of the liquid crystal display device and a backlight can be used for various purposes such as liquid crystal televisions, monitors of personal computers, mobile phones, displays of smart phones, note-type personal computers, personal digital assistants, and digital sinages. Examples of the backlight include a cold cathode tube type backlight, a 2 wavelength peak pseudo white backlight and a 3 wavelength peak backlight, which uses a light emitting diode using an inorganic material or an organic EL element.

(Backlight)

A configuration of the backlight is not particularly limited. The backlight may use any one of a light guide type or a direct type. The light guide type backlight portion includes a light source and a diffusion board and a direct type backlight portion includes a light source and a diffusion board. The light source to be used is not particularly limited and any of a light bulb, a light emitting diode (LED), and an electroluminescence panel (ELP), one or a plurality of a cold cathode fluorescent lamps (CCFL) and hot cathode fluorescent lamps (CCFL) can be used.

In addition, for the backlight, members such as a reflective plate and a luminance imiproving film can be used in order to increase efficiency of using light. Further, when the liquid crystal display device is formed, for example, 1 layer or 2 or more layers of the parts such as a diffusion board, a protection board, a prism array, a lens array sheet, and a light diffusion board can be appropriately disposed in addition to the aforementioned members.

(Polarizing layer)

The liquid crystal display device of the present invention may have a polarizing layer. The polarizing layer is a member having a function of converting natural light to linearly polarized light. The polarizing layer is preferable as long as the layer is a film having a polarizing function. Examples thereof include a film in which urea or a dichroic pigment is adsorbed to a polyvinyl alcohol-based film and stretched, a film in which a polyvinyl alcohol-based film is stretched and urea, or a dichroic dye or a dichroic pigment is adsorbed thereto, a film in which an aqueous solution containing a dichroic dye is applied to a substrate to form a polarizing layer, and a wire grid polarizer.

As a polyvinyl alcohol-based resin, a resin obtained by gelating a polyvinyl acetate-based resin can be used. Examples of the polyvinyl acetate-based resin include a copolymer of vinyl acetate and another monomer which can be copolymerized with vinyl acetate, in addition to polyvinyl acetate, which is a homopolymer of vinyl acetate. Examples of the another monomer which can be copolymerized with vinyl acetate include unsaturated carboxylic acids, olefins, vinyl ethers, unsaturated sulfonic acids, and acrylamides having an ammonium group. A film forming method of the polyvinyl alcohol-based resin is not particularly limited and a film can be formed according to a well-known method. The thickness of a polyvinyl alcohol-based raw film is not particularly limited and for example, the thickness is about 10 to 150 $\mu$m.

In a case where the urea is used as the dichroic pigment, normally, a method is adopted in which a polyvinyl alcohol-based resin is dipped into an aqueous solution containing urea and potassium iodide to dye. In a case where the dichroic dye is used as the dichroic pigment, normally, a method is adopted in which a polyvinyl alcohol-based resin is dipped into an aqueous solution containing a water-soluble dichroic dye to dye.

In a case of a film in which a polarizing layer is formed by applying the aqueous solution containing a dichroic dye to the substrate, the dichroic pigment to be coated differs depending on the type of the base material to be used, and examples thereof include water-soluble dyes such as a direct dye and an acidic dye and amine salts thereof, and non-water soluble pigments such as a disperse dye and an oil-soluble dye. These pigments are normally dissolved in water and an organic solvent, and in some cases, are applied to a base material which has been subjected to rubbing and corona treatments by adding a surfactant. The organic solvent differs depending on solvent resistance, and generally examples thereof include alcohols such as methanol, ethanol, and isopropyl alcohol, cellosolves such as methyl cellosolve and ethyl cellosolve, ketones such as acetone and methyl ethyl ketone, amides such as dimethyl formamide and N-methyl pyrrolidone, and aromatic organic solvents such as benzene and toluene. The coating amount of the pigment differs depending on polarizing performance of the pigment, and generally 0.05 to 1.0 g/rrf and preferably 0.1 to 0.8 g/rrf. As a method for coating a pigment liquid to a base material, various coating methods such as bar coating, spray coating, roll coating, and gravure coating are exemplified.

In a case where a wire grid polarizer is used, a polarizer formed by a conductive material such as Al, Cu, Ag, Cu, Ni, Cr, and Si is preferably used.

Also, the polarizing layer may further include a film, which is a protective film, if necessary. Examples of the protective film include a polyolefin film such as polyethylene, polypropylene and a norbornene-based polymer, a polyethylene terephthalate film, a polymethacrylate film, a polyacrylate film, a cellulose ester film, a polyethylene naphthalate film, a polycarbonate film, a polysulfone film, a polyether sulfone film, a polyether ketone film, a polyphenylene sulfide film, and a polyphenylene oxide film.

In one embodiment of the present invention, an in-cell polarizing layer, in which a polarizing layer is disposed within a liquid crystal cell, may be provided. One example of the liquid crystal display device of this case is illustrated in Figs. 3 to 8.

(Adhesive layer)

An adhesive layer for the attachment to the liquid crystal cell may be provided to an optical member having the aforementioned polarizing layer. The adhesive layer can be provided for the attachment to members other than the liquid

crystal cell. An adhesive for forming the adhesive layer is not particularly limited, and for example, an adhesive including an acrylic polymer, a silicone-based polymer, polyester, polyurethane, polyamide, polyether, or a fluorine-based or rubber-based polymer as a base polymer can be appropriately selected to be used. In particular, an adhesive having excellent optical transparency, showing adhesive properties of appropriate wettability, aggregating properties, and adhesiveness, and having excellent weather resistance and heat resistance as the acrylic adheisve can be preferably used. In addition to the above, an adhesive layer having low moisture absorptivity and excellent heat resistance is preferable, from a viewpoint of preventing a foaming phenomenon or peeling phenomenon caused by moisture absorption, preventing a decrease in optical properties caused by a difference in thermal expansion or bending of the liquid crystal cell, and formation of the liquid crystal display device with high quality and excellent durability. Also, the adhesive power of the adhesive layer is preferably 1 N/25mm or more and more preferably 5 N/25mm or more, from a viewpoint of workability (reworkability) of fixing and attaching of the polarizing plate. The upper limit is not particularly limited. The adhesive layer may contain an additive to be added to the adhesive layer such as a resin of natural substances or synthesized substances, in particular, a resin for imparting adhesive properties, a glass fiber, glass beads, a metal powder, a filler composed of other inorganic powders, a pigment, a coloring agent, and an antioxidant. Also, the adhesive layer may contain fine particles to show light diffusing properties. The adhesive layer with different compositions or types may be provided on one side or both sides of the polarizing plate or the optical member as a superimposing layer. In a case where the adhesive layer is provided to both sides, the adhesive layer with different compositions, types, or thicknesses can be provided to the front and back of the polarizing plate or the optical member. The thickness of the adhesive layer can be appropriately determined depending on the purpose of the use or adhesive power, and is generally 1 to 500 $\mu$m, preferably 5 to 200 $\mu$m, and particularly preferably 10 to 100 $\mu$m.

(Liquid crystal display device)

The liquid crystal display device is a display element in which a liquid crystal substance fills between optically transparent substrates such as a glass. The liquid crystal display device displays an image such that a molecule alignment of the liquid crystal substance is changed by electric control from a display controller (not illustrated), a polarized state of the light of the backlight polarized by the polarizing plate disposed on the rear side of the liquid crystal cell, and the light amount transmitting the polarizing plate disposed on the viewing side of the liquid crystal cell is controlled. In the liquid crystal display device of the embodiment, a bar-like liquid crystal molecule having negative dielectric anisotropy is aligned. The liquid crystal cell of the present invention is characterized to have an "in-cell type retardation film", in which a retardation film is included the inside of the liquid crystal cell, which is pinched by a pair of the optically transparent substrates.

The retardation film disposed in the inside of the liquid crystal cell uses a polymerized optically anisotropic body, in a state where the polymerizable liquid crystal composition is aligned. In addition, the liquid crystal display device shown in Figs. 1 and 2 is merely one alignment example and the position where the retardation film is provided is not limited to this example. For example, the retardation film may be provided to a desired position, for example, between the electrode and the alignment film on the rear side (Figs. 9 and 10) .

In addition, in the present application, the ring structure, the linking group, and the substituent present in general formulas are respectively independent in each general formula.

[Examples]

Hereinafter, a part of most preferred aspect of the present invention will be described using Examples, but the present invention is not limited to these Examples. In addition, "%" of the composition in the following Examples and Comparative Examples means "% by mass".

In Examples, measured properties are as follows.

$T_{ni}$: Nematic phase-isotropic liquid phase transition temperature (°C)
$\Delta n$: Refractive index anisotropy at a temperature of 25°C
$\Delta\varepsilon$: Dielectric anisotropy at a temperature of 25°C
$\eta$: Viscosity (mPa·s) at a temperature of 20°C
$\gamma_1$: Rotational viscosity (mPa·s) at a temperature of 25°C
$d_{gap}$: Gap of a cell between the first substrate and the second substrate ($\mu$m)
VHR: Voltage holding ratio (%) at a temperature of 70°C
(A value of the ratio of a measured voltage to an initial voltage represented by %, the measured voltage was measured at a frame time of 200 ms and a pulse width of 64 $\mu$s when the liquid crystal composition is injected to a cell having a cell thickness of 3.5 $\mu$m and a voltage of 5 V is applied.)
ID: Ion density (pC/$cm^2$) at a temperature of 70°C

(A value of an ion density which was measured at a frequency of 0.05 Hz when the liquid crystal composition is injected to a cell having a cell thickness of 3.5 μm and a voltage of 20 V is applied by MTR-1 (manufactured by TOYO Corporation))

Burn-in:

Evaluation of burn-in of the liquid crystal display element was performed such that after a predetermined fixed pattern was displayed within a display area for 1,000 hours, a residual image level of the fixed pattern was visually evaluated according to the following 4 stages, when the fixed pattern was displayed uniformly over the entire screen.

A: No residual image
B: Acceptable level to have an extremely less residual image
C: Unacceptable level to have a residual image
D: Quite deteriorated to have a residual image

The following abbreviations are used for description of the compounds in Examples.

(Side chain)

| | |
|---|---|
| -n | $-C_nH_{2n+1}$ Linear alkyl group having a carbon atom of n |
| n- | $C_nH_{2n+1}-$ Linear alkyl group having a carbon atom of n |
| -On | $-OC_nH_{2n+1}$ Linear alkoxyl group having a carbon atom of n |
| nO- | $C_nH_{2n+1}O-$ Linear alkoxyl group having a carbon atom of n |
| -V | $-CH=CH_2$ |
| V- | $CH_2=CH-$ |
| -V1 | $-CH=CH-CH_3$ |
| 1V- | $CH_3-CH=CH-$ |
| -2V | $-CH_2-CH_2-CH=CH_3$ |
| V2- | $CH_3=CH-CH_2-CH_2-$ |
| -2V1 | $-CH_2-CH_2-CH=CH-CH_3$ |
| 1V2- | $CH_3-CH=CH-CH_2-CH_2$ |

(Ring structure)

[Chem. 60]

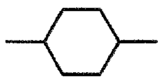
Cy

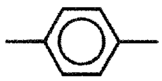
Ph

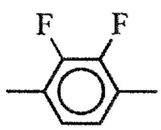
Ph5

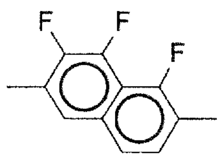
Nd4

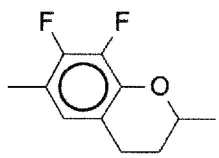
Ch3

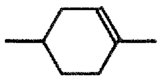
Cb

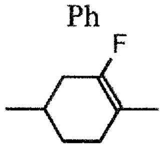
Cb1

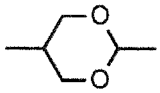
Oc

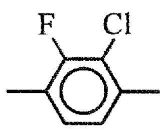
Ph15

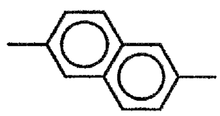
Nd

[Preparation of polymerizable liquid crystal composition]

The polymerizable liquid crystal composition of the present invention used for a retardation film was prepared

as follows.

(Preparation of polymerizable liquid crystal composition 1)

34 parts of a compound (A1), 10 parts of a compound (A2), 28 parts of a compound (B1), 28 parts of a compound (B2), 0.1 parts of a compound (E1), 0.2 parts of a compound (I1), 300 parts of propylene glycol monomethylether acetate (PGMEA)(D1), which is an organic solvent, and a compound (G1) were stirred for 1 hour at a solution temperature of 60°C and a stirring speed of 500 rpm, using a stirrer having stirring propellers. The resultant was filtrated by adjusting a filtration pressure to 0.20 MPa using a 0.2 μm (PTFE, film thickness: 60 μm) membrane filter to obtain a polymerizable liquid crystal composition 1 of the present invention.

(Preparation of polymerizable liquid crystal composition 2)

49 parts of a compound (A1), 11 parts of a compound (A2), 7 parts of a compound (B1), 12 parts of a compound (B2), 10 parts of a compound (B3), 11 parts of a compound (C1), 0.1 parts of a compound (E1), 0.2 parts of a compound (I1), 300 parts of propylene glycol monomethylether acetate (PGMEA)(D1), which is an organic solvent, and a compound (G1) were stirred for 1 hour at a solution temperature of 60°C and a stirring speed of 500 rpm, using a stirrer having stirring propellers. The resultant was filtrated by adjusting a filtration pressure to 0.20 MPa using a 0.2 μm (PTFE, film thickness: 60 μm) membrane filter to obtain a polymerizable liquid crystal composition 2 of the present invention.

(Preparation of polymerizable liquid crystal compositions 3 to 20 and comparative polymerizable liquid crystal compositions 1 to 20)

The compounds shown in Tables 1 to 4 were prepared in the same manner as the preparation of the polymerizable liquid crystal compositions 1 and 2 to obtain polymerizable liquid crystal compositions 3 to 24 of the present invention, and comparative polymerizable liquid crystal compositions 1 to 20.

[Chem. 61]

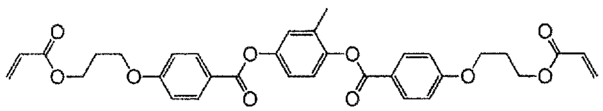

(A1)

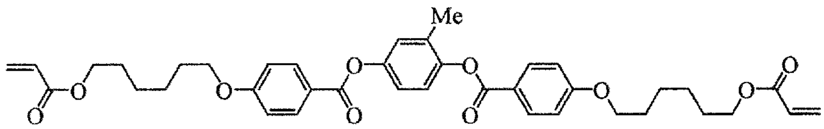

(A2)

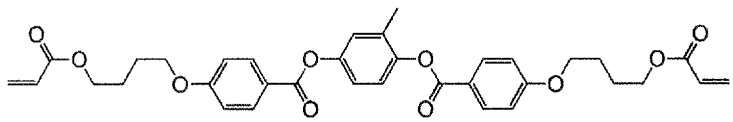

(A3)

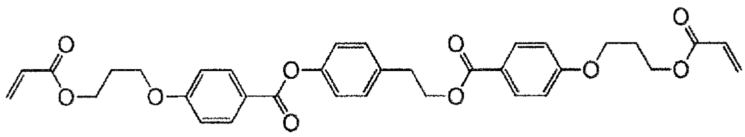

(A4)

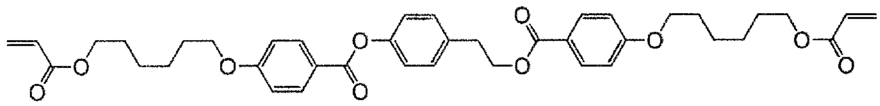

(A5)

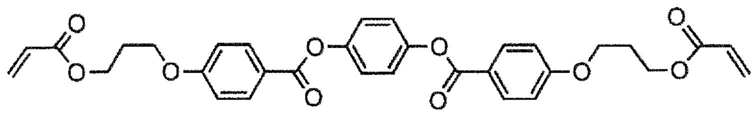

(A6)

[Chem. 62]

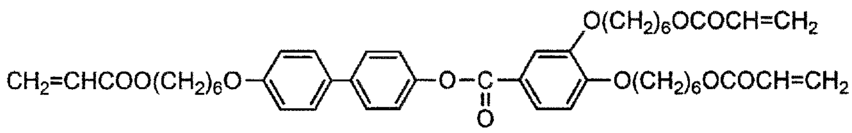

(A7)

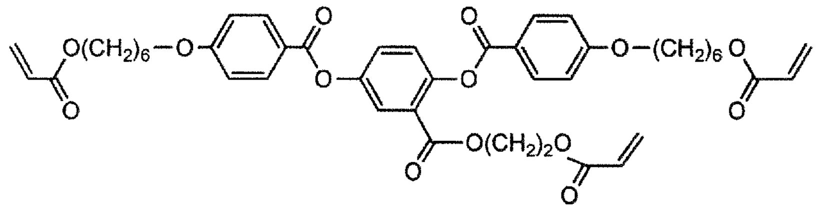

(A8)

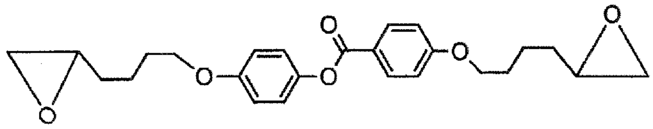

(A9)

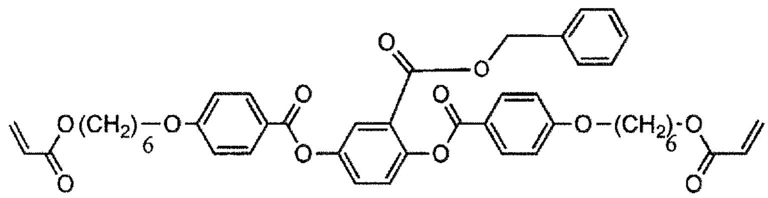

(A10)

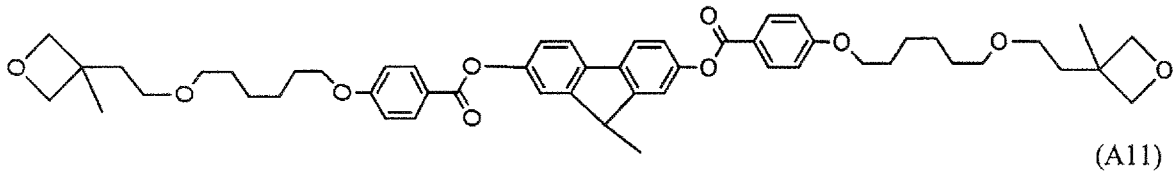

(A11)

[Chem. 63]

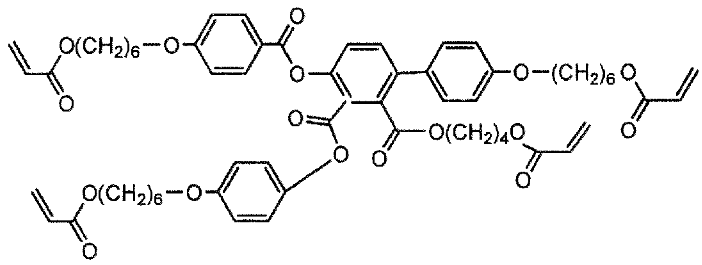

(A12)

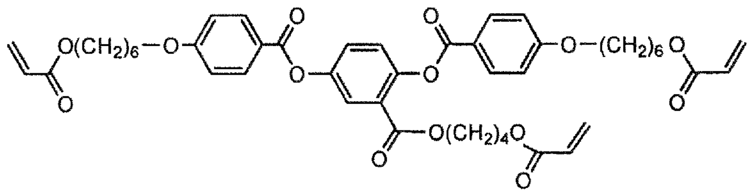

(A13)

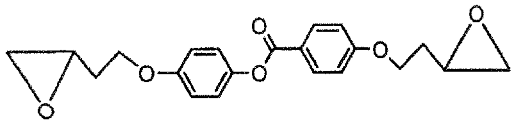

(A14)

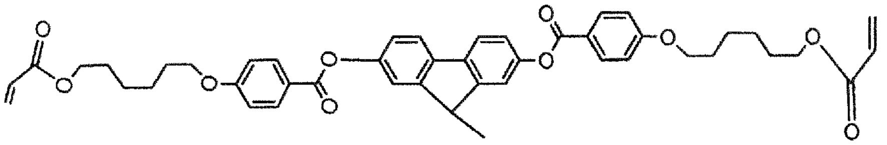

(A15)

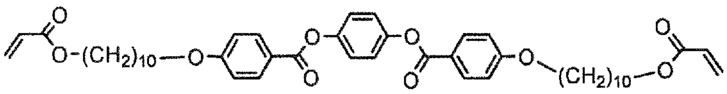

(A16)

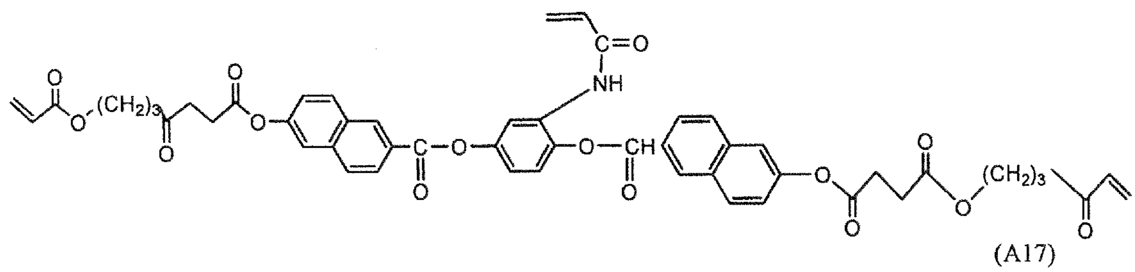

(A17)

[Chem. 64]

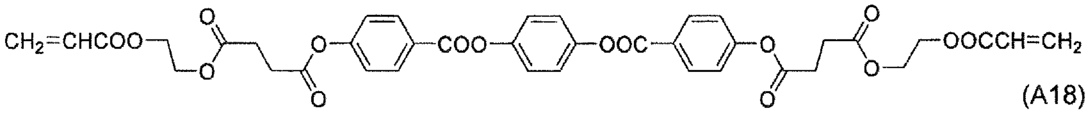

(A18)

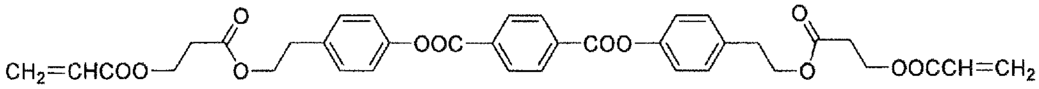

(A19)

[Chem. 65]

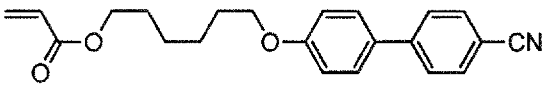

(B1)

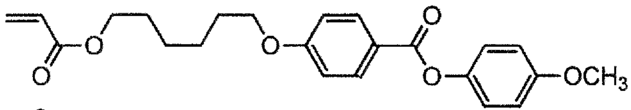

(B2)

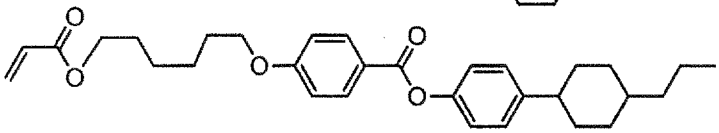

(B3)

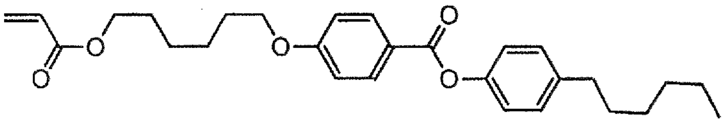

(B4)

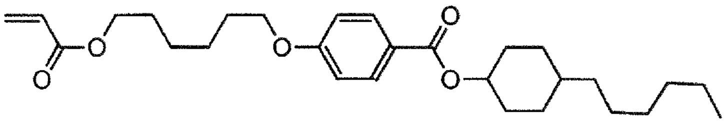

(B5)

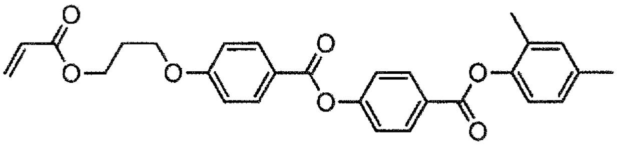

(B6)

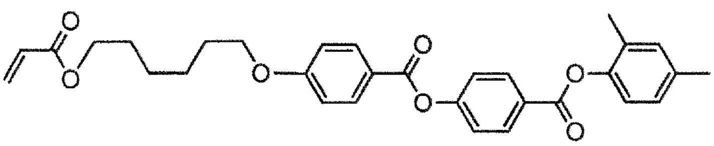

(B7)

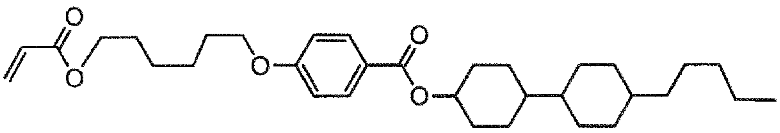

(B8)

[Chem. 66]

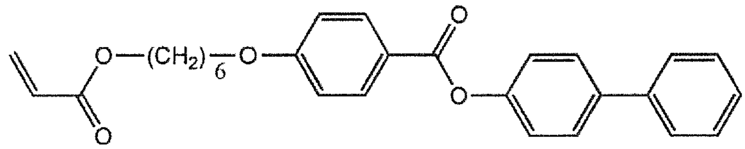

(B9)

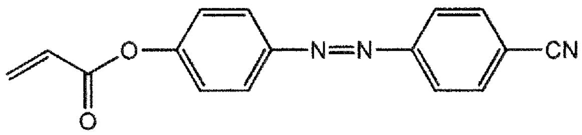

(B10)

[Chem. 67]

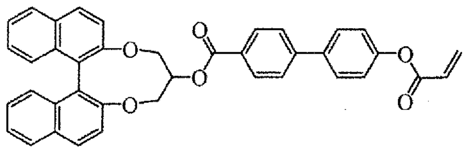

(C1)

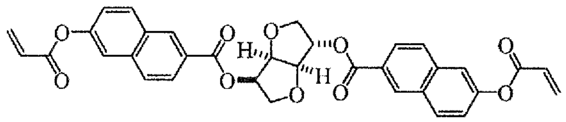

(C2)

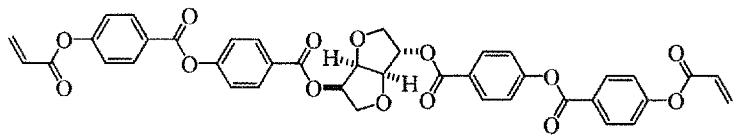

(C3)

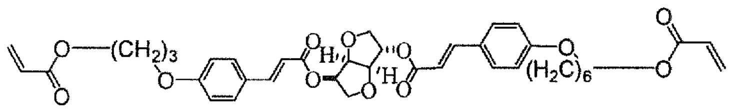

(C4)

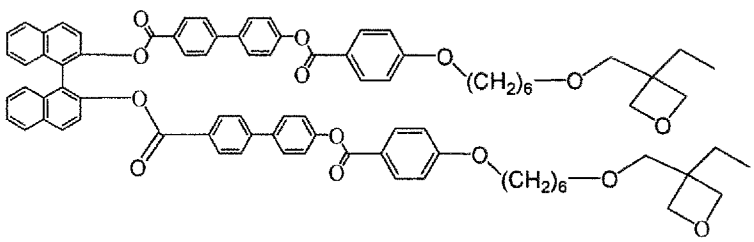

(C5)

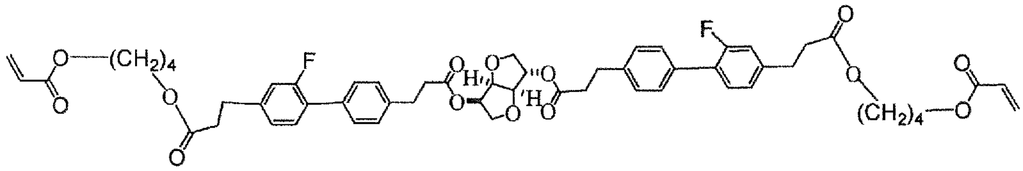

(C6)

Propylene glycol monomethylether acetate (D1)
p-methoxyphenol (E1)
Irgacure 907 (G1)

Irgacure 651 (G2)
Irgacure 127 (G3)
DTS-102 (G4)
Irgacure 251 (G5)
ANTHRACURE UVS-1331(G6)
Polypropylene (Weight average molecular weight (MW): 1275) (I1)
Fluidized paraffin (12)
Megafac F-554 (13)
FTX-218 (14)

[Table 1]

| Polymerizable liquid crystal composition Compound | (1) | (2) | (3) | (4) | (5) | (6) | (7) | (8) | (9) | (10) | (11) | (12) | (13) | (14) |
|---|---|---|---|---|---|---|---|---|---|---|---|---|---|---|
| (A1) | 34 | | 40 | 11 | 49 | 35 | 20 | 20 | 50 | 39 | 52 | | | |
| (A2) | 10 | 20 | 10 | 19 | 11 | | 30 | | | | | | | |
| (A3) | | | | | | 35 | | 50 | | 30 | 11 | | 60 | |
| (A4) | | | | | | | | 10 | 20 | | | | | |
| (A5) | | | | | | | | 10 | 20 | | | | | |
| (A6) | | | | | | | | 10 | | | | | | |
| (A7) | | | | | | | | | | | | 40 | | |
| (A8) | | | | | | | | | | | | | | 30 |
| (A12) | | | | | | 30 | | | | | | | | |
| (A13) | | | | | | | | | | | | | 20 | |
| (A16) | | | | | | | | | | | | 4 | | |
| (A17) | | | | | | | 20 | | | | | | | |
| (A18) | | 40 | | | | | | | | | | | | |
| (A19) | | 40 | | | | | | | | | | | | |
| (B1) | 28 | | 25 | 26 | 7 | | | | | | 8 | 30 | 20 | |
| (B2) | 28 | | 25 | 27 | 12 | | | | | | 22 | | | |
| (B3) | | | | | 10 | | | | | | | | | |
| (B4) | | | | 8.5 | | | | | | | | | | 35 |
| (B5) | | | | 8.5 | | | | | | | | | | 35 |
| (B6) | | | | | | | | | | | | 18 | | |
| (B7) | | | | | | | | | | 23 | | | | |
| (B10) | | | | | | | 30 | | | | | | | |
| (C1) | | | | | 11 | | | | | | | | | |
| (C2) | | | | | | | | | | 8 | | | | |
| (C3) | | | | | | | | | | | | 8 | | |

(continued)

| Polymerizable liquid crystal composition Compound | (1) | (2) | (3) | (4) | (5) | (6) | (7) | (8) | (9) | (10) | (11) | (12) | (13) | (14) |
|---|---|---|---|---|---|---|---|---|---|---|---|---|---|---|
| (C4) | | | | | | | | | | | 7 | | | |
| (C6) | | | | | | | | | 10 | | | | | |
| (D1) | 300 | 300 | 300 | 300 | 300 | 300 | | 300 | 300 | 300 | 300 | 300 | 300 | 300 |
| (E1) | 0.1 | 0.1 | 0.1 | 0.1 | 0.1 | 0.1 | 300 | 0.1 | 0.1 | 0.1 | 0.1 | 0.1 | 0.1 | 0.1 |
| (G1) | 5 | 5 | | | 5 | 5 | 0.1 | 5 | 5 | 5 | 5 | 5 | 5 | 5 |
| (G2) | | | 5 | 5 | | | 5 | | | | | | | |
| (I1) | 0.2 | 0.2 | 0.2 | 0.2 | 0.2 | 0.2 | | 0.2 | 0.2 | 0.2 | 0.2 | 0.2 | 0.2 | 0.2 |
| (I2) | | | | | | | | | | | | | | |
| (I3) | | | | | | | 0.2 | | | | | | | |
| (I4) | | | | | | | | | | | | | | |

[Table 2]

| Polymerizable liquid crystal composition Compound | (15) | (16) | (17) | (18) | (19) | (20) | (21) | (22) | (23) | (24) |
|---|---|---|---|---|---|---|---|---|---|---|
| (A1) | 34 | 52 | | | | 20 | | | | 50 |
| (A2) | 10 | | 30 | | | | | 43 | | 30 |
| (A3) | | 11 | | | | | 30 | | | |
| (A4) | | | 39 | | | | | | | |
| (A6) | | | | 30 | | | | | | |
| (A9) | | | | | | | 50 | | 45 | |
| (A10) | | | | | | | | 34 | | |
| (A11) | | | | | | | | | 45 | |
| (A14) | | | | | 40 | | | | | |
| (A15) | | | | | 40 | 60 | | | | |
| (B1) | 28 | 8 | | 39 | 10 | 10 | 10 | | | 5 |
| (B2) | 10 | 22 | | | | | | | | 15 |
| (B3) | 18 | | | | | | | | | |
| (B8) | | | | | | | | 23 | | |
| (B9) | | | 23 | | | | | | | |
| (B10) | | | | 23 | | | | | | |
| (C1) | | 7 | | | | | | | | |
| (C2) | | | 8 | 5 | | | | | | |
| (C3) | | | | 3 | | | | | | |
| (C5) | | | | | 10 | 10 | 10 | | 10 | |
| (D1) | 300 | 300 | 300 | 300 | 300 | 300 | 300 | 300 | 300 | 300 |
| (E1) | 0.1 | 0.1 | 0.1 | 0.1 | 0.1 | 0.1 | 0.1 | 0.1 | 0.1 | 0.1 |
| (G1) | 5 | 5 | 5 | 5 | 5 | 5 | 5 | 5 | 3 | 5 |
| (G4) | | | | | | | | | 5 | |
| (G5) | | | | | 2 | | 2 | | | |
| (H1) | | | | | 1 | | 1 | | | |
| (I1) | 0.2 | 0.2 | | | | | | | | 0.2 |
| (I2) | | | 0.2 | 0.2 | | | | | | |
| (I3) | | | | | 0.2 | 0.2 | | | | |
| (I4) | | | | | | | 0.2 | 0.2 | | |

[Table 3]

| Comparative polymerizable liquid crystal composition Compound | (1) | (2) | (3) | (4) | (5) | (6) | (7) | (8) | (9) | (10) | (11) | (12) | (13) | (14) |
|---|---|---|---|---|---|---|---|---|---|---|---|---|---|---|
| (A1) | 10 | | 5 | 4 | 4 | 3 | | | | 3 | 3 | | | |
| (A2) | 10 | 6 | 5 | 4 | 4 | | | | | | | | 5 | |
| (A3) | | | | | | 3 | 5 | | | | 11 | | | |
| (A7) | | | | | | | | | | | | 10 | | |
| (A8) | | | | | | | | 4 | | | | | | 20 |
| (A9) | | | | | | | | | 3 | | | | | |
| (A13) | | | | | | | 5 | | | | | | | |
| (A14) | | | | | | | | | 2 | | | | | |
| (A15) | | | | | | | | | 1 | 3 | | | | |
| (B1) | 40 | | 45 | 30 | 10 | 47 | 90 | | 84 | 84 | | 41 | 40 | |
| (B2) | 40 | | 45 | 30 | 40 | 47 | | | | | 40 | 41 | 20 | |
| (B3) | | | | | 31 | | | | | | 39 | | 35 | |
| (B4) | | 50 | | 16 | | | | 48 | | | | | | 40 |
| (B5) | | | | 17 | | | | 48 | | | | | | 40 |
| (B6) | | 44 | | | | | | | | | | | | |
| (C1) | | | | | 11 | | | | | | | | | |
| (C2) | | | | | | | | | | | | 8 | | |
| (C4) | | | | | | | | | | | 7 | | | |
| (C5) | | | | | | | | | 10 | 10 | | | | |
| (D1) | 300 | 300 | 300 | 300 | 300 | 300 | 300 | 300 | 300 | 300 | 300 | 300 | 300 | 300 |
| (E1) | 0.1 | 0.1 | 0.1 | 0.1 | 0.1 | 0.1 | 0.1 | 0.1 | 0.1 | 0.1 | 0.1 | 0.1 | 0.1 | 0.1 |
| (G1) | 5 | 5 | | | 5 | 5 | 5 | 5 | 5 | 5 | 5 | 5 | 5 | 5 |
| (G2) | | | 5 | 5 | | | | | | | | | | |
| (G5) | | | | | | | | | 2 | | | | | |
| (H1) | | | | | | | | | 1 | | | | | |

(continued)

| Comparative polymerizable liquid crystal composition<br>Compound | (1) | (2) | (3) | (4) | (5) | (6) | (7) | (8) | (9) | (10) | (11) | (12) | (13) | (14) |
|---|---|---|---|---|---|---|---|---|---|---|---|---|---|---|
| (I1) | 0.1 | 0.1 | 0.1 | 0.1 | 0.1 | 0.1 | 0.2 | 0.2 | | | 0.1 | 0.2 | 0.1 | 0.2 |
| (I3) | | | | | | | | | 0.2 | 0.2 | | | | |

[Table 4]

| Comparative polymerizable liquid crystal composition Compound | (15) | (16) | (17) | (18) | (19) | (20) |
|---|---|---|---|---|---|---|
| (A1) | 4 | 3 | 4 | | | |
| (A2) | 4 | | | | | |
| (A3) | | 3 | | | 10 | |
| (A6) | | | | 3 | | |
| (A10) | | | | | 5 | |
| (A11) | | | | | | 5 |
| (B1) | 60 | | | | 62 | |
| (B2) | 14 | 87 | | | | |
| (B3) | 18 | | | | | |
| (B5) | | | | | | 50 |
| (B6) | | | | | | 40 |
| (B7) | | | 88 | 89 | | |
| (B8) | | | | | 23 | |
| (C1) | | 7 | | | | |
| (C2) | | | 8 | 5 | | |
| (C3) | | | | 3 | | |
| (C5) | | | | | | 5 |
| (D1) | 300 | 300 | 300 | 300 | 300 | 300 |
| (E1) | 0.1 | 0.1 | 0.1 | 0.1 | 0.1 | 0.1 |
| (G1) | 5 | 5 | 5 | 5 | 5 | 3 |
| (G4) | | | | | | 5 |
| (I1) | 0.2 | 0.2 | | | | |
| (I3) | | | 0.2 | 0.2 | | |
| (I4) | | | | | 0.2 | |

(Preparation of photo-alignment agent composition 1 for retardation film)

A compound (monomer) represented by the following Formula (J) was synthesized in the same manner as the method disclosed in Example 1 and Example 2 of JP-A-2013-33248.

[Chem. 68]

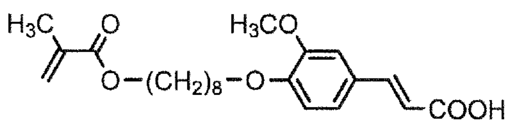

(J)

2. 0 g of a monomer (J), 16.8 mg of azobisisobutyronitrile, and 20.2 mL of tetrahydrofuran were mixed in a flask and stirred for 8 hours at a temperature of 60°C under nitrogen atmosphere. Then, hexane in the amount of 5 times the amount of the used monomer (5 mL per 1 g of a monomer) was added thereto to precipitate the reacted mixture, and a supernatant liquid was removed by decantation. The reacted mixture was dissolved again in tetrahydrofuran in the amount of 3 times the amount of the used monomer (3 mL per 1 g of a monomer), hexane in the amount of 5 times the

amount of the used monomer (5 mL per 1 g of a monomer) was added thereto to precipitate the reacted mixture, and a supernatant liquid was removed by decantation. After the operation of redissolving in tetrahydrofuran, precipitating by hexane, and decantation in this order was further performed 3 times, the obtained reacted mixture was depressurized and dried at a temperature of 20°C under the light being shielded to obtain 1.71 g of a polymer represented by the following Formula (K).

[Chem. 69]

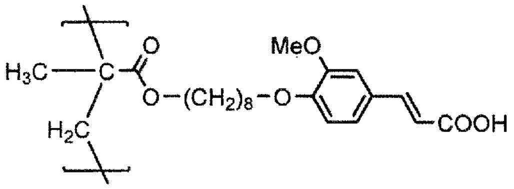

(K)

The weight average molecular weight Mw of the polymer of Formula (K) was 50,352. A mixture of 2 parts by mass of the photo-alignment agent (K) and 98 parts by mass of PGME was stirred for 10 minutes at room temperature. Each polymer solution obtained by uniformly dissolving the polymer in the respective solvents was filtrated using a 1 μm membrane filter to obtain a photo-alignment agent composition for a retardation film 1.

(Preparation of photo-alignment agent composition for a retardation film 2)

A photo-alignment agent composition for a retardation film 2 was prepared according to the method disclosed in Synthesis Examples 1 to 5 of WO 2012/053290. That is, 100.0 g of 2-(3,4-epoxycyclohexyl)ethyl trimethoxysilane (ECETS), 500 g of methyl isobutyl ketone, and 10.0 g of triethylamine were put into a reactor vessel equipped with a stirrer, a thermometer, a dropping funnel, and a reflux condenser and mixed to each other at room temperature. Subsequently, 100 g of deionized water was added dropwise thereto for 30 minutes by a dropping funnel and then the resultant was reacted to each other for 6 hours at a temperature of 80°C while being mixed to each other under reflux. After the reaction was completed, an organic layer was taken out, the resultant was washed until water after being washed with 0.2% by mass of an ammonium nitrate aqueous solution becomes neutralized, and then the solvent and water were removed by distillation under reduced pressure to obtain polyorganosiloxane having an epoxy group as a viscous transparent liquid. The weight average molecular weight Mw of the obtained polyorganosiloxane having an epoxy group was 2,200 and an epoxy equivalent was 186 g/mol.

Subsequently, the entire synthesis reactions of the specific cinnamic acid derivatives were performed under inert atmosphere. 20 g of 4-bromodiphenyl ether, 0.18 g of palladium acetate, 0.98 g of tris(2-tolyl)phosphine, 32.4 g of triethylamine, and 135 mL of dimethylacetamide were mixed in a 500 mL three-necked flask equipped with a cooling tube. Next, acrylic acid was added to 7 g of a mixed solution by a syringe and stirred. This mixed solution was further heated for 3 hours at a temperature of 120°C and stirred. After the completion of the reaction was confirmed by TLC (Thin Layer Chromatography), the reacted solution was cooled down to room temperature. After the precipitate was filtrated, the filtrate was poured into 300 mL of 1N hydrochloric acid aqueous solution to collect the precipitate. This precipitate was crystallized again in a solution of ethyl acetate and hexane (1:1 by mass ratio) to obtain 8.4 g of a compound represented by the following Formula (L) (specific cinnamic acid derivatives).

[Chem. 70]

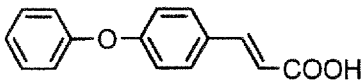

(L)

Further, 9.3 g of polyorganosiloxane having an epoxy group, 26 g of methyl isobutyl ketone, 3 g of specific cinnamic acid derivatives (L), and 0.10 g of quaternary amine salts (San-Apro Ltd., UCAT 18X) were put into a 100 mL three-necked flask, and stirred for 12 hours at a temperature of 80°C. After the reaction was completed, the resultant was precipitated again by methanol, and the precipitate was dissolved in ethyl acetate to obtain a solution. After this solution was washed 3 times, the solvent was removed by distillation to obtain 6.3 g of photo-aligning polyorganosiloxane (M) as a white powder. The weight average molecular weight Mw of the photo-aligning polyorganosiloxane (M) was 3,500.

In addition, 19.61 g of cyclobutane tetracarboxylic acid dianhydride (0.1 mol) and 21.23 g of 4,4'-diamino-2,2'-dimethyl biphenyl (0.1 mol) were dissolved in 367.6 g of NMP and reacted to each other for 6 hours at room temperature.

Subsequently, the reacted mixture was poured into a largely excessive methanol to cause a reacted product to be precipitated. The precipitate was washed with methanol and dried for 15 hours at a temperature of 40°C under reduced pressure to obtain 35 g of polyamic acid.

A solution containing polyamic acid was taken in the amount corresponding to 1,000 parts by mass in terms of polyamic acid contained in this solution, 100 parts by mass of photo-aligning polyorganosiloxane (M) was added thereto, and further NMP and ethylene glycol monobutyl ether (EGMB) were mixed therein to obtain a solution of which a solvent composition is NMP: EGMB=50: 50 (mass ratio), and a solid content is 4.0% by mass. This solution was filtrated by a membrane filter having a pore diameter of 1 μm to obtain a photo-alignment agent composition for a retardation film 2.

(Preparation of photo-alignment agent composition for a retardation film 3)

A photo-alignment agent composition for a retardation film 3 was prepared according to the other method disclosed in Synthesis Example 1 of WO 2011/126021. That is, 17.5 g of cyclohexanone was added to 0.46 g of 4-(6-hydroxyhexyloxy)cinnamic acid methyl ester, 1.37 g of a methoxylated methylolmelamine formaldehyde resin (Mn:511), 0.55 g of hexamethoxymethyl melamine, and 0.02 g of p-toluenesulfonic acid monohydrate to prepare a solution. This solution was filtrated by a membrane filter having a pore diameter of 1 μm to obtain a photo-alignment agent composition for a retardation film 3.

(Examples 1 to 4)

After a color filter layer (4) was attached to a first optically transparent substrate (3), a horizontal alignment film (6) was formed and a rubbing treatment was weakly performed. The polymerizable liquid crystal composition 1 was applied on the horizontal alignment film (6) which has been rubbed by a spin coater, dried for 2 minutes at a temperature of 80°C, and cooled at room temperature, and then the composition was irradiated with an ultraviolet ray of 500 mJ/$cm^2$ using a high pressure mercury lamp to fabricate a first retardation film (7) of a positive A plate. The polymerizable liquid crystal composition 2 was applied to this retardation film by a spin coater, dried for 2 minutes at a temperature of 80°C, and cooled at room temperature, and then the composition was irradiated with an ultraviolet ray of 500 mJ/$cm^2$ using a high pressure mercury lamp to fabricate a second retardation film (8) of a negative C plate. A transparent electrode layer (9) was vapor-deposited on the first retardation film (7) and the second retardation film (8) to form an alignment film (10). After a pixel electrode layer (13) was attached to a second optically transparent substrate (14) to form an alignment film (12) and then a rubbing treatment was weakly performed. The following liquid crystal composition 1 was injected to a liquid crystal layer (11) between the alignment film layers (10) and (12) to fabricate a liquid crystal display device of a VA mode of Example 1. Fig. 11 illustrates a liquid crystal display device of Example 1.

In addition, liquid crystal display devices of Examples 2 to 4 were fabricated in the same manner as in Example 1 except that the polymerizable liquid crystal composition shown below was used.

The VHR and ID of the obtained liquid crystal display device were measured. Also, the burn-in of the obtained liquid crystal display devices was evaluated. The results are shown in the following tables.

[Table 5]

| Liquid crystal composition 1 | |
|---|---|
| $T_{NI}$/°C | 81.0 |
| $\Delta n$ | 0.103 |
| $\Delta\varepsilon$ | -2.9 |
| $\eta$/mPa·s | 20.3 |
| $\gamma_1$/mPa·s | 112 |
| $\gamma_1/\Delta n^2 \times 10^{-2}$ | 105 |
| 3-Cy-Cy-2 | 24% |
| 3-Cy-Cy-4 | 10% |
| 3-Cy-Cy-5 | 5% |
| 3-Cy-Ph-O1 | 2% |
| 3-Cy-Ph5-O2 | 13% |
| 2-Cy-Ph-Ph5-O2 | 9% |

(continued)

| Liquid crystal composition 1 | |
|---|---|
| 3-Cy-Ph-Ph5-O2 | 9% |
| 3-Cy-Cy-Ph5-O3 | 5% |
| 4-Cy-Cy-Ph5-O2 | 6% |
| 5-Cy-Cy-Ph5-O2 | 5% |
| 3-Ph-Ph5-Ph-2 | 6% |
| 4-Ph-Ph5-Ph-2 | 6% |

[Table 6]

| | Example 1 | Example 2 | Example 3 | Example 4 |
|---|---|---|---|---|
| Liquid crystal composition | Liquid crystal composition 1 | Liquid crystal composition 1 | Liquid crystal composition 1 | Liquid crystal composition 1 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.3 | 99.5 | 99.2 | 99.0 |
| ID | 37 | 20 | 46 | 66 |
| Burn-in | A | A | A | A |

It is understood that the liquid crystal composition 1 has a liquid crystal layer temperature range of 81°C, which is practical as a liquid crystal composition for a TV, a large absolute value of dielectric anisotropy, and low viscosity and optimal $\Delta n$.

In the liquid crystal display devices of Examples 1 to 4, the high VHR and low ID were realized. Also, it is not recognized that a residual image was generated even in the evaluation of burn-in.

(Examples 5 to 12)

Liquid crystal display devices of Examples 5 to 12 were fabricated in the same manner as in Example 1 except that the liquid crystal composition and the polymerizable liquid crystal composition shown below were used, and the VHR and ID were measured. Also, the burn-in of the obtained liquid crystal display devices was evaluated. The results are shown in the following tables.

[Table 7]

| Liquid crystal composition 2 | | | Liquid crystal composition 3 | |
|---|---|---|---|---|
| $T_{NI}$/°C | 76.0 | | $T_{NI}$/°C | 84.8 |
| $\Delta n$ | 0.103 | | $\Delta n$ | 0.103 |
| $\Delta\varepsilon$ | -2.9 | | $\Delta\varepsilon$ | -2.9 |
| $\eta$/mPa·s | 19.8 | | $\eta$/mPa·s | 21.4 |
| $\gamma_1$/mPa·s | 110 | | $\gamma_1$/mPa·s | 119 |
| $\gamma_1/\Delta n^2 \times 10^{-2}$ | 103 | | $\gamma_1/\Delta n^2 \times 10^{-2}$ | 112 |

(continued)

| Liquid crystal composition 2 | | Liquid crystal composition 3 | |
|---|---|---|---|
| 3-Cy-Cy-2 | 24% | 3-Cy-Cy-2 | 24% |
| 3-Cy-Cy-4 | 10% | 3-Cy-Cy-4 | 11% |
| 3-Cy-Ph-O1 | 7% | 3-Cy-Ph5-O2 | 12% |
| 3-Cy-Ph5-O2 | 14% | 2-Cy-Ph-Ph5-O2 | 5% |
| 2-Cy-Ph-Ph5-O2 | 7% | 3-Cy-Ph-Ph5-O2 | 6% |
| 3-Cy-Ph-Ph5-O2 | 9% | 3-Cy-Cy-Ph5-O3 | 8% |
| 3-Cy-Cy-Ph5-O3 | 5% | 4-Cy-Cy-Ph5-O2 | 8% |
| 4-Cy-Cy-Ph5-O2 | 7% | 5-Cy-Cy-Ph5-O2 | 8% |
| 5-Cy-Cy-Ph5-O2 | 5% | 3-Ph-Ph5-Ph-2 | 6% |
| 3-Ph-Ph5-Ph-2 | 6% | 4-Ph-Ph5-Ph-2 | 6% |
| 4-Ph-Ph5-Ph-2 | 6% | 5-Ph-Ph-1 | 3% |
| | | 3-Cy-Cy-Ph-1 | 3% |

[Table 8]

| | Example 5 | Example 6 | Example 7 | Example 8 |
|---|---|---|---|---|
| Liquid crystal composition | Liquid crystal composition 2 | Liquid crystal composition 2 | Liquid crystal composition 2 | Liquid crystal composition 2 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.5 | 99.6 | 99.3 | 99.1 |
| ID | 25 | 19 | 42 | 66 |
| Burn-in | A | A | A | B |

[Table 9]

| | Example 9 | Example 10 | Example 11 | Example 12 |
|---|---|---|---|---|
| Liquid crystal composition | Liquid crystal composition 3 | Liquid crystal composition 3 | Liquid crystal composition 3 | Liquid crystal composition 3 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.4 | 99.6 | 99.2 | 99.0 |
| ID | 33 | 24 | 45 | 68 |

(continued)

| | Example 9 | Example 10 | Example 11 | Example 12 |
|---|---|---|---|---|
| Burn-in | A | A | A | B |

In the liquid crystal display devices of Examples 5 to 12, the high VHR and low ID were realized. Also, the residual image was not generated even in the evaluation of burn-in or, the residual image was generated extremely less, which was an acceptable level, even if the residual image was generated.

(Examples 13 to 24)

Liquid crystal display devices of Examples 13 to 24 were fabricated in the same manner as in Example 1 except that the liquid crystal composition and the polymerizable liquid crystal composition shown below were used, and the VHR and ID were measured. Also, the burn-in of the obtained liquid crystal display devices was evaluated. The results are shown in the following tables.

[Table 10]

| Liquid crystal composition 4 | | liquid crystal composition 5 | | Liquid crystal composition 6 | |
|---|---|---|---|---|---|
| $T_{NI}$/°C | 74.9 | $T_{NI}$/°C | 80.2 | $T_{NI}$/°C | 85.7 |
| $\Delta n$ | 0.102 | $\Delta n$ | 0.105 | $\Delta n$ | 0.104 |
| $\Delta\varepsilon$ | -2.9 | $\Delta\varepsilon$ | -2.9 | $\Delta\varepsilon$ | -3.0 |
| $\eta$/mPa·s | 21.1 | $\eta$/mPa·s | 22.7 | $\eta$/mPa·s | 22.9 |
| $\gamma_1$/mPa·s | 116 | $\gamma_1$/mPa·s | 124 | $\gamma_1$/mPa·s | 126 |
| $\gamma_1/\Delta n^2 \times 10^{-2}$ | 111 | $\gamma_1/\Delta n^2 \times 10^{-2}$ | 112 | $\gamma_1/\Delta n^2 \times 10^{-2}$ | 116 |
| 3-Cy-Cy-2 | 22% | 3-Cy-Cy-2 | 20% | 3-Cy-Cy-2 | 20% |
| 3-Cy-Cy-4 | 11% | 3-Cy-Cy-4 | 10% | 3-Cy-Cy-4 | 10% |
| 3-Cy-Ph5-O2 | 7% | 3-Cy-Ph5-O2 | 7% | 3-Cy-Ph5-O2 | 7% |
| 3-Cy-Ph5-O4 | 8% | 3-Cy-Ph5-O4 | 7% | 3-Cy-Ph5-O4 | 7% |
| 2-Cy-Ph-Ph5-O2 | 6% | 2-Cy-Ph-Ph5-O2 | 6% | 2-Cy-Ph-Ph5-O2 | 6% |
| 3-Cy-Ph-Ph5-O2 | 7% | 3-Cy-Ph-Ph5-O2 | 7% | 3-Cy-Ph-Ph5-O2 | 7% |
| 3-Cy-Cy-Ph5-O3 | 7% | 3-Cy-Cy-Ph5-O3 | 7% | 3-Cy-Cy-Ph5-O3 | 7% |
| 4-Cy-Cy-Ph5-O2 | 7% | 4-Cy-Cy-Ph5-O2 | 8% | 4-Cy-Cy-Ph5-O2 | 8% |
| 5-Cy-Cy-Ph5-O2 | 7% | 5-Cy-Cy-Ph5-O2 | 7% | 5-Cy-Cy-Ph5-O2 | 7% |
| 3-Ph-Ph5-Ph-2 | 4% | 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% | 4-Ph-Ph5-Ph-2 | 4% |
| 5-Ph-Ph-1 | 8% | 5-Ph-Ph-1 | 8% | 5-Ph-Ph-1 | 5% |
| 3-Cy-Cy-Ph-1 | 2% | 3-Cy-Cy-Ph-1 | 5% | 3-Cy-Cy-Ph-1 | 8% |

[Table 11]

| | Example 13 | Example 14 | Example 15 | Example 16 |
|---|---|---|---|---|
| Liquid crystal composition | Liquid crystal composition 4 | Liquid crystal composition 4 | Liquid crystal composition 4 | Liquid crystal composition 4 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |

(continued)

| | Example 13 | Example 14 | Example 15 | Example 16 |
|---|---|---|---|---|
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.4 | 99.5 | 99.3 | 99.1 |
| ID | 34 | 26 | 39 | 57 |
| Burn-in | A | A | A | A |

[Table 12]

| | Example 17 | Example 18 | Example 19 | Example 20 |
|---|---|---|---|---|
| Liquid crystal composition | Liquid crystal composition 5 | Liquid crystal composition 5 | Liquid crystal composition 5 | Liquid crystal composition 5 |
| Polymerizable liquid crystal composition of the first retardation film | Polymerizable liquid crystal composition 1 | Poly merizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.3 | 99.4 | 99.1 | 89.9 |
| ID | 35 | 28 | 50 | 72 |
| Burn-in | A | A | A | B |

[Table 13]

| | Example 21 | Example 22 | Example 23 | Example 24 |
|---|---|---|---|---|
| Liquid crystal composition | Liquid crystal composition 6 | Liquid crystal composition 6 | Liquid crystal composition 6 | Liquid crystal composition 6 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.6 | 99.2 | 99.4 | 99.0 |
| ID | 18 | 48 | 26 | 65 |
| Burn-in | A | A | A | B |

In the liquid crystal display devices of Examples 13 to 24, the high VHR and low ID were realized. Also, the residual image was not generated even in the evaluation of burn-in or the residual image was generated extremely less, which was an acceptable level, even if the residual image was generated.

(Examples 25 to 36)

Liquid crystal display devices of Examples 25 to 36 were fabricated in the same manner as in Example 1 except that the liquid crystal composition and the polymerizable liquid crystal composition shown below were used, and the VHR and ID were measured. Also, the burn-in of the obtained liquid crystal display devices was evaluated. The results are shown in the following tables.

[Table 14]

| Liquid crystal composition 7 | | Liquid crystal composition 8 | | Liquid crystal composition 9 | |
|---|---|---|---|---|---|
| $T_{NI}$ / °C | 75.1 | $T_{NI}$ / °C | 80.4 | $T_{NI}$ / °C | 85.1 |
| $\Delta n$ | 0.103 | $\Delta n$ | 0.103 | $\Delta n$ | 0.103 |
| $\Delta\varepsilon$ | -2.6 | $\Delta\varepsilon$ | -2.6 | $\Delta\varepsilon$ | -2.6 |
| $\eta$ / mPa·s | 20.5 | $\eta$ / mPa·s | 21.6 | $\eta$ / mPa·s | 22.7 |
| $\gamma_1$ / mPa·s | 117 | $\gamma_1$ / mPa·s | 125 | $\gamma_1$ / mPa·s | 130 |
| $\gamma_1 / \Delta n^2 \times 10^{-2}$ | 110 | $\gamma_1 / \Delta n^2 \times 10^{-2}$ | 117 | $\gamma_1 / \Delta n^2 \times 10^{-2}$ | 122 |
| 3-Cy-Cy-2 | 15% | 3-Cy-Cy-2 | 15% | 3-Cy-Cy-2 | 10% |
| 3-Cy-Cy-4 | 12% | 3-Cy-Cy-4 | 12% | 3-Cy-Cy-4 | 15% |
| 3-Cy-Cy-5 | 7% | 3-Cy-Cy-5 | 7% | 3-Cy-Cy-5 | 12% |
| 3-Cy-Ph-O1 | 12% | 3-Cy-Ph-O1 | 12% | 3-Cy-Ph-O1 | 9% |
| 3-Cy-Ph5-O2 | 6% | 3-Cy-Ph5-O2 | 5% | 3-Cy-Ph5-O2 | 5% |
| 3-Cy-Ph5-O4 | 7% | 3-Cy-Ph5-O4 | 5% | 3-Cy-Ph5-O4 | 5% |
| 2-Cy-Ph-Ph5-O2 | 11% | 2-Cy-Ph-Ph5-O2 | 11% | 2-Cy-Ph-Ph5-O2 | 11 % |
| 3-Cy-Ph-Ph5-O2 | 12% | 3-Cy-Ph-Ph5-O2 | 11% | 3-Cy-Ph-Ph5-O2 | 11% |
| 3-Cy-Cy-Ph5-O3 | 3% | 3-Cy-Cy-Ph5-O3 | 4% | 3-Cy-Cy-Ph5-O3 | 4% |
| 4-Cy-Cy-Ph5-O2 | 4% | 4-Cy-Cy-Ph5-O2 | 6% | 4-Cy-Cy-Ph5-O2 | 6% |
| 5-Cy-Cy-Ph5-O2 | 3% | 5-Cy-Cy-Ph5-O2 | 4% | 5-Cy-Cy-Ph5-O2 | 4% |
| 3-Ph-Ph5-Ph-2 | 4% | 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% | 4-Ph-Ph5-Ph-2 | 4% |

[Table 15]

| | Example 25 | Example 26 | Example 27 | Example 28 |
|---|---|---|---|---|
| Liquid crystal composition | Liquid crystal composition 7 | Liquid crystal composition 7 | Liquid crystal composition 7 | Liquid crystal composition 7 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.7 | 99.4 | 99.5 | 99.2 |
| ID | 19 | 39 | 27 | 58 |
| Burn-in | A | A | A | A |

[Table 16]

| | Example 29 | Example 30 | Example 31 | Example 32 |
|---|---|---|---|---|
| Liquid crystal composition | Liquid crystal composition 8 | Liquid crystal composition 8 | Liquid crystal composition 8 | Liquid crystal composition 8 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.6 | 99.3 | 99.5 | 99.1 |
| ID | 17 | 43 | 24 | 61 |
| Burn-in | A | A | A | A |

[Table 17]

| | Example 33 | Example 34 | Example 35 | Example 36 |
|---|---|---|---|---|
| Liquid crystal comoosition | Liquid crystal composition 9 | Liquid crystal composition 9 | Liquid crystal composition 9 | Liquid crystal composition 9 |
| Polymerizable liquid crystal composition of the first retardation film | Polymerizable liquid crystal composition 6 | Poly merizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.5 | 99.3 | 99.5 | 99.1 |
| ID | 22 | 48 | 28 | 67 |
| Burn-in | A | A | A | B |

In the liquid crystal display devices of Examples 25 to 36, the high VHR and low ID were realized. Also, the residual image was not generated even in the evaluation of burn-in or the residual image was generated extremely less, which was an acceptable level, even if the residual image was generated.

(Examples 37 to 48)

Liquid crystal display devices of Examples 37 to 48 were fabricated in the same manner as in Example 1 except that the liquid crystal composition and the polymerizable liquid crystal composition shown below were used, and the VHR and ID were measured. Also, the burn-in of the obtained liquid crystal display devices was evaluated. The results are shown in the following tables.

[Table 18]

| Liquid crystal composition 10 | | Liquid crystal composition 11 | | Liquid crystal composition 12 | |
|---|---|---|---|---|---|
| $T_{NI}$ / °C | 76.7 | $T_{NI}$ / °C | 80.3 | $T_{NI}$ / °C | 85.8 |
| $\Delta n$ | 0.109 | $\Delta n$ | 0.105 | $\Delta n$ | 0.104 |
| $\Delta\varepsilon$ | -3.0 | $\Delta\varepsilon$ | -3.1 | $\Delta\varepsilon$ | -3.2 |

(continued)

| Liquid crystal composition 10 | | Liquid crystal composition 11 | | Liquid crystal composition 12 | |
|---|---|---|---|---|---|
| η / mPa·s | 22.4 | η / mPa·s | 21.8 | η / mPa·s | 22.0 |
| $\gamma_1$ / mPa·s | 131 | $\gamma_1$ / mPa·s | 126 | $\gamma_1$ / mPa·s | 128 |
| $\gamma_1 / \Delta n^2 \times 10^{-2}$ | 110 | $\gamma_1 / \Delta n^2 \times 10^{-2}$ | 114 | $\gamma_1 / \Delta n^2 \times 10^{-2}$ | 119 |
| 3-Cy-Cy-2 | 24% | 3-Cy-Cy-2 | 24% | 3-Cy-Cy-2 | 24% |
| 3-Cy-Cy-4 | 6% | 3-Cy-Cy-4 | 10% | 3-Cy-Cy-4 | 10% |
| 3-Cy-Ph-O1 | 5% | 3-Cy-Ph-O1 | 4% | 3-Cy-Ph-O1 | 4% |
| 3-Cy-Ph5-O4 | 6% | 3-Cy-Ph5-O4 | 6% | 3-Cy-Ph5-O4 | 6% |
| 3-Ph-Ph5-O2 | 6% | 3-Ph-Ph5-O2 | 6% | 3-Ph-Ph5-O2 | 6% |
| 2-Cy-Ph-Ph5-O2 | 8% | 2-Cy-Ph-Ph5-02 | 8% | 2-Cy-Ph-Ph5-O2 | 8% |
| 3-Cy-Ph-Ph5-O2 | 8% | 3-Cy-Ph-Ph5-O2 | 8% | 3-Cy-Ph-Ph5-O2 | 8% |
| 3-Cy-Cy-Ph5-O3 | 7% | 3-Cy-Cy-Ph5-O3 | 7% | 3-Cy-Cy-Ph5-O3 | 7% |
| 4-Cy-Cy-Ph5-O2 | 9% | 4-Cy-Cy-Ph5-O2 | 9% | 4-Cy-Cy-Ph5-O2 | 9% |
| 5-Cy-Cy-Ph5-O2 | 7% | 5-Cy-Cy-Ph5-O2 | 7% | 5-Cy-Cy-Ph5-O2 | 7% |
| 3-Ph-Ph5-Ph-2 | 4% | 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% | 4-Ph-Ph5-Ph-2 | 4% |
| 5-Ph-Ph-1 | 6% | 5-Ph-Ph-1 | 3% | 3-Cy-Cy-Ph-1 | 3% |

[Table 19]

| | Example 37 | Example 38 | Example 39 | Example 40 |
|---|---|---|---|---|
| Liquid crystal composition | Liquid crystal composition 10 | Liquid crystal composition 10 | Liquid crystal composition 10 | Liquid crystal composition 10 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.5 | 99.2 | 99.3 | 99.2 |
| ID | 21 | 52 | 34 | 70 |
| Burn-in | A | A | A | B |

[Table 20]

| | Example 41 | Example 42 | Example 43 | Example 44 |
|---|---|---|---|---|
| Liquid crystal composition | Liquid crystal composition 11 | Liquid crystal composition 11 | Liquid crystal composition 11 | Liquid crystal composition 11 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |

(continued)

| | Example 41 | Example 42 | Example 43 | Example 44 |
|---|---|---|---|---|
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 99.5 | 99.2 | 99.6 | 99.4 |
| ID | 33 | 63 | 24 | 47 |
| Burn-in | A | B | A | A |

[Table 21]

| | Example 45 | Example 46 | Example 47 | Example 48 |
|---|---|---|---|---|
| Liquid crystal composition | Liquid crystal composition 12 | Liquid crystal composition 12 | Liquid crystal composition 12 | Liquid crystal composition 12 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 99.5 | 99.3 | 99.7 | 99.4 |
| ID | 19 | 49 | 16 | 30 |
| Burn-in | A | A | A | A |

In the liquid crystal display devices of Examples 37 to 48, the high VHR and low ID were realized. Also, the residual image was not generated even in the evaluation of burn-in or the residual image was generated extremely less, which was an acceptable level, even if the residual image was generated.

(Examples 49 to 60)

Liquid crystal display devices of Examples 2 to 4 were fabricated in the same manner as in Example 1 except that the liquid crystal composition and the polymerizable liquid crystal composition shown below were used, and the VHR and ID were measured. Also, the burn-in of the obtained liquid crystal display devices was evaluated. The results are shown in the following tables.

[Table 22]

| Liquid crystal composition 13 | | Liquid crystal composition 14 | | Liquid crystal composition 15 | |
|---|---|---|---|---|---|
| $T_{NI}$ / °C | 71.9 | $T_{NI}$ / °C | 78.8 | $T_{NI}$ / °C | 73.8 |
| $\Delta n$ | 0.116 | $\Delta n$ | 0.113 | $\Delta n$ | 0.113 |
| $\Delta\varepsilon$ | -3.6 | $\Delta\varepsilon$ | -3.5 | $\Delta\varepsilon$ | -3.9 |
| $\eta$ / mPa·s | 21.2 | $\eta$ / mPa·s | 21.1 | $\eta$ / mPa·s | 21.8 |
| $\gamma_1$ / mPa·s | 123 | $\gamma_1$ / mPa·s | 122 | $\gamma_1$ / mPa·s | 123 |
| $\gamma_1 / \Delta n^2 \times 10^{-2}$ | 92 | $\gamma_1/\Delta n^2 \times 10^{-2}$ | 95 | $\gamma_1/\Delta n^2 \times 10^{-2}$ | 97 |
| 3-Cy-Cy-2 | 24% | 3-Cy-Cy-2 | 23% | 3-Cy-Cy-2 | 16% |
| 3-Cy-Ph-O1 | 7% | 3-Cy-Cy-4 | 5% | 3-Cy-Cy-4 | 9% |

(continued)

| Liquid crystal composition 13 | | Liquid crystal composition 14 | | Liquid crystal composition 15 | |
|---|---|---|---|---|---|
| 2-Cy-Ph5-O2 | 6% | 3-Cy-Ph-O1 | 3% | 3-Cy-Ph-O1 | 6% |
| 3-Cy-Ph5-O4 | 6% | 2-Cy-Ph5-O2 | 5% | 2-Cy-Ph5-O2 | 6% |
| 3-Ph-Ph5-O2 | 5% | 3-Cy-Ph5-O4 | 5% | 3-Cy-Ph5-O4 | 6% |
| 5-Ph-Ph5-O2 | 5% | 3-Ph-Ph5-O2 | 5% | 3-Ph-Ph5-O2 | 6% |
| 2-Cy-Ph-Ph5-O2 | 7% | 5-Ph-Ph5-O2 | 5% | 5-Ph-Ph5-O2 | 6% |
| 3-Cy-Ph-Ph5-O2 | 9% | 2-Cy-Ph-Ph5-O2 | 7% | 2-Cy-Ph-Ph5-O2 | 5% |
| 3-Cy-Cy-Ph5-O3 | 5% | 3-Cy-Ph-Ph5-O2 | 7% | 3-Cy-Ph-Ph5-O2 | 7% |
| 4-Cy-Cy-Ph5-O2 | 5% | 3-Cy-Cy-Ph5-O3 | 5% | 3-Cy-Cy-Ph5-O3 | 5% |
| 5-Cy-Cy-Ph5-O2 | 4% | 4-Cy-Cy-Ph5-O2 | 6% | 4-Cy-Cy-Ph5-O2 | 6% |
| 3-Ph-Ph5-Ph-2 | 5% | 5-Cy-Cy-Ph5-O2 | 5% | 5-Cy-Cy-Ph5-O2 | 6% |
| 4-Ph-Ph5-Ph-2 | 6% | 3-Ph-Ph5-Ph-2 | 5% | 3-Ph-Ph5-Ph-2 | 5% |
| 3-Cy-Cy-Ph-1 | 6% | 4-Ph-Ph5-Ph-2 | 6% | 4-Ph-Ph5-Ph-2 | 5% |
| | | 3-Cy-Cy-Ph-1 | 8% | 3-Cy-Cy-Ph-1 | 6% |

[Table 23]

| | Example 49 | Example 50 | Example 51 | Example 52 |
|---|---|---|---|---|
| Liquid crystal composition | Liquid crystal composition 13 | Liquid crystal composition 13 | Liquid crystal composition 13 | Liquid crystal composition 13 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid composition of the second retardation film | crystal Polymerizable liquid crystal composition 21 | Polymerizable liquid crystal composition 16 | Polymerizable liquid crystal composition 17 | Polymerizable liquid crystal composition 18 |
| VHR | 99.4 | 99.1 | 99.6 | 99.3 |
| ID | 38 | 64 | 21 | 45 |
| Burn-in | A | A | A | A |

[Table 24]

| | Example 53 | Example 54 | Example 55 | Example 56 |
|---|---|---|---|---|
| Liquid crystal composition | Liquid crystal composition 14 | Liquid crystal composition 14 | Liquid crystal composition 14 | Liquid crystal composition 14 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 99.4 | 99.0 | 99.5 | 99.2 |

(continued)

| | Example 53 | Example 54 | Example 55 | Example 56 |
|---|---|---|---|---|
| ID | 35 | 66 | 23 | 48 |
| Burn-in | A | B | A | A |

[Table 25]

| | Example 57 | Example 58 | Example 59 | Example 60 |
|---|---|---|---|---|
| Liquid crystal composition | Liquid crystal composition 15 | Liquid crystal composition 15 | Liquid crystal composition 15 | Liquid crystal composition 15 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 99.3 | 99.0 | 99.5 | 99.1 |
| ID | 41 | 72 | 29 | 58 |
| Burn-in | A | A | A | A |

In the liquid crystal display devices of Examples 49 to 60, the high VHR and low ID were realized. Also, the residual image was not generated even in the evaluation of burn-in or the residual image was generated extremely less, which was an acceptable level, even if the residual image was generated.

(Examples 61 to 72)

Liquid crystal display devices of Examples 61 to 72 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 26]

| Liquid crystal composition 16 | | Liquid crystal composition 17 | | Liquid crystal composition 18 | |
|---|---|---|---|---|---|
| $T_{NI}$ / °C | 75.9 | $T_{NI}$ / °C | 82.3 | $T_{NI}$ / °C | 85.7 |
| $\Delta n$ | 0.112 | $\Delta n$ | 0.111 | $\Delta n$ | 0.112 |
| $\Delta\varepsilon$ | -2.8 | $\Delta\varepsilon$ | -2.7 | $\Delta\varepsilon$ | -2.8 |
| $\eta$ / mPa·s | 19.8 | $\eta$ / mPa·s | 19.2 | $\eta$ / mPa·s | 20.1 |
| $\gamma_1$ / mPa·s | 121 | $\gamma_1$ / mPa·s | 114 | $\gamma_1$ / mPa·s | 119 |
| $\gamma_1 / \Delta n^2 \times 10^{-2}$ | 96 | $\gamma_1 / \Delta n^2 \times 10^{-2}$ | 94 | $\gamma_1 / \Delta n^2 \times 10^{-2}$ | 95 |
| 3-Cy-Cy-2 | 19% | 3-Cy-Cy-2 | 21% | 3-Cy-Cy-2 | 19% |
| 3-Cy-Cy-4 | 12% | 3-Cy-Cy-4 | 12% | 3-Cy-Cy-4 | 12% |
| 3-Cy-Cy-5 | 5% | 3-Cy-Cy-5 | 5% | 3-Cy-Cy-5 | 4% |
| 3-Cy-Ph-O1 | 5% | 2-Cy-Ph5-O2 | 4% | 2-Cy-Ph5-O2 | 4% |
| 2-Cy-Ph5-O2 | 4% | 3-Cy-Ph5-O4 | 4% | 3-Cy-Ph5-O4 | 4% |
| 3-Cy-Ph5-O4 | 4% | 3-Ph-Ph5-O2 | 3% | 3-Ph-Ph5-O2 | 3% |

(continued)

| Liquid crystal composition 16 | | Liquid crystal composition 17 | | Liquid crystal composition 18 | |
|---|---|---|---|---|---|
| 3-Ph-Ph5-O2 | 3% | 5-Ph-Ph5-O2 | 4% | 5-Ph-Ph5-O2 | 4% |
| 5-Ph-Ph5-O2 | 4% | 2-Cy-Ph-Ph5-O2 | 6% | 2-Cy-Ph-Ph5-O2 | 6% |
| 2-Cy-Ph-Ph5-O2 | 6% | 3-Cy-Ph-Ph5-O2 | 6% | 3-Cy-Ph-Ph5-O2 | 6% |
| 3-Cy-Ph-Ph5-O2 | 6% | 3-Cy-Cy-Ph5-O3 | 5% | 3-Cy-Cy-Ph5-O3 | 5% |
| 3-Cy-Cy-Ph5-O3 | 5% | 4-Cy-Cy-Ph5-O2 | 5% | 4-Cy-Cy-Ph5-O2 | 5% |
| 4-Cy-Cy-Ph5-O2 | 5% | 5-Cy-Cy-Ph5-O2 | 4% | 5-Cy-Cy-Ph5-O2 | 4% |
| 5-Cy-Cy-Ph5-O2 | 5% | 3-Ph-Ph5-Ph-2 | 7% | 3-Ph-Ph5-Ph-2 | 7% |
| 3-Ph-Ph5-Ph-2 | 8% | 4-Ph-Ph5-Ph-2 | 8% | 4-Ph-Ph5-Ph-2 | 8% |
| 4-Ph-Ph5-Ph-2 | 9% | 3-Cy-Cy-Ph-1 | 6% | 3-Cy-Cy-Ph-1 | 9% |

[Table 27]

| | Example 61 | Example 62 | Example 63 | Example 64 |
|---|---|---|---|---|
| Liquid crystal composition | Liquid crystal composition 16 | Liquid crystal composition 16 | Liquid crystal composition 16 | Liquid crystal composition 16 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.3 | 99.1 | 99.5 | 99.4 |
| ID | 59 | 77 | 28 | 47 |
| Burn-in | A | B | A | A |

[Table 28]

| | Example 65 | Example 66 | Example 67 | Example 68 |
|---|---|---|---|---|
| Liquid crystal composition | Liquid crystal composition 17 | Liquid crystal composition 17 | Liquid crystal composition 17 | Liquid crystal composition 17 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.3 | 99.0 | 99.4 | 99.3 |
| ID | 52 | 78 | 34 | 46 |
| Burn-in | B | B | A | A |

[Table 29]

| | Example 69 | Example 70 | Example 71 | Example 72 |
|---|---|---|---|---|
| Liquid crystal composition | Liquid crystal composition 18 | Liquid crystal composition 18 | Liquid crystal composition 18 | Liquid crystal composition 18 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.2 | 99.1 | 99.5 | 99.3 |
| ID | 49 | 65 | 28 | 40 |
| Burn-in | A | A | A | A |

In the liquid crystal display devices of Examples 61 to 72, the high VHR and low ID were realized. Also, the residual image was not generated even in the evaluation of burn-in or the residual image was generated extremely less, which was an acceptable level, even if the residual image was generated.

(Examples 73 to 84)

Liquid crystal display devices of Examples 73 to 84 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 30]

| Liquid crystal composition 19 | | Liquid crystal composition 20 | | Liquid crystal composition 21 | |
|---|---|---|---|---|---|
| $T_{NI}$ / °C | 77.1 | $T_{NI}$ / °C | 82.7 | $T_{NI}$ / °C | 86.4 |
| $\Delta n$ | 0.104 | $\Delta n$ | 0.107 | $\Delta n$ | 0.106 |
| $\Delta\varepsilon$ | -3.5 | $\Delta\varepsilon$ | -3.0 | $\Delta\varepsilon$ | -3.0 |
| $\eta$ / mPa·s | 25.1 | $\eta$ / mPa·s | 24.2 | $\eta$ / mPa·s | 24.4 |
| $\gamma_1$ / mPa·s | 141 | $\gamma_1$ / mPa·s | 141 | $\gamma_1$ / mPa·s | 142 |
| $\gamma_1 / \Delta n^2 \times 10.^{2}$ | 131 | $\gamma_1 / \Delta n^2 \times 10^{-2}$ | 123 | $\gamma_1 / \Delta n^2 \times 10^{-2}$ | 126 |
| 3-Cy-Cy-2 | 22% | 3-Cy-Cy-2 | 24% | 3-Cy-Cy-2 | 24% |
| 3-Cy-Ph-O1 | 14% | 3-Cy-Cy-4 | 5% | 3-Cy-Cy-4 | 5% |
| 2-Cy-Ph5-O2 | 7% | 3-Cy-Ph-O1 | 6% | 3-Cy-Ph-O1 | 6% |
| 3-Cy-Ph5-O4 | 8% | 2-Cy-Ph5-O2 | 5% | 2-Cy-Ph5-O2 | 5% |
| 2-Cy-Ph-Ph5-O2 | 7% | 3-Cy-Ph5-O4 | 5% | 3-Cy-Ph5-O4 | 5% |
| 3-Cy-Ph-Ph5-O2 | 9% | 2-Cy-Ph-Ph5-O2 | 7% | 2-Cy-Ph-Ph5-O2 | 7% |
| 3-Cy-Cy-Ph5-O3 | 8% | 3-Cy-Ph-Ph5-O2 | 9% | 3-Cy-Ph-Ph5-O2 | 9% |
| 4-Cy-Cy-Ph5-O2 | 8% | 3-Cy-Cy-Ph5-O3 | 8% | 3-Cy-Cy-Ph5-O3 | 8% |
| 5-Cy-Cy-Ph5-O2 | 8% | 4-Cy-Cy-Ph5-O2 | 8% | 4-Cy-Cy-Ph5-O2 | 8% |
| 3-Ph-Ph5-Ph-2 | 5% | 5-Cy-Cy-Ph5-O2 | 8% | 5-Cy-Cy-Ph5-O2 | 8% |
| 4-Ph-Ph5-Ph-2 | 4% | 3-Ph-Ph5-Ph-2 | 5% | 3-Ph-Ph5-Ph-2 | 5% |

(continued)

| Liquid crystal composition 19 | | Liquid crystal composition 20 | | Liquid crystal composition 21 | |
|---|---|---|---|---|---|
| | | 4-Ph-Ph5-Ph-2 | 5% | 4-Ph-Ph5-Ph-2 | 5% |
| | | 5-Ph-Ph-1 | 5% | 5-Ph-Ph-1 | 3% |
| | | | | 3-Cy-Cy-Ph-1 | 2% |

[Table 31]

| | Example 73 | Example 74 | Example 75 | Example 76 |
|---|---|---|---|---|
| Liquid crystal composition | Liquid crystal composition 19 | Liquid crystal composition 19 | Liquid crystal composition 19 | Liquid crystal composition 19 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.3 | 99.2 | 99.6 | 99.4 |
| ID | 47 | 60 | 19 | 33 |
| Burn-in | A | A | A | A |

[Table 32]

| | Example 77 | Example 78 | Example 79 | Example 80 |
|---|---|---|---|---|
| Liquid crystal composition | Liquid crystal composition 20 | Liquid crystal composition 20 | Liquid crystal composition 20 | Liquid crystal composition 20 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.4 | 99.2 | 99.7 | 99.6 |
| ID | 39 | 57 | 16 | 21 |
| Burn-in | A | A | A | A |

[Table 33]

| | Example 81 | Example 82 | Example 83 | Example 84 |
|---|---|---|---|---|
| Liquid crystal composition | Liquid crystal composition 21 | Liquid crystal composition 21 | Liquid crystal composition 21 | Liquid crystal composition 21 |
| Polymerizable liquid crystal composition of the first retardation film | polymerizable liquid crystal composition 22 | Polymerizable liquid crystal composition 14 | Polymerizable liquid crystal composition 15 | Polymerizable liquid crystal composition 24 |

(continued)

| | Example 81 | Example 82 | Example 83 | Example 84 |
|---|---|---|---|---|
| Polymerizable liquid crystal composition of the second retardation film | Polymerizable liquid crystal composition 21 | Polymerizable liquid crystal composition 23 | Polymerizable liquid crystal composition 11 | Polymerizable liquid crystal composition 16 |
| VHR | 99.4 | 99.3 | 99.4 | 99.1 |
| ID | 31 | 57 | 38 | 66 |
| Burn-in | A | B | A | B |

In the liquid crystal display devices of Examples 73 to 84, the high VHR and low ID were realized. Also, the residual image was not generated even in the evaluation of burn-in or the residual image was generated extremely less, which was an acceptable level, even if the residual image was generated.

(Examples 85 to 96)

Liquid crystal display devices of Examples 85 to 96 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 34]

| Liquid crystal composition 22 | | Liquid crystal composition 23 | | Liquid crystal composition 24 | |
|---|---|---|---|---|---|
| $T_{NI}$ / °C | 75.5 | $T_{NI}$ / °C | 80.3 | $T_{NI}$ / °C | 85.0 |
| $\Delta n$ | 0.102 | $\Delta n$ | 0.101 | $\Delta n$ | 0.102 |
| $\Delta\varepsilon$ | -2.8 | $\Delta\varepsilon$ | -2.9 | $\Delta\varepsilon$ | -3.0 |
| $\eta$ / mPa·s | 22.2 | $\eta$ / mPa·s | 22.0 | $\eta$ / mPa·s | 22.7 |
| $\gamma_1$ / mPa·s | 121 | $\gamma_1$ / mPa·s | 118 | $\gamma_1$ / mPa·s | 122 |
| $\gamma_1 / \Delta n^2 \times 10^{-2}$ | 117 | $\gamma_1 / \Delta n^2 \times 10^{-2}$ | 117 | $\gamma_1 / \Delta n^2 \times 10^{-2}$ | 118 |
| 3-Cy-Cy-2 | 14% | 3-Cy-Cy-2 | 17% | 3-Cy-Cy-2 | 16% |
| 3-Cy-Cy-4 | 12% | 3-Cy-Cy-4 | 12% | 3-Cy-Cy-4 | 12% |
| 3-Cy-Cy-5 | 5% | 3-Cy-Cy-5 | 5% | 3-Cy-Cy-5 | 5% |
| 3-Cy-Ph-O1 | 7% | 3-Cy-Ph-O1 | 6% | 3-Cy-Ph-O1 | 5% |
| 2-Cy-Ph5-O2 | 7% | 2-Cy-Ph5-O2 | 12% | 2-Cy-Ph5-O2 | 12% |
| 3-Cy-Ph5-O4 | 7% | 2-Cy-Ph-Ph5-O2 | 9% | 2-Cy-Ph-Ph5-O2 | 9% |
| 2-Cy-Ph-Ph5-O2 | 8% | 3-Cy-Ph-Ph5-O2 | 9% | 3-Cy-Ph-Ph5-O2 | 9% |
| 3-Cy-Ph-Ph5-O2 | 8% | 3-Cy-Cy-Ph5-O3 | 6% | 3-Cy-Cy-Ph5-O3 | 6% |
| 3-Cy-Cy-Ph5-O3 | 6% | 4-Cy-Cy-Ph5-O2 | 8% | 4-Cy-Cy-Ph5-O2 | 8% |
| 4-Cy-Cy-Ph5-O2 | 7% | 5-Cy-Cy-Ph5-O2 | 6% | 5-Cy-Cy-Ph5-O2 | 6% |
| 5-Cy-Cy-Ph5-O2 | 6% | 3-Ph-Ph5-Ph-2 | 3% | 3-Ph-Ph5-Ph-2 | 3% |
| 3-Ph-Ph5-Ph-2 | 3% | 4-Ph-Ph5-Ph-2 | 3% | 4-Ph-Ph5-Ph-2 | 3% |
| 4-Ph-Ph5-Ph-2 | 3% | 5-Ph-Ph-1 | 4% | 5-Ph-Ph-1 | 3% |
| 5-Ph-Ph-1 | 6% | | | 3-Cy-Cy-Ph-1 | 3% |
| 3-Cy-Cy-Ph-1 | 1% | | | | |

[Table 35]

| | Example 85 | Example 86 | Example 87 | Example 88 |
|---|---|---|---|---|
| Liquid crystal composition | Liquid crystal composition 22 | Liquid crystal composition 22 | Liquid crystal composition 22 | Liquid crystal composition 22 |
| Polymerizable liquid crystal composition of the first retardation film | Polymerizable liquid crystal composition 22 | Polymerizable liquid crystal composition 14 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 23 | Polymerizable liquid crystal composition 11 | Polymerizable liquid crystal composition 16 |
| VHR | 99.5 | 99.2 | 99.4 | 99.0 |
| ID | 28 | 52 | 38 | 74 |
| Burn-in | A | A | A | B |

[Table 36]

| | Example 89 | Example 90 | Example 91 | Example 92 |
|---|---|---|---|---|
| Liquid crystal composition | Liquid crystal composition 23 | Liquid crystal composition 23 | Liquid crystal composition 23 | Liquid crystal composition 23 |
| Polymerizable liquid crystal composition of the first retardation film | Polymerizableliquid crystal composition 22 | Polymerizable liquid crystal composition 14 | Polymerizable liquid crystal composition 15 | Polymerizable liquid crystal composition 24 |
| Polymerizable liquid composition of the second retardation film | crystal Polymerizableliquid crystal composition 21 | Polymerizable liquid crystal composition 23 | Polymerizable liquid crystal composition 11 | Polymerizable liquid crystal composition 16 |
| VHR | 99.5 | 99.2 | 99.3 | 99.1 |
| ID | 27 | 56 | 45 | 70 |
| Burn-in | A | A | A | B |

[Table 37]

| | Example 93 | Example 94 | Example 95 | Example 96 |
|---|---|---|---|---|
| Liquid crystal composition | Liquid crystal composition 24 | Liquid crystal composition 24 | Liquid crystal composition 24 | Liquid crystal composition 24 |
| Polymerizable liquid crystal composition of the first retardation film | Polymerizable liquid crystal composition 22 | Polymerizable liquid crystal composition 14 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 23 | Polymerizable liquid crystal composition 11 | Polymerizable liquid crystal composition 16 |
| VHR | 99.7 | 99.4 | 99.5 | 99.3 |
| ID | 15 | 35 | 26 | 51 |
| Burn-in | A | A | A | A |

In the liquid crystal display devices of Examples 85 to 96, the high VHR and low ID were realized. Also, the residual image was not generated even in the evaluation of burn-in or the residual image was generated extremely less, which was an acceptable level, even if the residual image was generated.

(Examples 97 to 108)

Liquid crystal display devices of Examples 97 to 108 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 38]

| Liquid crystal composition 25 | | Liquid crystal composition 26 | | Liquid crystal composition 27 | |
|---|---|---|---|---|---|
| $T_{NI}$/°C | 75.6 | $T_{NI}$/°C | 81.1 | $T_{NI}$/°C | 85.7 |
| $\Delta n$ | 0.104 | $\Delta n$ | 0.105 | $\Delta n$ | 0.105 |
| $\Delta\varepsilon$ | -2.8 | $\Delta\varepsilon$ | -2.8 | $\Delta\varepsilon$ | -2.9 |
| $\eta$/mPa·s | 20.2 | $\eta$/mPa·s | 20.8 | $\eta$/mPa·s | 21.0 |
| $\gamma_1$/mPa·s | 117 | $\gamma_1$/mPa·s | 119 | $\gamma_1$/mPa·s | 92 |
| $\gamma_1/\Delta n^2 \times 10^{-2}$ | 107 | $\gamma_1/\Delta n^2 \times 10^{-2}$ | 107 | $\gamma_1/\Delta n^2 \times 10^{-2}$ | 82 |
| 3-Cy-Cy-2 | 25% | 3-Cy-Cy-2 | 25% | 3-Cy-Cy-2 | 25% |
| 3-Cy-Cy-4 | 10% | 3-Cy-Cy-4 | 10% | 3-Cy-Cy-4 | 12% |
| 3-Cy-Ph-O1 | 4% | 3-Cy-Ph-O1 | 4% | 2-Cy-Ph5-O2 | 12% |
| 2-Cy-Ph5-O2 | 7% | 2-Cy-Ph5-O2 | 12% | 2-Cy-Ph-Ph5-O2 | 5% |
| 3-Cy-Ph5-O4 | 8% | 2-Cy-Ph-Ph5-O2 | 5% | 3-Cy-Ph-Ph5-O2 | 6% |
| 2-Cy-Ph-Ph5-O2 | 5% | 3-Cy-Ph-Ph5-O2 | 6% | 3-Cy-Cy-Ph5-O3 | 7% |
| 3-Cy-Ph-Ph5-O2 | 6% | 3-Cy-Cy-Ph5-O3 | 7% | 4-Cy-Cy-Ph5-O2 | 8% |
| 3-Cy-Cy-Ph5-O3 | 6% | 4-Cy-Cy-Ph5-O2 | 8% | 5-Cy-Cy-Ph5-O2 | 7% |
| 4-Cy-Cy-Ph5-O2 | 7% | 5-Cy-Cy-Ph5-O2 | 7% | 3-Ph-Ph5-Ph-2 | 8% |
| 5-Cy-Cy-Ph5-O2 | 6% | 3-Ph-Ph5-Ph-2 | 8% | 4-Ph-Ph5-Ph-2 | 8% |
| 3-Ph-Ph5-Ph-2 | 8% | 4-Ph-Ph5-Ph-2 | 8% | 3-Cy-Cy-Ph-1 | 2% |
| 4-Ph-Ph5-Ph-2 | 8% | | | | |

[Table 39]

| | Example 97 | Example 98 | Example 99 | Example 100 |
|---|---|---|---|---|
| Liquid crystal composition | Liquid crystal composition 25 | Liquid crystal composition 25 | Liquid crystal composition 25 | Liquid crystal composition 25 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 99.8 | 99.4 | 99.5 | 99.4 |
| ID | 14 | 23 | 33 | 46 |

(continued)

| | Example 97 | Example 98 | Example 99 | Example 100 |
|---|---|---|---|---|
| Burn-in | A | A | A | A |

[Table 40]

| | Example 101 | Example 102 | Example 103 | Example 104 |
|---|---|---|---|---|
| Liquid crystal composition | Liquid crystal composition 26 | Liquid crystal composition 26 | Liquid crystal composition 26 | Liquid crystal composition 26 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 99.6 | 99.5 | 99.3 | 99.2 |
| ID | 25 | 32 | 50 | 62 |
| Burn-in | A | A | A | B |

[Table 41]

| | Example 105 | Example 106 | Example 107 | Example 108 |
|---|---|---|---|---|
| Liquid crystal composition | Liquid crystal composition 27 | Liquid crystal composition 27 | Liquid crystal composition 27 | Liquid crystal composition 27 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 99.5 | 99.4 | 99.2 | 99.1 |
| ID | 24 | 39 | 53 | 66 |
| Burn-in | A | A | A | B |

In the liquid crystal display devices of Examples 97 to 108, the high VHR and low ID were realized. Also, the residual image was not generated even in the evaluation of burn-in or the residual image was generated extremely less, which was an acceptable level, even if the residual image was generated.

(Examples 109 to 112)

0.3% by mass of 2-methyl-acrylic acid 4-{2-[4-(2-acryloyloxy-ethyl)-phenoxycarbonyl]-ethyl}-biph enyl-4'-yl ester was mixed in the liquid crystal composition 1 to obtain a liquid crystal composition 28. The liquid crystal composition 28 was injected in the same manner as in Example 1, the composition was irradiated with an ultraviolet ray for 600 seconds (3.0 $J/cm^2$) and polymerized, while a driving voltage was applied between the electrodes, to fabricate liquid crystal display devices of Examples 109 to 112 and the VHR and ID were measured. Also, the burn-in of the obtained liquid crystal display devices was evaluated. The results are shown in the following tables.

[Table 42]

| | Example 109 | Example 110 | Example 111 | Example 112 |
|---|---|---|---|---|
| Liquid crystal composition | Liquid crystal composition 28 | Liquid crystal composition 28 | Liquid crystal composition 28 | Liquid crystal composition 28 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.3 | 99.4 | 99.3 | 99.1 |
| ID | 42 | 30 | 48 | 62 |
| Burn-in | A | A | A | B |

In the liquid crystal display devices of Examples 109 to 112, the high VHR and low ID were realized. Also, the residual image was not generated even in the evaluation of burn-in or the residual image was generated extremely less, which was an acceptable level, even if the residual image was generated.

(Examples 113 to 116)

0.3% by mass of bismethacrylic acid biphenyl-4,4'-diyl was mixed in the liquid crystal composition 13 to obtain a liquid crystal composition 29. The liquid crystal composition 29 was injected in the same manner as in Example 1, the composition was irradiated with an ultraviolet ray for 600 seconds (3.0 J/cm$^2$) and polymerized, while a driving voltage was applied between the electrodes, to fabricate liquid crystal display devices of Examples 113 to 116 and the VHR and ID were measured. Also, the burn-in of the obtained liquid crystal display devices was evaluated. The results are shown in the following tables.

[Table 43]

| | Example 113 | Example 114 | Example 115 | Example 116 |
|---|---|---|---|---|
| Liquid crystal composition | Liquid crystal composition 29 | Liquid crystal composition 29 | Liquid crystal composition 29 | Liquid crystal composition 29 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable. liquid crystal composition 9 | Polymerizable liquid crystal composition 9 | Polymerizable liquid crystal composition 10 | Polymerizable liquid crystal composition 11 |
| VHR | 99.5 | 99.2 | 99.4 | 99.1 |
| ID | 24 | 59 | 40 | 67 |
| Burn-in | A | A | A | B |

In the liquid crystal display devices of Examples 113 to 116, the high VHR and low ID were realized. Also, the residual image was not generated even in the evaluation of burn-in or the residual image was generated extremely less, which was an acceptable level, even if the residual image was generated.

(Examples 117 to 120)

0.3% by mass of bismethacrylic acid 3-fluorobiphenyl-4,4'-diyl was mixed in the liquid crystal composition 19 to obtain a liquid crystal composition 30. The liquid crystal composition 30 was injected in the same manner as in Example 1, the composition was irradiated with an ultraviolet ray for 600 seconds (3.0 J/$cm^2$) and polymerized, while a driving voltage was applied between the electrodes, to fabricate liquid crystal display devices of Examples 117 to 120 and the VHR and ID were measured. Also, the burn-in of the obtained liquid crystal display devices was evaluated. The results are shown in the following tables.

[Table 44]

| | Example 117 | Example 118 | Example 119 | Example 120 |
|---|---|---|---|---|
| Liquid crystal composition | Liquid crystal composition 30 | Liquid crystal composition 30 | Liquid crystal composition 30 | Liquid crystal composition 30 |
| Polymerizable liquid crystal composition of the first retardation film | Polymerizable liquid crystal composition 22 | Polymerizable liquid crystal composition 14 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 23 | Polymerizable liquid crystal composition 11 | Polymerizable liquid crystal composition 16 |
| VHR | 99.5 | 99.3 | 99.3 | 99.1 |
| ID | 22 | 39 | 44 | 69 |
| Burn-in | A | A | A | B |

In the liquid crystal display devices of Examples 117 to 120, the high VHR and low ID were realized. Also, the residual image was not generated even in the evaluation of burn-in or the residual image was generated extremely less, which was an acceptable level, even if the residual image was generated.

(Examples 121 to 132)

Liquid crystal display devices of Examples 121 to 132 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 45]

| Liquid crystal composition 31 | | | Liquid crystal composition 32 | | | Liquid crystal composition 33 | |
|---|---|---|---|---|---|---|---|
| TNI/°C | 75.5 | | TNI/°C | 75.4 | | TNI/°C | 83.1 |
| Δn | 0.103 | | Δn | 0.109 | | Δn | 0.114 |
| Δε | -3.1 | | Δε | -3.1 | | Δε | -2.9 |
| η/mPa·s | 15.8 | | η/mPa·s | 14.9 | | η/mPa·s | 14.8 |
| γ1/mPa·s | 113 | | γ1/mPa·s | 110 | | γ1/mPa·s | 92 |
| γ1/Δn2 × 10-2 | 113 | | γ1/Δn2 × 10-2 | 92 | | γ1/Δn2 × 10-2 | 71 |
| 3-Cy-Cy-2 | 13% | | 2-Cy-Cy-V1 | 20% | | V2-Ph-Ph-1 | 5% |
| 3-Cy-Cy-V1 | 12% | | 3-Cy-Cy-V1 | 13% | | 3-Cy-Cy-V | 39% |
| 3-Cy-Cy-4 | 5% | | 3-Ph-Ph-1 | 10% | | 3-Cy-1O-Ph5-O2 | 5% |
| 3-Ph-Ph-1 | 3% | | 5-Ph-Ph-1 | 5% | | 2-Cy-Cy-1O-Ph5-O2 | 11% |
| 5-Ph-Ph-1 | 12% | | 3-Cy-Ph-Ph-2 | 6% | | 3-Cy-Cy-1O-Ph5-O1 | 11% |

(continued)

| Liquid crystal composition 31 | | Liquid crystal composition 32 | | Liquid crystal composition 33 | |
|---|---|---|---|---|---|
| 3-Cy-Cy-Ph-1 | 3% | 1V-Cy-1O-Ph5-O2 | 8% | 3-Cy-Cy-1O-Ph5-O2 | 6% |
| V-Cy-Ph-Ph-3 | 6% | 2-Cy-Cy-1O-Ph5-O2 | 10% | 2-Cy-Ph-Ph5-O2 | 6% |
| 3-Cy-1O-Ph5-O2 | 11% | 3-Cy-Cy-1O-Ph5-O2 | 10% | 3-Ph-Ph5-Ph-1 | 8% |
| 2-Cy-Cy-1O-Ph5-02 | 12% | V-Cy-Cy-1O-Ph5-O2 | 10% | 3-Ph-Ph5-Ph-2 | 9% |
| 3-Cy-Cy-1O-Ph5-O2 | 12% | 1V-Cy-Cy-1O-Ph5-O2 | 4% | | |
| 4-Cy-Cy-1O-Ph5-O2 | 2% | 3-Ph-Ph5-Ph-2 | 4% | | |
| V-Cy-Cy-1O-Ph5-O2 | 3% | | | | |
| 1V-Cy-Cy-1O-Ph5-O2 | 6% | | | | |

[Table 46]

| | Example 121 | Example 122 | Example 123 | Example 124 |
|---|---|---|---|---|
| Liquid crystal composition | Liquid crystal composition 31 | Liquid crystal composition 31 | Liquid crystal composition 31 | Liquid crystal composition 31 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 99.4 | 99.6 | 99.3 | 99.2 |
| ID | 29 | 18 | 43 | 59 |
| Burn-in | A | A | A | A |

[Table 47]

| | Example 125 | Example 126 | Example 127 | Example 128 |
|---|---|---|---|---|
| Liquid crystal composition | Liquid crystal composition 32 | Liquid crystal composition 32 | Liquid crystal composition 32 | Liquid crystal composition 32 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 99.5 | 99.2 | 99.3 | 99.1 |
| ID | 30 | 61 | 47 | 68 |
| Burn-in | A | B | A | B |

[Table 48]

| | Example 129 | Example 130 | Example 131 | Example 132 |
|---|---|---|---|---|
| Liquid crystal composition | Liquid crystal composition 33 | Liquid crystal composition 33 | Liquid crystal composition 33 | Liquid crystal composition 33 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 99.2 | 89.9 | 99.4 | 99.1 |
| ID | 48 | 74 | 36 | 65 |
| Burn-in | A | B | A | A |

In the liquid crystal display devices of Examples 121 to 132, the high VHR and low ID were realized. Also, the residual image was not generated even in the evaluation of burn-in or the residual image was generated extremely less, which was an acceptable level, even if the residual image was generated.

(Examples 133 to 140)

Liquid crystal display devices of Examples 133 to 140 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 49]

| Liquid crystal composition 34 | | Liquid crystal composition 35 | |
|---|---|---|---|
| TNI/°C | 76.3 | TNI/°C | 76.6 |
| Δn | 0.106 | Δn | 0.109 |
| Δε | -3.0 | Δε | -3.2 |
| η/mPa·s | 16.6 | η/mPa·s | 13.9 |
| γ1/mPa·s | 106 | γ1/mPa·s | 95 |
| γ1/Δn2 × 10-2 | 95 | γ1/Δn2 ×10-2 | 80 |
| 3-Cy-Cy-2 | 17% | 1V-Cy-1O-Ph5-O2 | 12% |
| 3-Cy-Ph-Ph-2 | 12% | 1V-Cy-Cy-1O-Ph5-O2 | 12% |
| 3-Cy-1O-Ph5-O1 | 11% | 3-Cy-1O-Ph5-O2 | 2% |
| 3-Cy-1O-Ph5-O2 | 17% | 2-Cy-Cy-1O-Ph5-O2 | 5% |
| 3-Nd-Ph5-Ph-2 | 4% | 3-Cy-Cy-1O-Ph5-O2 | 4% |
| 3-Cy-Cy-V | 5% | 3-Cy-Ph-Ph5-O2 | 4% |
| 3-Cy-Cy-V1 | 10% | 3-Cy-Cy-V | 38% |
| V-Cy-Ph-Ph-3 | 12% | 3-Cy-Cy-V1 | 3% |
| V-Cy-Cy-1O-Ph5-O3 | 12% | 3-Ph-Ph-1 | 3% |
| | | V2-Ph-Ph5-Ph-2V | 12% |
| | | 1V2-Ph-Ph5-Ph2-V1 | 5% |

[Table 50]

| | Example 133 | Example 134 | Example 135 | Example 136 |
|---|---|---|---|---|
| Liquid crystal composition | Liquid crystal composition 34 | Liquid crystal composition 34 | Liquid crystal composition 34 | Liquid crystal composition 34 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 99.2 | 99.1 | 99.5 | 99.3 |
| ID | 49 | 66 | 29 | 40 |
| Burn-in | A | B | A | A |

[Table 51]

| | Example 137 | Example 138 | Example 139 | Example 140 |
|---|---|---|---|---|
| Liquid crystal composition | Liquid crystal composition 35 | Liquid crystal composition 35 | Liquid crystal composition 35 | Liquid crystal composition 35 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 99.4 | 99.3 | 99.1 | 99.0 |
| ID | 34 | 42 | 60 | 71 |
| Burn-in | A | A | B | B |

In the liquid crystal display devices of Examples 133 to 140, the high VHR and low ID were realized. Also, the residual image was not generated even in the evaluation of burn-in or the residual image was generated extremely less, which was an acceptable level, even if the residual image was generated.

(Examples 141 to 149)

Liquid crystal display devices of Examples 141 to 149 were fabricated in the same manner as in Example 1 except that the liquid crystal composition and the polymerizable liquid crystal composition shown in the following tables were used and an optical alignment film (6) using the optical alignment material was used instead of the alignment film for a retardation film (6) which has been rubbed, and the VHR and ID were measured. Also, the burn-in of the obtained liquid crystal display devices was evaluated. The results are shown in the following tables.

In addition, the optical alignment film was fabricated according to the following method. The photo-alignment agent composition for a retardation film was applied to the optically transparent substrate using a spin coater and then pre-baked on a hot plate for 120 seconds at a temperature of 80°C to form a coating film having a film thickness of 0.1 μm. This film was post-baked in an oven for 1 hour at a temperature of 200°C to for a cured film. In a case of the photo-alignment agent compositions for a retardation film 1 and 2, the cured film was irradiated with 300 J/m$^2$ of a linearly polarized light of 313 nm. In a case of the photo-alignment agent composition for a retardation film 3, the cured film was irradiated with 300 J/m$^2$ of a linearly polarized light of 300 nm.

[Table 52]

| | Example 141 | Example 142 | Example 143 |
|---|---|---|---|
| Liquid crystal composition | Liquid crystal composition 5 | Liquid crystal composition 8 | Liquid crystal composition 16 |
| Photo-alignment agent composition for retardation film | Photo-alignment agent composition 1 | Photo-alignment agent composition 1 | Photo-alignment agent composition 1 |
| Polymerizable liquid crystal composition of the first retardation film | Polymerizable liquid crystal composition 3 | Polymerizable liquid crystal composition 8 | Polymerizable liquid crystal composition 13 |
| Polymerizable liquid crystal composition of the second retardation film | Polymerizable liquid crystal composition 5 | Polymerizable liquid crystal composition 10 | Polymerizable liquid crystal composition 19 |
| VHR | 99.1 | 99.4 | 99.4 |
| ID | 49 | 24 | 28 |
| Burn-in | A | A | A |

[Table 53]

| | Example 144 | Example 145 | Example 146 |
|---|---|---|---|
| Liquid crystal composition | Liquid crystal composition 5 | Liquid crystal composition 8 | Liquid crystal composition 16 |
| Photo-alignment agent composition for retardation film | Photo-alignment agent composition 2 | Photo-alignment agent composition 2 | Photo-alignment agent composition 2 |
| Polymerizable liquid crystal composition of the first retardation film | Polymerizable liquid crystal composition 3 | Polymerizable liquid crystal composition 8 | Polymerizable liquid crystal composition 13 |
| Polymerizable liquid crystal composition of the second retardation film | Polymerizable liquid crystal composition 5 | Polymerizable liquid crystal composition 10 | Polymerizable liquid crystal composition 19 |
| VHR | 99.3 | 99.4 | 99.1 |
| ID | 49 | 25 | 27 |
| Burn-in | A | A | A |

[Table 54]

| | Example 147 | Example 148 | Example 149 |
|---|---|---|---|
| Liquid crystal composition | Liquid crystal composition 5 | Liquid crystal composition 8 | Liquid crystal composition 16 |
| Photo-alignment agent composition for retardation film | Photo-alignment agent composition 3 | Photo-alignment agent composition 3 | Photo-alignment agent composition 3 |
| Polymerizable liquid crystal composition of the first retardation film | Polymerizable liquid crystal composition 3 | Polymerizable liquid crystal composition 8 | Polymerizable liquid crystal composition 13 |

(continued)

| | Example 147 | Example 148 | Example 149 |
|---|---|---|---|
| Polymerizable liquid crystal composition of the second retardation film | Polymerizable liquid crystal composition 5 | Polymerizable liquid crystal composition 10 | Polymerizable liquid crystal composition 19 |
| VHR | 99.2 | 99.3 | 99.1 |
| ID | 48 | 26 | 29 |
| Burn-in | A | A | A |

In the liquid crystal display devices of Examples 141 to 149, the high VHR and low ID were realized. Also, the residual image was not generated even in the evaluation of burn-in or the residual image was generated extremely less, which was an acceptable level, even if the residual image was generated.

(Comparative Examples 1 to 4)

Liquid crystal display devices of Comparative Examples 1 to 4 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Chem. 71]

| Comparative liquid crystal composition 1 | | Comparative liquid crystal composition 2 | | Comparative liquid crystal composition 3 | |
|---|---|---|---|---|---|
| 3-Cy-Cy-2 | 4% | 3-Cy-Cy-2 | 4% | 3-Cy-Cy-2 | 4% |
| 3-Cy-Cy-4 | 4% | 3-Cy-Cy-4 | 4% | 3-Cy-Cy-4 | 4% |
| 3-Cy-Ph5-O2 | 7% | 3-Cy-Ph5-O2 | 7% | 3-Cy-Ph5-O2 | 7% |
| 3-Cy-Ph5-O4 | 8% | 3-Cy-Ph5-O4 | 8% | 3-Cy-Ph5-O4 | 8% |
| 2-Cy-Ph-Ph5-O2 | 4% | 2-Cy-Ph-Ph5-O2 | 5% | 2-Cy-Ph-Ph5-O2 | 6% |
| 3-Cy-Ph-Ph5-O2 | 5% | 3-Cy-Ph-Ph5-O2 | 6% | 3-Cy-Ph-Ph5-O2 | 7% |
| 3-Cy-Cy-Ph5-O3 | 8% | 3-Cy-Cy-Ph5-O3 | 7% | 3-Cy-Cy-Ph5-O3 | 7% |
| 4-Cy-Cy-Ph5-O2 | 10% | 4-Cy-Cy-Ph5-O2 | 9% | 4-Cy-Cy-Ph5-O2 | 7% |
| 5-Cy-Cy-Ph5-O2 | 8% | 5-Cy-Cy-Ph5-O2 | 7% | 5-Cy-Cy-Ph5-O2 | 7% |
| 3-Ph-Ph5-Ph-2 | 4% | 3-Ph-Ph5-Ph-2 | 4% | 3-Ph-Ph5-Ph-2 | 4% |
| 4-Ph-Ph5-Ph-2 | 4% | 4-Ph-Ph5-Ph-2 | 4% | 4-Ph-Ph5-Ph-2 | 4% |
| 5-Ph-Ph-1 | 25% | 5-Ph-Ph-1 | 22% | 5-Ph-Ph-1 | 19% |
| 3-Cy-Cy-Ph-1 | 9% | 3-Cy-Cy-Ph-1 | 13% | 3-Cy-Cy-Ph-1 | 16% |

[Table 55]

| | Comparative Example 1 | Comparative Example 2 | Comparative Example 3 | Comparative Example 4 |
|---|---|---|---|---|
| Liquid crystal composition | Comparative liquid crystal composition 1 | Comparative liquid crystal composition 1 | Comparative liquid crystal composition 1 | Comparative liquid crystal composition 1 |
| Polymerizable liquid crystal composition of the first retardation film | Polymerizable liquid crystal composition 1 | Pol ymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 98.4 | 98.5 | 98.2 | 98.2 |
| ID | 124 | 114 | 133 | 146 |
| Burn-in | C | C | D | D |

[Table 56]

| | Comparative Example 5 | Comparative Example 6 | Comparative Example 7 | Comparative Example 8 |
|---|---|---|---|---|
| Liquid crystal composition | Comparative liquid crystal composition 2 | Comparative liquid crystal composition 2 | Comparative liquid crystal composition 2 | Comparative liquid crystal composition 2 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |
| VHR | 98.3 | 98.4 | 98.3 | 98.2 |
| ID | 126 | 120 | 131 | 147 |
| Burn-in | C | C | D | D |

[Table 57]

| | Comparative Example 9 | Comparative Example 10 | Comparative Example 11 | Comparative Example 12 |
|---|---|---|---|---|
| Liquid crystal composition | Comparative liquid crystal composition 3 | Comparative liquid crystal composition 3 | Comparative liquid crystal composition 3 | Comparative liquid crystal composition 3 |
| Polymerizable liquid crystal composition of the first retardation film | Polymerizable liquid crystal composition 1 | Polymerizable liquid crystal composition 2 | Polymerizable liquid crystal composition 3 | Polymerizable liquid crystal composition 4 |
| Polymerizable liquid crystal composition of the second retardation film | Polymerizable liquid crystal composition 5 | Polymerizable liquid crystal composition 9 | Polymerizable liquid crystal composition 5 | Polymerizable liquid crystal composition 5 |

(continued)

| | Comparative Example 9 | Comparative Example 10 | Comparative Example 11 | Comparative Example 12 |
|---|---|---|---|---|
| VHR | 98.4 | 98.5 | 98.2 | 98.2 |
| ID | 164 | 145 | 131 | 137 |
| Burn-in | C | C | C | D |

The liquid crystal display devices of Comparative Examples 5 to 12 had a lower VHR and a higher ID compared to those of the liquid crystal display device of the present invention. Also, it is recognized that a residual image was generated even in the evaluation of burn-in, which was not an acceptable level.

(Comparative Examples 13 to 24)

Liquid crystal display devices of Comparative Examples 13 to 24 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 58]

| Comparative liquid crystal composition 4 | |
|---|---|
| $T_{NI}$/°C | 73.6 |
| $\Delta n$ | 0.099 |
| $\Delta\varepsilon$ | -2.15 |
| $\eta$/mPa·s | 17.7 |
| $\gamma_1$/mPa·s | 104 |
| $\gamma_1/\Delta n^2 \times 10^{-2}$ | 106 |
| 3-Cy-Cy-2 | 20% |
| 3-Cy-Cy-4 | 12% |
| 3-Cy-Cy-5 | 7% |
| 3-Cy-Ph-O1 | 12% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 4% |
| 4-Ph-Ph5-Ph-2 | 4% |

| Comparative liquid crystal composition 5 | |
|---|---|
| $T_{NI}$/°C | 80.9 |
| $\Delta n$ | 0.094 |
| $\Delta\varepsilon$ | -2.16 |
| $\eta$/mPa·s | 17.0 |
| $\gamma_1$/mPa·s | 97 |
| $\gamma_1/\Delta n^2 \times 10^{-2}$ | 109 |
| 3-Cy-Cy-2 | 24% |
| 3-Cy-Cy-4 | 12% |
| 3-Cy-Cy-5 | 15% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 4% |
| 4-Ph-Ph5-Ph-2 | 4% |

| Comparative liquid crystal composition 6 | |
|---|---|
| $T_{NI}$/°C | 84.7 |
| $\Delta n$ | 0.085 |
| $\Delta\varepsilon$ | -2.13 |
| $\eta$/mPa·s | 17.5 |
| $\gamma_1$/mPa·s | 98 |
| $\gamma_1/\Delta n^2 \times 10^{-2}$ | 136 |
| 3-Cy-Cy-2 | 21% |
| 3-Cy-Cy-4 | 15% |
| 3-Cy-Cy-5 | 15% |
| 3-Cy-Ph5-O2 | 5% |
| 3-Cy-Ph5-O4 | 5% |
| 2-Cy-Ph-Ph5-O2 | 4% |
| 3-Cy-Ph-Ph5-O2 | 5% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |

[Table 59]

| | Comparative Example 13 | Comparative Example 14 | Comparative Example 15 | Comparative Example 16 |
|---|---|---|---|---|
| Liquid crystal composition | Comparative liquid crystal composition 4 | Comparative liquid crystal composition 4 | Comparative liquid crystal composition 4 | Comparative liquid crystal composition 4 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 98.3 | 98.2 | 98.3 | 98.1 |
| ID | 129 | 140 | 134 | 144 |
| Burn-in | C | D | C | D |

[Table 60]

| | Comparative Example 17 | Comparative Example 18 | Comparative Example 19 | Comparative Example 20 |
|---|---|---|---|---|
| Liquid crystal composition | Comparative liquid crystal composition 5 | Comparative liquid crystal composition 5 | Comparative liquid crystal composition 5 | Comparative liquid crystal composition 5 |
| Polymerizable liquid crystal composition of the first retardation film | Polymerizable liquid crystal composition 6 | Polymerizable liquid crystal composition 7 | Polymerizable liquid crystal composition 8 | Polymerizable liquid crystal composition 1 |
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition |
| VHR | 98.5 | 98.2 | 98.4 | 98.1 |
| ID | 118 | 135 | 130 | 148 |
| Burn-in | C | C | C | D |

[Table 61]

| | Comparative Example 21 | Comparative Example 22 | Comparative Example 23 | Comparative Example 24 |
|---|---|---|---|---|
| Liquid crystal composition | Comparative liquid crystal composition 6 | Comparative liquid crystal composition 6 | Comparative liquid crystal composition 6 | Comparative liquid crystal composition 6 |
| Polymerizable liquid crystal composition of the first retardation film | Polymerizable liquid crystal composition 6 | Polymerizable liquid crystal composition 7 | Polymerizable liquid crystal composition 8 | Pol ymerizable liquid crystal composition 1 |

(continued)

| | Comparative Example 21 | Comparative Example 22 | Comparative Example 23 | Comparative Example 24 |
|---|---|---|---|---|
| Polymerizable liquid crystal composition of the second retardation film | Polymerizable liquid crystal composition 9 | Polymerizable liquid crystal composition 9 | Polymerizable liquid crystal composition 10 | Polymerizable liquid crystal composition 11 |
| VHR | 98.4 | 98.3 | 98.3 | 98.2 |
| ID | 127 | 145 | 138 | 152 |
| Burn-in | C | D | C | D |

The liquid crystal display devices of Comparative Examples 13 to 24 had a lower VHR and a higher ID compared to those of the liquid crystal display device of the present invention. Also, it is recognized that a residual image was generated even in the evaluation of burn-in, which was not an acceptable level.

(Comparative Examples 25 to 36)

Liquid crystal display devices of Comparative Examples 25 to 36 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 62]

| Comparative liquid crystal composition 7 | | Comparative liquid crystal composition 8 | | Comparative liquid crystal composition 9 | |
|---|---|---|---|---|---|
| 3-Cy-Cy-2 | 28% | 3-Cy-Cy-2 | 25% | 3-Cy-Cy-2 | 28% |
| 3-Cy-Cy-4 | 10% | 3-Cy-Cy-4 | 9% | 3-Cy-Cy-4 | 8% |
| 3-Cy-Ph-O1 | 7% | 3-Cy-Ph-O1 | 6% | 3-Cy-Ph-O1 | 7% |
| 2-Cy-Ph5-O2 | 2% | 2-Cy-Ph5-O2 | 2% | 2-Cy-Ph5-O2 | 2% |
| 3-Cy-Ph5-O4 | 2% | 3-Cy-Ph5-O4 | 2% | 3-Cy-Ph5-O4 | 2% |
| 2-Cy-Ph-Ph5-O2 | 5% | 2-Cy-Ph-Ph5-O2 | 5% | 2-Cy-Ph-Ph5-O2 | 5% |
| 3-Cy-Ph-Ph5-O2 | 5% | 3-Cy-Ph-Ph5-O2 | 5% | 3-Cy-Ph-Ph5-O2 | 5% |
| 3-Cy-Cy-Ph5-O3 | 5% | 3-Cy-Cy-Ph5-O3 | 5% | 3-Cy-Cy-Ph5-O3 | 5% |
| 4-Cy-Cy-Ph5-O2 | 5% | 4-Cy-Cy-Ph5-O2 | 5% | 4-Cy-Cy-Ph5-O2 | 5% |
| 5-Cy-Cy-Ph5-O2 | 5% | 5-Cy-Cy-Ph5-O2 | 5% | 5-Cy-Cy-Ph5-O2 | 5% |
| 3-Ph-Ph5-Ph-2 | 2% | 3-Ph-Ph5-Ph-2 | 2% | 3-Ph-Ph5-Ph-2 | 2% |
| 4-Ph-Ph5-Ph-2 | 2% | 4-Ph-Ph5-Ph-2 | 2% | 4-Ph-Ph5-Ph-2 | 2% |
| 5-Ph-Ph-1 | 22% | 5-Ph-Ph-1 | 19% | 5-Ph-Ph-1 | 15% |
| | | 3-Cy-Cy-Ph-1 | 8% | 3-Cy-Cy-Ph-1 | 9% |

[Table 63]

| | Comparative Example 25 | Comparative Example 26 | Comparative Example 27 | Comparative Example 28 |
|---|---|---|---|---|
| Liquid crystal composition | Comparative liquid crystal composition 7 | Comparative liquid crystal composition 7 | Comparative liquid crystal composition 7 | Comparative liquid crystal composition 7 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 98.2 | 98.1 | 98.3 | 98.1 |
| ID | 136 | 146 | 129 | 144 |
| Burn-in | C | D | C | D |

[Table 64]

| | Comparative Example 29 | Comparative Example 30 | Comparative Example 31 | Comparative Example 32 |
|---|---|---|---|---|
| Liquid crystal composition | Comparative liquid crystal composition 8 | Comparative liquid crystal composition 8 | Comparative liquid crystal composition 8 | Comparative liquid crystal composition 8 |
| Polymerizable liquid crystal composition of the first retardation film | Polymerizable liquid crystal composition 14 | Polymerizable liquid crystal composition 15 | Pol ymerizable liquid crystal composition 8 | Polymerizable liquid crystal composition 8 |
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 98.4 | 98.1 | 98.5 | 98.3 |
| ID | 114 | 149 | 109 | 127 |
| Burn-in | C | D | C | C |

[Table 65]

| | Comparative Example 33 | Comparative Example 34 | Comparative Example 35 | Comparative Example 36 |
|---|---|---|---|---|
| Liquid crystal composition | Comparative liquid crystal composition 9 | Comparative liquid crystal composition 9 | Comparative liquid crystal composition 9 | Comparative liquid crystal composition 9 |
| Polymerizable liquid crystal composition of the first retardation film | Polymerizable liquid crystal composition 14 | Polymerizable liquid crystal composition 15 | Polymerizable liquid crystal composition 8 | Polymerizable liquid crystal composition 8 |

(continued)

| | Comparative Example 33 | Comparative Example 34 | Comparative Example 35 | Comparative Example 36 |
|---|---|---|---|---|
| Polymerizable liquid crystal composition of the second retardation film | Polymerizable liquid crystal composition 21 | Polymerizable liquid crystal composition 16 | Polymerizable liquid crystal composition 17 | Polymerizable liquid crystal composition 18 |
| VHR | 98.5 | 98.2 | 98.5 | 98.3 |
| ID | 111 | 134 | 106 | 125 |
| Burn-in | C | D | C | C |

The liquid crystal display devices of Comparative Examples 25 to 36 had a lower VHR and a higher ID compared to those of the liquid crystal display device of the present invention. Also, it is recognized that a residual image was generated even in the evaluation of burn-in, which was not an acceptable level.

(Comparative Examples 37 to 44)

Liquid crystal display devices of Comparative Examples 37 to 44 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 66]

| Comparative liquid crystal composition 10 | | Comparative liquid crystal composition 11 | |
|---|---|---|---|
| 3-Cy-Cy-2 | 10% | 3-Cy-Cy-4 | 11% |
| 3-Cy-Cy-4 | 3% | 3-Cy-Cy-5 | 5% |
| 3-Cy-Cy-5 | 2% | 2-Cy-Ph5-O2 | 16% |
| 3-Cy-Ph-O1 | 2% | 3-Cy-Ph5-O4 | 16% |
| 2-Cy-Ph5-O2 | 16% | 2-Cy-Ph-Ph5-O2 | 12% |
| 3-Cy-Ph5-O4 | 16% | 3-Cy-Ph-Ph5-O2 | 12% |
| 2-Cy-Ph-Ph5-O2 | 12% | 3-Cy-Cy-Ph5-O3 | 9% |
| 3-Cy-Ph-Ph5-O2 | 11% | 4-Cy-Cy-Ph5-O2 | 9% |
| 3-Cy-Cy-Ph5-O3 | 9% | 5-Cy-Cy-Ph5-O2 | 8% |
| 4-Cy-Cy-Ph5-O2 | 9% | 3-Cy-Cy-Ph-1 | 2% |
| 5-Cy-Cy-Ph5-O2 | 9% | | |
| 3-Cy-Cy-Ph-1 | 1% | | |

[Table 67]

| | Comparative Example 37 | Comparative Example 38 | Comparative Example 39 | Comparative Example 40 |
|---|---|---|---|---|
| Liquid crystal composition | Comparative liquid crystal combosition 10 | Comparative liquid crystal composition 10 | Comparative liquid crystal composition 10 | Comparative liquid crystal composition 10 |

(continued)

| | Comparative Example 37 | Comparative Example 38 | Comparative Example 39 | Comparative Example 40 |
|---|---|---|---|---|
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 98.3 | 98.3 | 98.5 | 98.4 |
| ID | 136 | 139 | 113 | 128 |
| Burn-in | D | D | C | C |

[Table 68]

| | Comparative Example 41 | Comparative Example 42 | Comparative Example 43 | Comparative Example 44 |
|---|---|---|---|---|
| Liquid crystal composition | Comparative liquid crystal composition | Comparative liquid crystal composition | Comparative liquid crystal composition 11 | Comparative liquid crystal composition 11 |
| Polymerizable liquid crystal composition of the first retardation film | Polymerizable liquid crystal composition 3 | Polymerizable liquid crystal composition 4 | Polymerizable liquid crystal composition 13 | Polymerizable liquid crystal composition 13 |
| Polymerizable liquid crystal composition of the second retardation film | Polymerizable liquid crystal composition 16 | Polymerizable liquid crystal composition 16 | Polymerizable liquid crystal composition 19 | Polymerizable liquid crystal composition 20 |
| VHR | 98.4 | 98.2 | 98.6 | 98.5 |
| ID | 128 | 142 | 101 | 114 |
| Burn-in | C | D | C | C |

The liquid crystal display devices of Comparative Examples 37 to 44 had a lower VHR and a higher ID compared to those of the liquid crystal display device of the present invention. Also, it is recognized that a residual image was generated even in the evaluation of burn-in, which was not an acceptable level.

(Comparative Examples 45 to 56)

Liquid crystal display devices of Comparative Examples 45 to 56 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 69]

| Comparative liquid crystal composition 12 | | Comparative liquid crystal composition 13 | | Comparative liquid crystal composition 14 | |
|---|---|---|---|---|---|
| 3-Cy-Cy-2 | 25% | 3-Cy-Cy-2 | 27% | 3-Cy-Cy-2 | 30% |
| 3-Cy-Cy-4 | 12% | 3-Cy-Cy-4 | 12% | 3-Cy-Cy-4 | 12% |
| 3-Cy-Cy-5 | 7% | 3-Cy-Cy-5 | 6% | 3-Cy-Cy-5 | 9% |

(continued)

| Comparative liquid crystal composition 12 | | Comparative liquid crystal composition 13 | | Comparative liquid crystal composition 14 | |
|---|---|---|---|---|---|
| 3-Cy-Ph-O1 | 11% | 3-Cy-Ph-O1 | 9% | 2-Cy-Ph5-O2 | 4% |
| 2-Cy-Ph5-O2 | 5% | 2-Cy-Ph5-O2 | 5% | 3-Cy-Ph5-O4 | 4% |
| 3-Cy-Ph5-O4 | 5% | 3-Cy-Ph5-O4 | 5% | 2-Cy-Ph-Ph5-O2 | 5% |
| 2-Cy-Ph-Ph5-O2 | 4% | 2-Cy-Ph-Ph5-O2 | 4% | 3-Cy-Ph-Ph5-O2 | 5% |
| 3-Cy-Ph-Ph5-O2 | 4% | 3-Cy-Ph-Ph5-O2 | 3% | 3-Cy-Cy-Ph5-O3 | 3% |
| 3-Cy-Cy-Ph5-O3 | 2% | 3-Cy-Cy-Ph5-O3 | 3% | 4-Cy-Cy-Ph5-O2 | 3% |
| 4-Cy-Cy-Ph5-O2 | 2% | 4-Cy-Cy-Ph5-O2 | 2% | 5-Cy-Cy-Ph5-O2 | 3% |
| 5-Cy-Cy-Ph5-O2 | 2% | 5-Cy-Cy-Ph5-O2 | 2% | 3-Ph-Ph5-Ph-2 | 3% |
| 3-Ph-Ph5-Ph-2 | 5% | 3-Ph-Ph5-Ph-2 | 6% | 4-Ph-Ph5-Ph-2 | 3% |
| 4-Ph-Ph5-Ph-2 | 5% | 4-Ph-Ph5-Ph-2 | 4% | 3-Cy-Cy-Ph-1 | 16% |
| 3-Cy-Cy-Ph-1 | 11 % | 3-Cy-Cy-Ph-1 | 12% | | |

[Table 70]

| | Comparative Example 45 | Comparative Example 46 | Comparative Example 47 | Comparative Example 48 |
|---|---|---|---|---|
| Liquid crystal composition | Comparative liquid crystal composition 12 | Comparative liquid crystal composition 12 | Comparative liquid crystal composition 12 | Comparative liquid crystal composition 12 |
| Polymerizable liquid crystal composition of the first retardation film | polymerizable liquid crystal composition 22 | Pol ymerizable liquid crystal composition 14 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 23 | Polymerizable liquid crystal composition | Polymerizable liquid crystal composition 16 |
| VHR | 98.4 | 98.2 | 98.3 | 98.1 |
| ID | 129 | 146 | 140 | 154 |
| Burn-in | C | D | D | D |

[Table 71]

| | Comparative Example 49 | Comparative Example 50 | Comparative Example 51 | Comparative Example 52 |
|---|---|---|---|---|
| Liquid crystal composition | Comparative liquid crystal composition 13 | Comparative liquid crystal composition 13 | Comparative liquid crystal composition 13 | Comparative liquid crystal composition 13 |
| Polymerizable liquid crystal composition of the first retardation film | Polymerizable liquid crystal composition 22 | Polymerizable liquid crystal composition 14 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 23 | Polymerizable liquid crystal composition 11 | Polymerizable liquid crystal composition 16 |
| VHR | 98.5 | 98.2 | 98.4 | 98.1 |
| ID | 116 | 143 | 127 | 159 |
| Burn-in | C | D | C | D |

[Table 72]

| | Comparative Example 53 | Comparative Example 54 | Comparative Example 55 | Comparative Example 56 |
|---|---|---|---|---|
| Liquid crystal composition | Comparative liquid crystal composition 14 | Comparative liquid crystal composition 14 | Comparative liquid crystal composition 14 | Comparative liquid crystal composition 14 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 98.5 | 98.3 | 98.5 | 98.2 |
| ID | 98 | 125 | 108 | 138 |
| Burn-in | C | C | C | D |

The liquid crystal display devices of Comparative Examples 45 to 56 had a lower VHR and a higher ID compared to those of the liquid crystal display device of the present invention. Also, it is recognized that a residual image was generated even in the evaluation of burn-in, which was not an acceptable level.

(Comparative Examples 57 to 60)

Liquid crystal display devices of Comparative Examples 57 to 60 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 73]

| Comparative liquid crystal composition 15 | |
|---|---|
| 3-Cy-Cy-2 | 14% |
| 3-Cy-Ph-O1 | 4% |
| 2-Cy-Ph5-O2 | 3% |
| 2-Cy-Ph-Ph5-O2 | 13% |
| 3-Cy-Ph-Ph5-O2 | 13% |
| 3-Cy-Cy-Ph5-O3 | 12% |
| 4-Cy-Cy-Ph5-O2 | 12% |
| 5-Cy-Cy-Ph5-O2 | 12% |
| 3-Ph-Ph5-Ph-2 | 8% |
| 4-Ph-Ph5-Ph-2 | 8% |
| 5-Ph-Ph-1 | 1% |

[Table 74]

| | Comparative Example 57 | Comparative Example 58 | Comparative Example 59 | Comparative Example 60 |
|---|---|---|---|---|
| Liquid crystal composition | Comparative liquid crystal composition 15 | Comparative liquid crystal composition 15 | Comparative liquid crystal composition 15 | Comparative liquid crystal composition 15 |
| Polymerizable liquid crystal composition of the first retardation film | Polymerizable liquid crystal composition 22 | Polymerizable liquid crystal composition 8 | Polymerizable liquid crystal composition 15 | Polymerizable liquid crystal composition 24 |
| Polymerizable liquid crystal composition of the second retardation film | Polymerizable liquid crystal composition 21 | Polymerizable liquid crystal composition 12 | Polymerizable liquid crystal composition 11 | Polymerizable liquid crystal composition 16 |
| VHR | 98.4 | 98.3 | 98.3 | 98.1 |
| ID | 119 | 128 | 130 | 151 |
| Burn-in | C | C | D | D |

The liquid crystal display devices of Comparative Examples 57 to 60 had a lower VHR and a higher ID compared to those of the liquid crystal display device of the present invention. Also, it is recognized that a residual image was generated even in the evaluation of burn-in, which was not an acceptable level.

(Comparative Examples 61 to 92)

Liquid crystal display devices of Comparative Examples 61 to 92 were fabricated in the same manner as in Example 1 except that the liquid crystal composition and the polymerizable liquid crystal composition shown in the following tables were used, and the VHR and ID were measured. Also, the burn-in of the obtained liquid crystal display devices was evaluated. The results are shown in the following tables.

[Table 75]

| | Comparative Example 61 | Comparative Example 62 | Comparative Example 63 | Comparative Example 64 |
|---|---|---|---|---|
| Liquid crystal composition | Liquid crystal composition 1 | Liquid crystal composition 1 | Liquid crystal composition 1 | Liquid crystal composition 1 |
| Polymerizable liquid crystal composition of the first retardation film | Comparative polymerizable liquid crystal composition 1 | Comparative polymerizable liquid crystal composition 2 | Comparative polymerizable liquid crystal composition 3 | Comparative polymerizable liquid crystal composition 4 |
| Polymerizable liquid crystal composition of the second retardation film | Comparative polymerizable liquid crystal composition 5 | Comparative polymerizable liquid crystal composition 5 | Comparative polymerizable liquid crystal composition 5 | Comparative polymerizable liquid crystal composition 5 |
| VHR | 98.3 | 97.8 | 98.1 | 98.0 |
| ID | 137 | 176 | 154 | 166 |
| Burn-in | C | D | D | D |

[Table 76]

| | Comparative Example 65 | Comparative Example 66 | Comparative Example 67 | Comparative Example 68 |
|---|---|---|---|---|
| Liquid crystal composition | Liquid crystal composition 2 | Liquid crystal composition 2 | Liquid crystal composition 2 | Liquid crystal composition 2 |
| Polymerizable liquid crystal composition of the first retardation film | Comparative polymerizable liquid crystal composition 1 | Comparative polymerizable liquid crystal composition 2 | Comparative polymerizable liquid crystal composition 3 | Comparative polymerizable liquid crystal composition 4 |
| Polymerizable liquid crystal composition of the second retardation film | Comparative polymerizable liquid crystal composition 5 | Comparative polymerizable liquid crystal composition 5 | Comparative polymerizable liquid crystal composition 5 | Comparative polymerizable liquid crystal composition 5 |
| VHR | 98.3 | 98.0 | 98.3 | 98.1 |
| ID | 128 | 158 | 132 | 147 |
| Burn-in | C | D | C | D |

[Table 77]

| | Comparative Example 69 | Comparative Example 70 | Comparative Example 71 | Comparative Example 72 |
|---|---|---|---|---|
| Liquid crystal composition | Liquid crystal composition 3 | Liquid crystal composition 3 | Liquid crystal composition 3 | Liquid crystal composition 3 |
| Polymerizable liquid crystal composition of the first retardation film | Comparative polymerizable liquid crystal composition 6 | Comparative polymerizable liquid crystal composition 7 | Comparative polymerizable liquid crystal composition 8 | Comparative polymerizable liquid crystal composition 1 |
| Polymerizable liquid crystal composition of the second retardation film | Comparative polymerizable liquid crystal composition 9 | Comparative polymerizable liquid crystal composition 9 | Comparative polymerizable liquid crystal composition 10 | Comparative polymerizable liquid crystal composition 11 |

(continued)

| | Comparative Example 69 | Comparative Example 70 | Comparative Example 71 | Comparative Example 72 |
|---|---|---|---|---|
| VHR | 97.9 | 98.1 | 98.0 | 98.2 |
| ID | 157 | 144 | 150 | 138 |
| Burn-in | D | D | D | C |

[Table 78]

| | Comparative Example 73 | Comparative Example 74 | Comparative Example 75 | Comparative Example 76 |
|---|---|---|---|---|
| Liquid crystal composition | Liquid crystal composition 8 | Liquid crystal composition 8 | Liquid crystal composition 8 | Liquid crystal composition 8 |
| Polymerizable liquid crystal composition of the first retardation film | Comparative polymerizable liquid crystal composition 6 | Comparative polymerizable liquid crystal composition 7 | Comparative polymerizable liquid crystal composition 8 | Comparative polymerizable liquid crystal composition 1 |
| Polymerizable liquid crystal composition of the second retardation film | Comparative polymerizable liquid crystal composition 9 | Comparative polymerizable liquid crystal composition 9 | Comparative polymerizable liquid crystal composition 10 | Comparative polymerizable liquid crystal composition 11 |
| VHR | 98.1 | 98.3 | 98.3 | 98.4 |
| ID | 148 | 123 | 125 | 119 |
| Burn-in | D | D | D | C |

[Table 79]

| | Comparative Example 77 | Comparative Example 78 | Comparative Example 79 | Comparative Example 80 |
|---|---|---|---|---|
| Liquid crystal composition | Liquid crystal composition 13 | Liquid crystal composition 13 | Liquid crystal composition 13 | Liquid crystal composition 13 |
| Polymerizable liquid crystal composition of the first retardation film | Comparative polymerizable liquid crystal composition 8 | Comparative polymerizable liquid crystal composition 3 | Comparative polymerizable liquid crystal composition 4 | Comparative polymerizable liquid crystal composition 13 |
| Polymerizable liquid crystal composition of the second retardation film | Comparative polymerizable liquid crystal composition 12 | Comparative polymerizable liquid crystal composition 16 | Comparative polymerizable liquid crystal composition 16 | Comparative polymerizable liquid crystal composition 17 |
| VHR | 98.4 | 98.2 | 98.2 | 98.3 |
| ID | 131 | 144 | 149 | 139 |
| Burn-in | D | D | D | D |

[Table 80]

| | Comparative Example 81 | Comparative Example 82 | Comparative Example 83 | Comparative Example 84 |
|---|---|---|---|---|
| Liquid crystal composition | Liquid crystal composition 14 | Liquid crystal composition 14 | Liquid crystal composition 14 | Liquid crystal composition 14 |
| Polymerizable liquid crystal composition of the first retardation film | Comparative polymerizable liquid crystal composition 8 | Comparative polymerizable liquid crystal composition 3 | Comparative polymerizable liquid crystal composition 4 | Comparative polymerizable liquid crystal composition 13 |
| Polymerizable liquid crystal composition of the second retardation film | Comparative polymerizable liquid crystal composition 12 | Comparative polymerizable liquid crystal composition 16 | Comparative polymerizable liquid crystal composition 16 | Comparative polymerizable liquid crystal composition 17 |
| VHR | 98.3 | 98.1 | 98.1 | 98.2 |
| ID | 122 | 136 | 142 | 130 |
| Burn-in | C | D | D | D |

[Table 81]

| | Comparative Example 85 | Comparative Example 86 | Comparative Example 87 | Comparative Example 88 |
|---|---|---|---|---|
| Liquid crystal composition | Liquid crystal composition 19 | Liquid crystal composition 19 | Liquid crystal composition 19 | Liquid crystal composition 19 |
| Polymerizable liquid crystal composition of the first retardation film | Comparative polymerizable liquid crystal composition 13 | Comparative polymerizable liquid crystal composition 14 | Comparative polymerizable liquid crystal composition 14 | Comparative polymerizable liquid crystal composition 15 |
| Polymerizable liquid crystal composition of the second retardation film | Comparative polymerizable liquid crystal composition 18 | Comparative polymerizable liquid crystal composition 19 | Comparative polymerizable liquid crystal composition 20 | Comparative polymerizable liquid crystal composition 11 |
| VHR | 98.0 | 98.3 | 98.3 | 98.1 |
| ID | 156 | 137 | 139 | 148 |
| Burn-in | D | D | D | D |

[Table 82]

| | Comparative Example 89 | Comparative Example 90 | Comparative Example 91 | Comparative Example 92 |
|---|---|---|---|---|
| Liquid crystal composition | Liquid crystal composition 20 | Liquid crystal composition 20 | Liquid crystal composition 20 | Liquid crystal composition 20 |
| Polymerizable liquid crystal composition of the first retardation film | Comparative polymerizable liquid crystal composition 13 | Comparative polymerizable liquid crystal composition 14 | Comparative polymerizable liquid crystal composition 14 | Comparative polymerizable liquid crystal composition 15 |
| Polymerizable liquid crystal composition of the second retardation film | Comparative polymerizable liquid crystal composition 18 | Comparative polymerizable liquid crystal composition 19 | Comparative polymerizable liquid crystal composition 20 | Comparative polymerizable liquid crystal composition 11 |

(continued)

| | Comparative Example 89 | Comparative Example 90 | Comparative Example 91 | Comparative Example 92 |
|---|---|---|---|---|
| VHR | 98.1 | 98.4 | 98.3 | 98.2 |
| ID | 155 | 125 | 134 | 141 |
| Burn-in | D | C | D | D |

The liquid crystal display devices of Comparative Examples 61 to 92 had a lower VHR and a higher ID compared to those of the liquid crystal display device of the present invention. Also, it is recognized that a residual image was generated even in the evaluation of burn-in, which was not an acceptable level.

## Claims

1. A liquid crystal display device comprising:

a first substrate;
a second substrate;
a liquid crystal layer interposed between the first substrate and the second substrate;
a retardation film between a pair of the substrates; and
at least a pair of electrodes,
wherein the liquid crystal layer is composed of a liquid crystal composition which contains a compound represented by General Formula (I) in an amount of 10% to 50% by weight and a compound represented by General Formula (II) in an amount of 35% to 80% by weight:

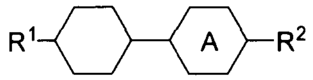 (I)

wherein $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, and A represents a 1,4-phenylene group or a trans-1,4-cyclohexylene group, and

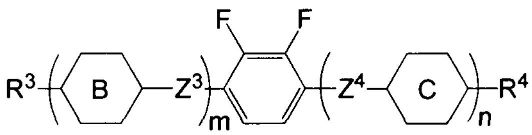 (II)

wherein $R^3$ and $R^4$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $Z^3$ and $Z^4$ each independently represent a single bond, -CH=CH-, -C≡C-, $-CH_2CH_2-$, $-(CH_2)_4-$, -COO-, -OCO-, $-OCH_2-$, $-CH_2O-$, $-OCF_2-$, or $-CF_2O-$, B and C each independently represent a 1,4-phenylene group or a trans-1,4-cyclohexylene group, which may be fluorinated, and m and n each independently represent an integer of 0 to 4, and m + n = 1 to 4; and

the retardation film layer is an optically anisotropic body obtained by polymerizing a polymerizable liquid crystal composition containing a liquid crystal compound having two or more polymerizable functional groups in an amount of 25% by weight or more.

2. The liquid crystal display device according to Claim 1, containing a compound represented by General Formula (1), as the liquid crystal compound having two or more polymerizable functional groups:

$P^1-(Sp^1)_{m1}-MG-R^1$ (1)

wherein $P^1$ represents a polymerizable functional group, $Sp^1$ represents an alkylene group having 0 to 18 carbon atoms, the alkylene group may be substituted with one or more of a halogen atom, -CN, and an alkyl group having 1 to 8 carbon atoms having a polymerizable functional group, and one $CH_2$ group or two or more $CH_2$ groups non-adjacent to each other present in the alkylene group each independently may be substituted with -O-, -S-, -NH-, -N($CH_3$)-, -CO-, -COO-, -OCO-, -OCOO-, -SCO-, -COS-, or -C≡C- as long as an oxygen atom is not directly bonded to another oxygen atom,
m1 represents 0 or 1,
MG represents a mesogenic group or a mesogenic supporting group,
$R^1$ represents a hydrogen atom, a halogen atom, a cyano group, or an alkyl group having 1 to 18 carbon atoms, the alkyl group may be substituted with one or more of a halogen atom or CN, and one $CH_2$ group present in the alkyl group or two or more $CH_2$ groups non-adjacent to each other each independently may be substituted with -O-, -S-, -NH-, -N($CH_3$)-, -CO-, -COO-, -OCO-, -OCOO-, -SCO-, -COS-, or -C≡C-as long as an oxygen atom is not directly bonded to another oxygen atom, or $R^1$ represents a structure represented by General Formula (1-a):

$$-(Sp^{1a})_{ma}-P^{1a} \qquad (1\text{-a})$$

wherein $P^{1a}$ represents a polymerizable functional group, $Sp^{1a}$ represents the same meaning as the $Sp^1$ defined above and ma represents 0 or 1,

wherein the mesogenic group or the mesogenic supporting group represented by MG is represented by General Formula (1-b) :

$$-Z0-(A1-Z1)_n-(A2-Z2)_l-(A3-Z3)_k-A4-Z4-A5-Z5- \qquad (1\text{-b})$$

wherein A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and may have, as a substituent, one or more of F, Cl, $CF_3$, $OCF_3$, a CN group, an alkyl groups having 1 to 8 carbon atoms, an alkoxy group, an alkanoyl group, an alkanoyloxy group, an alkenyl group having 2 to 8 carbon atoms, an alkenyloxy group, an alkenoyl group, an alkenoyloxy group, and a substituent represented by General Formula (1-c):

$$-\left(A\right)_{n1}\left(Sp^{1c}\right)_{mc}P^{c} \qquad (1\text{-c})$$

wherein $P^c$ represents a polymerizable functional group, A represents -O-, -COO-, -OCO-, -$OCH_2$-, -$CH_2O$-, -$CH_2CH_2OCO$-, -$COOCH_2CH_2$-, -$OCOCH_2CH_2$-, or a single bond,
$Sp^{1c}$ represents the same meaning as the $Sp^1$, n1 represents 0 or 1, and mc represents 0 or 1), Z0, Z1, Z2, Z3, Z4, and Z5 each independently represent -COO-, -OCO-, -$CH_2CH_2$-, -$OCH_2$-, -$CH_2O$-, -CH=CH-, -C≡C-, -CH=CHCOO-, -OCOCH=CH-, -$CH_2CH_2COO$-, -$CH_2CH_2OCO$-, -$COOCH_2CH_2$-, -$OCOCH_2CH_2$-, -CONH-, -NHCO-, an alkyl group having 2 to 10 carbon atoms which may have a halogen atom or a single bond, and n, 1, and k each independently represent 0 or 1 and satisfy $0 \leq n + l + k \leq 3$,

with the proviso that in General Formula (1), two or more polymerizable functional groups are present.

**3.** The liquid crystal display device according to Claim 1 or 2,
wherein the retardation film is an optically anisotropic body obtained by polymerizing a polymerizable liquid crystal composition containing a liquid crystal compound having two polymerizable functional groups.

**4.** The liquid crystal display device according to Claim 3, comprising a compound represented by the following General Formula (2), as the liquid crystal compound having two polymerizable functional groups,

$$P^{2a}\text{-}(Sp^{2a})_{m2}\text{-}Z0\text{-}(A1\text{-}Z1)_n\text{-}(A2\text{-}Z2)_l\text{-}(A3\text{-}Z3)_k\text{-}A4\text{-}Z4\text{-}A5\text{-}Z5\text{-}(Sp^{2b})_{n2}\text{-}P^{2b} \quad (2)$$

wherein $P^{2a}$ and $P^{2b}$ represent a polymerizable functional group,
$Sp^{2a}$ and $Sp^{2b}$ each independently represent an alkylene group having 0 to 18 carbon atoms, the alkylene group be substituted with one or more of a halogen atom or CN, and one $CH_2$ group or two or more $CH_2$ groups non-adjacent to each other present in the alkylene group each independently may be substituted with -0-, -S-, -NH-, -N($CH_3$)-, -CO-, -COO-, -OCO-, -OCOO-, -SCO-, -COS-, or -C=C-as long as an oxygen atom is not directly bonded to another oxygen atom,
m2 and n2 each independently represent 0 or 1,
n, 1, and k each independently represent 0 or 1 and satisfy $0 \leq n + l + k \leq 3$,
A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group,
a substituent thereof represents one or more of F, Cl, $CF_3$, $OCF_3$, a CN group, an alkyl group having 1 to 8 carbon atoms, an alkoxy group, an alkanoyl group, an alkanoyloxy group, an alkenyl group having 2 to 8 carbon atoms, an alkenyloxy group, an alkenoyl group, or an alkenoyloxy group,
Z0, Z1, Z2, Z3, Z4, and Z5 each independently represent -COO-, -OCO-, -$CH_2CH_2$-, -$OCH_2$-, -$CH_2O$-, -CH=CH-, -C≡C-, -CH=CHCOO-, -OCOCH=CH-, -$CH_2CH_2COO$-, -$CH_2CH_2OCO$-, -$COOCH_2CH_2$-, -$OCOCH_2CH_2$-, -CONH-, -NHCO-, an alkyl group having 2 to 10 carbon atoms which may have a halogen atom or a single bond, and
n2b, k2b, and 12b each independently represent 0 or 1 and satisfy $0 \leq n + 1 + k \leq 3$.

**5.** The liquid crystal display device according to any one of Claims 1 to 4,
wherein the polymerizable liquid crystal composition further contains a liquid crystal compound having one polymerizable functional group, and the retardation film is an optically anisotropic body obtained by polymerizing the polymerizable liquid crystal composition.

**6.** The liquid crystal display device according to Claim 5,
wherein the liquid crystal compound having one polymerizable functional group is included in the polymerizable liquid crystal composition in the amount of 5% to 75% by weight.

**7.** The liquid crystal display device according to Claim 5 or 6, comprising a compound represented by the following General Formula (4), as the liquid crystal compound having one polymerizable functional group:

$$P^4\text{-}(Sp^4)_{m4}\text{-}MG\text{-}R^4 \quad (4)$$

wherein $P^4$ represents a polymerizable functional group, $Sp^4$ represents an alkylene group having 0 to 18 carbon atoms, the alkylene group may be substituted with one or more of a halogen atom or CN, and one $CH_2$ group or two or more $CH_2$ groups non-adjacent to each other present in the alkylene group each independently may be substituted with -O-, -S-, -NH-, -N($CH_3$)-, -CO-, -COO-, -OCO-, -OCOO-, -SCO-, -COS-, or -C=C-as long as an oxygen atom is not directly bonded to another oxygen atom, m4 represents 0 or 1, MG represents a mesogenic group or a mesogenic supporting group,
$R^4$ represents a hydrogen atom, a halogen atom, a cyano group, or an alkyl group having 1 to 18 carbon atoms, the alkyl group may be substituted with one or more of a halogen atom or CN, and one $CH_2$ group or two or more $CH_2$ groups non-adjacent to each other each present in the alkyl group independently may be substituted with -O-, -S-, -NH-, -N($CH_3$)-, -CO-, -COO-, -OCO-, -OCOO-, -SCO-, -COS-, or -C≡C-, as long as an oxygen atom is not directly bonded to another oxygen atom.

**8.** The liquid crystal display device according to any one of Claims 1 to 7,
wherein the retardation film is configured by a positive A plate and/or a negative C plate.

**9.** The liquid crystal display device according to any one of Claims 1 to 8,

wherein the liquid crystal composition layer further contains a compound represented by General Formula (III):

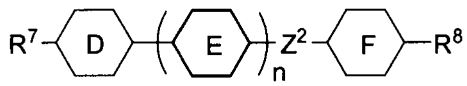 (III)

wherein $R^7$ and $R^8$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, D, E, and F each independently represent a 1,4-phenylene group or trans-1,4-cyclohexylene which may be fluorinated, $Z^2$ represents a single bond, $-OCH_2-$, -OCO-, $-CH_2O-$, or -COO-, and n represents 0, 1, or 2, with the proviso that compounds represented by General Formula (I), General Formula (II-1) and General Formula (II-2) are excluded.

**10.** The liquid crystal display device according to any one of Claims 1 to 9, comprising at least one compound of General Formula (I) in which A represents a trans-1,4-cyclohexylene group and at least one compound of General Formula (I) in which A represents a 1,4-phenylene group.

**11.** The liquid crystal display device according to any one of Claims 1 to 10,
wherein the liquid crystal composition layer contains a compound represented by General Formula (II-1) and/or a compound represented by General Formula (II-2):

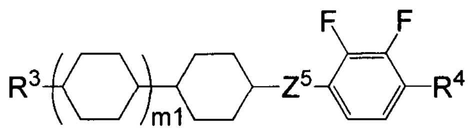 (II-1)

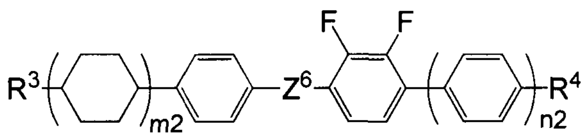 (II-2)

wherein $R^3$ and $R^4$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $Z^5$ and $Z^6$ each independently represent a single bond, -CH=CH-, -C≡C-, $-CH_2CH_2-$, $-(CH_2)_4-$, -COO-, -OCO-, $-OCH_2-$, $-CH_2O-$, $-OCF_2-$, or $-CF_2O-$, and m1, m2, and n2 each independently represent 0 or 1.

**12.** The liquid crystal display device according to any one of Claims 1 to 11,
wherein of the liquid crystal composition constituting the liquid crystal composition layer exhibits a Z 13,000 or less, $\gamma 1$ of 150 or less, and $\Delta n$ of 0.08 to 0.13 with respect to the following equation:

$$Z = \gamma 1 / \Delta n^2$$

wherein $\gamma 1$ represents a rotational viscosity and $\Delta n$ represents a refractive index anisotropy.

**13.** The liquid crystal display device according to any one of Claims 1 to 12,
wherein the liquid crystal composition constituting the liquid crystal composition layer has a nematic liquid crystal phase upper limit temperature of 60°C to 120°C, a nematic liquid crystal phase lower limit temperature of -20°C or less, and a difference between the nematic liquid crystal phase upper limit temperature and the lower limit temperature is from 100 to 150.

**14.** The liquid crystal display device according to any one of Claims 1 to 13,
wherein the liquid crystal composition constituting the liquid crystal composition layer has a specific resistance of $10^{12}(\Omega \cdot m)$ or more.

## Patentansprüche

1. Flüssigkristallanzeigevorrichtung, umfassend:

ein erstes Substrat;
ein zweites Substrat;
eine Flüssigkristallschicht, die zwischen dem ersten Substrat und dem zweiten Substrat angeordnet ist;
einen Retardationsfilm zwischen einem Paar der Substrate; und
wenigstens ein Paar Elektroden,
wobei die Flüssigkristallschicht aus einer Flüssigkristallzusammensetzung besteht, welche eine Verbindung, die durch die allgemeine Formel (I) dargestellt ist, in einer Menge von 10 Gew.-% bis 50 Gew.-% und eine Verbindung, die durch die allgemeine Formel (II) dargestellt ist, in einer Menge von 35 Gew.-% bis 80 Gew.-% enthält:

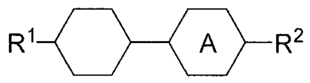 (I)

wobei $R^1$ und $R^2$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen darstellen, und A eine 1,4-Phenylengruppe oder eine trans-1,4-Cyclohexylengruppe darstellt, und

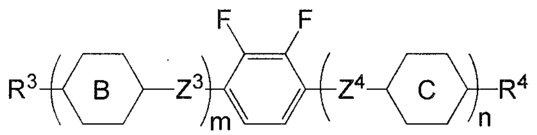 (II)

worin $R^3$ und $R^4$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen darstellen, $Z^3$ und $Z^4$ jeweils unabhängig eine Einfachbindung, -CH=CH-, -C≡C-, $-CH_2CH_2-$, $-(CH_2)_4-$, -COO-, -OCO-, $-OCH_2-$, $-CH_2O-$, $-OCF_2-$ oder $-CF_2O-$ darstellen, B und C jeweils unabhängig eine 1,4-Phenylengruppe oder eine trans-1,4-Cyclohexylengruppe, die fluoriert sein kann, darstellen, und m und n jeweils unabhängig eine ganze Zahl von 0 bis 4 darstellen, und m + n = 1 bis 4; und
die Retardationsfilmschicht ein optisch anisotroper Körper, der durch Polymerisieren einer polymerisierbaren Flüssigkristallzusammensetzung, die eine Flüssigkristallverbindung mit zwei oder mehreren polymerisierbaren funktionellen Gruppen in einer Menge von 25 Gew.-% oder mehr enthält, erhalten wurde, ist.

2. Flüssigkristallanzeigevorrichtung gemäß Anspruch 1, die eine Verbindung, die durch die allgemeine Formel (1) dargestellt ist, als die Flüssigkristallverbindung mit zwei oder mehreren polymerisierbaren funktionellen Gruppen enthält:

$$P^1\text{-}(Sp^1)_{m1}\text{-}MG\text{-}R^1 \qquad (1)$$

wobei $P^1$ eine polymerisierbare funktionelle Gruppe darstellt,
$Sp^1$ eine Alkylengruppe mit 0 bis 18 Kohlenstoffatomen darstellt, wobei die Alkylengruppe mit einem oder mehreren eines Halogenatoms, -CN und einer Alkylgruppe mit 1 bis 8 Kohlenstoffatomen mit einer polymerisierbaren funktionellen Gruppe substituiert sein kann, und eine $CH_2$-Gruppe oder zwei oder mehrere $CH_2$-Gruppen, die in der Alkylengruppe nicht nebeneinander vorliegen, jeweils unabhängig durch -O-, -S-, -NH-, $-N(CH_3)-$, -CO-, -COO-, -OCO-, -OCOO-, -SCO-, -COS- oder -C≡Cersetzt sein kann/können, solange ein Sauerstoffatom nicht direkt an ein anders Sauerstoffatom gebunden ist,
m1 0 oder 1 darstellt,
MG eine mesogene Gruppe oder eine mesogene unterstützende Gruppe darstellt,
$R^1$ ein Wasserstoffatom, ein Halogenatom, eine Cyanogruppe oder eine Alkylgruppe mit 1 bis 18 Kohlenstoffatomen darstellt, wobei die Alkylgruppe mit einem oder mehreren eines Halogenatoms oder CN substituiert sein kann, und eine $CH_2$-Gruppe, die in der Alkylgruppe vorliegt, oder zwei oder mehrere $CH_2$-Gruppen, die nicht nebeneinander vorliegen, jeweils unabhängig durch -O-, -S-, -NH-, $-N(CH_3)-$, -CO-, -COO-, -OCO-,

-OCOO-, -SCO-, -COS- oder -C≡C- ersetzt sein kann/können, solange ein Sauerstoffatom nicht direkt an ein anderes Sauerstoffatom gebunden ist, oder $R^1$ eine Struktur, die durch die allgemeine Formel (1-a) dargestellt ist, darstellt:

$$-(Sp^{1a})_{ma}-P^{1a} \qquad (1\text{-}a)$$

wobei $P^{1a}$ eine polymerisierbare funktionelle Gruppe darstellt, $Sp^{1a}$ die gleiche Bedeutung wie das oben definierte $Sp^1$ darstellt und ma 0 oder 1 darstellt,

wobei die mesogene Gruppe oder die mesogene unterstützende Gruppe, die durch MG dargestellt ist, durch die allgemeine Formel (1-b) dargestellt ist:

$$-Z0-(A1-Z1)_n-(A2-Z2)_l-(A3-Z3)_k-A4-Z4-A5-Z5- \qquad (1\text{-}b)$$

wobei A1, A2, A3, A4 und A5 jeweils unabhängig eine 1,4-Phenylengruppe, eine 1,4-Cyclohexylengruppe, eine 1,4-Cyclohexenylgruppe, eine Tetrahydropyran-2,5-diylgruppe, eine 1,3-Dioxan-2,5-diylgruppe, eine Tetrahydrothiopyran-2,5-diylgruppe, eine 1,4-Bicyclo(2,2,2)octylengruppe, eine Decahydronaphthalin-2,6-diylgruppe, eine Pyridin-2,5-diylgruppe, eine Pyrimidin-2,5-diylgruppe, eine Pyrazin-2,5-diylgruppe, eine Thiophen-2,5-diylgruppe-, eine 1,2,3,4-Tetrahydronaphthalin-2,6-diylgruppe, eine 2,6-Naphthylengruppe, eine Phenanthren-2,7-diylgruppe, eine 9,10-Dihydrophenanthren-2,7-diylgruppe, eine 1,2,3,4,4a,9,10a-Octahydrophenanthren-2,7-diylgruppe, eine 1,4-Naphthylengruppe, eine Benzo[1,2-b:4,5-b']dithiophen-2,6-diylgruppe, eine Benzo[1,2-b:4,5-b']diselenophen-2,6-diylgruppe, eine [1]Benzothieno[3,2-b]thiophen-2,7-diylgruppe, eine [1]Benzoselenopheno[3,2-b]selenophen-2,7-diylgruppe oder eine Fluoren-2,7-diylgruppe darstellen und als einen Substituenten eines oder mehrere von F, Cl, $CF_3$, $OCF_3$, einer CN-Gruppe, einer Alkylgruppe mit 1 bis 8 Kohlenstoffatomen, einer Alkoxygruppe, einer Alkanoylgruppe, einer Alkanoyloxygruppe, einer Alkenylgruppe mit 2 bis 8 Kohlenstoffatomen, einer Alkenyloxygruppe, einer Alkenoylgruppe, einer Alkenoyloxygruppe und einem Substituenten, der durch die allgemeine Formel (1-c) dargestellt ist, besitzen können:

$$-(A)_{n1}-(Sp^{1c})_{mc}-P^{c} \qquad (1\text{-}c)$$

wobei $P^c$ eine polymerisierbare funktionelle Gruppe darstellt, A -O-, -COO-, -OCO-, $-OCH_2-$, $-CH_2O-$, $-CH_2CH_2OCO-$, $-COOCH_2CH_2-$, $-OCOCH_2CH_2-$ oder eine Einfachbindung darstellt,
$Sp^{1c}$ die gleiche Bedeutung wie das $Sp^1$ darstellt, n1 0 oder 1 darstellt und mc 0 oder 1 darstellt, Z0, Z1, Z2, Z3, Z4 und Z5 jeweils unabhängig -COO-, -OCO-, $-CH_2CH_2-$, $-OCH_2-$, $-CH_2O-$, -CH=CH-, -C≡C-, -CH=CHCOO-, -OCOCH=CH-, $-CH_2CH_2COO-$, $-CH_2CH_2OCO-$, $-COOCH_2CH_2-$, $-OCOCH_2CH_2-$, -CONH-, -NHCO-, eine Alkylgruppe mit 2 bis 10 Kohlenstoffatomen, die ein Halogenatom besitzen kann, oder eine Einfachbindung darstellen und
n, l und k jeweils unabhängig 0 oder 1 darstellen und dem Folgenden genügen: $0 \leq n + l + k \leq 3$,
mit der Maßgabe, dass in der allgemeinen Formel (1) zwei oder mehrere polymerisierbare funktionelle Gruppen vorliegen.

**3.** Flüssigkristallanzeigevorrichtung gemäß Anspruch 1 oder 2,
wobei der Retardationsfilm ein optisch anisotroper Körper, der durch Polymerisieren einer polymerisierbaren Flüssigkristallzusammensetzung, die eine Flüssigkristallverbindung mit zwei polymerisierbaren funktionellen Gruppen enthält, erhalten wurde, ist.

**4.** Flüssigkristallanzeigevorrichtung gemäß Anspruch 3, umfassend eine Verbindung, die durch die folgende allgemeine Formel (2) dargestellt ist, als die Flüssigkristallverbindung mit zwei polymerisierbaren funktionellen Gruppen,

$$P^{2a}-(Sp^{2a})_{m2}-Z0-(A1-Z1)_n-(A2-Z2)_l-(A3-Z3)_k-A4-Z4-A5-Z5-(Sp^{2b})_{n2}-P^{2b} \qquad (2)$$

wobei $P^{2a}$ und $P^{2b}$ eine polymerisierbare funktionelle Gruppe darstellen,
$Sp^{2a}$ und $Sp^{2b}$ jeweils unabhängig eine Alkylengruppe mit 0 bis 8 Kohlenstoffatomen darstellen, wobei die Alkylengruppe mit einem oder mehreren eines Halogenatoms oder CN substituiert sein kann, und eine $CH_2$-Gruppe oder zwei oder mehrere $CH_2$-Gruppen, die nicht nebeneinander in der Alkylengruppe vorliegen, jeweils unabhängig durch -O-, -S-, -NH-, $-N(CH_3)-$, -CO-, -COO-, -OCO-, -OCOO-, -SCO-, -COS- oder -C≡C-

substituiert sein kann/können, solange ein Sauerstoffatom nicht direkt an ein anderes Sauerstoffatom gebunden ist,
m2 und n2 jeweils unabhängig 0 oder 1 darstellen,
n, l und k jeweils unabhängig 0 oder 1 darstellen und dem Folgenden genügen: $0 \leq n + l + k \leq 3$,
A1 A2, A3, A4 und A5 jeweils unabhängig eine 1,4-Phenylengruppe, eine 1,4-Cyclohexylengruppe, eine 1,4-Cyclohexenylgruppe, eine Tetrahydropyran-2,5-diylgruppe, eine 1,3-Dioxan-2,5-diylgruppe, eine Tetrahydrothiopyran-2,5-diylgruppe, eine 1,4-Bicyclo(2,2,2)octylengruppe, eine Decahydronaphthalin-2,6-diylgruppe, eine Pyridin-2,5-diylgruppe, eine Pyrimidin-2,5-diylgruppe, eine Pyrazin-2,5-diylgruppe, eine Thiophen-2,5-diylgruppe-, eine 1,2,3,4-Tetrahydronaphthalin-2,6-diylgruppe, eine 2,6-Naphthylengruppe, eine Phenanthren-2,7-diylgruppe, eine 9,10-Dihydrophenanthren-2,7-diylgruppe, eine 1,2,3,4,4a,9,10a-Octahydrophenanthren-2,7-diylgruppe, eine 1,4-Naphthylengruppe, eine Benzo[1,2-b:4,5-b']dithiophen-2,6-diylgruppe, eine Benzo[1,2-b:4,5-b']diselenophen-2,6-diylgruppe, eine [1]Benzothieno[3,2-b]thiophen-2,7-diylgruppe, eine [1]Benzoselenopheno[3,2-b]selenophen-2,7-diylgruppe oder eine Fluoren-2,7-diylgruppe darstellen,
ein Substituent davon eines oder mehrere von F, Cl, $CF_3$, $OCF_3$, einer CN-Gruppe, einer Alkylgruppe mit 1 bis 8 Kohlenstoffatomen, einer Alkoxygruppe, einer Alkanoylgruppe, einer Alkanoyloxygruppe, einer Alkenylgruppe mit 2 bis 8 Kohlenstoffatomen, einer Alkenyloxygruppe, einer Alkenoylgruppe oder einer Alkenoyloxygruppe darstellt,
Z0, Z1, Z2, Z3, Z4 und Z5 jeweils unabhängig -COO-, -OCO-, $-CH_2CH_2-$, $-OCH_2-$, $-CH_2O-$, -CH=CH-, -C≡C-, -CH=CHCOO-, -OCOCH=CH-, $-CH_2CH_2COO-$, $-CH_2CH_2OCO-$, $-COOCH_2CH_2-$, $-OCOCH_2CH_2-$, -CONH-, -NHCO-, eine Alkylgruppe mit 2 bis 10 Kohlenstoffatomen, die ein Halogenatom besitzen kann, oder eine Einfachbindung darstellen, und
n2b, k2b und 12b jeweils unabhängig 0 oder 1 darstellen und dem Folgenden genügen: $0 \leq n + l + k \leq 3$

5. Flüssigkristallanzeigevorrichtung gemäß einem der Ansprüche 1 bis 4,
wobei die polymerisierbare Flüssigkristallzusammensetzung weiterhin eine Flüssigkristallverbindung mit einer polymerisierbaren funktionellen Gruppe enthält und der Retardationsfilm ein optisch anisotroper Körper, der durch Polymerisieren der polymerisierbaren Flüssigkristallzusammensetzung erhalten wurde, ist.

6. Flüssigkristallanzeigevorrichtung gemäß Anspruch 5,
wobei die Flüssigkristallverbindung mit einer polymerisierbaren funktionellen Gruppe in der polymerisierbaren Flüssigkristallzusammensetzung in der Menge von 5 Gew.-% bis 75 Gew.-% enthalten ist.

7. Flüssigkristallanzeigevorrichtung gemäß Anspruch 5 oder 6, umfassend eine Verbindung, die durch die folgende allgemeine Formel (4) dargestellt ist, als die Flüssigkristallverbindung mit einer polymerisierbaren funktionellen Gruppe:

$$P^4\text{-}(Sp^4)_{m4}\text{-}MG\text{-}R^4 \qquad (4)$$

wobei $P^4$ eine polymerisierbare funktionelle Gruppe darstellt,
$Sp^4$ eine Alkylengruppe mit 0 bis 18 Kohlenstoffatomen darstellt, wobei die Alkylengruppe mit einem oder mehreren von eines Halogenatoms oder CN substituiert sein kann, und eine $CH_2$-Gruppe oder zwei oder mehrere $CH_2$-Gruppen, die nicht nebeneinander in der Alkylengruppe vorliegen, jeweils unabhängig durch -O-, -S-, -NH-, $-N(CH_3)-$, -CO-, -COO-, -OCO-, -OCOO-, -SCO-, -COS- oder -C≡C- ersetzt sein kann/können, solange ein Sauerstoffatom nicht direkt an ein anderes Sauerstoffatom gebunden ist, m4 0 oder 1 darstellt, MG eine mesogene Gruppe oder eine mesogene unterstützende Gruppe darstellt,
$R^4$ ein Wasserstoffatom, ein Halogenatom, eine Cyanogruppe oder eine Alkylgruppe mit 1 bis 18 Kohlenstoffatomen darstellt, wobei die Alkylgruppe mit einem oder mehreren eines Halogenatoms oder CN substituiert sein kann, und eine $CH_2$-Gruppe oder zwei oder mehrere $CH_2$-Gruppen, die nicht nebeneinander in der Alkylgruppe vorliegen, unabhängig durch -O-, -S-, -NH-, $-N(CH_3)-$, -CO-, -COO-, -OCO-, -OCOO-, -SCO-, -COS- oder -C=C- ersetzt sein kann/können, solange ein Sauerstoffatom nicht direkt an ein anders Sauerstoffatom gebunden ist.

8. Flüssigkristallanzeigevorrichtung gemäß einem der Ansprüche 1 bis 7,
wobei der Retardationsfilm durch eine positive A-Platte und/oder eine negative C-Platte konfiguriert ist.

9. Flüssigkristallanzeigevorrichtung gemäß einem der Ansprüche 1 bis 8,
wobei die Flüssigkristallzusammensetzungsschicht weiterhin eine Verbindung, die durch die allgemeine Formel (III) dargestellt ist, enthält:

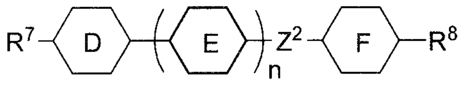 (III)

wobei $R^7$ und $R^8$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen darstellen, D, E und F jeweils unabhängig eine 1,4-Phenylengruppe oder trans-1,4-Cyclohexylen, die fluoriert sein können, darstellen, $Z^2$ eine Einfachbindung, $-OCH_2-$, -OCO-, $-CH_2O-$ oder -COO- darstellt, und n 0, 1 oder 2 darstellt, mit der Maßgabe, dass Verbindungen, die durch die allgemeine Formel (I), die allgemeine Formel (II-1) und die allgemeine Formel (II-2) dargestellt sind, ausgeschlossen sind.

**10.** Flüssigkristallanzeigevorrichtung gemäß einem der Ansprüche 1 bis 9, umfassend wenigstens eine Verbindung der allgemeinen Formel (I), in der A eine trans-1,4-Cyclohexylengruppe darstellt, und wenigstens eine Verbindung der allgemeinen Formel (I), in der A eine 1,4-Phenylengruppe darstellt.

**11.** Flüssigkristallanzeigevorrichtung gemäß einem der Ansprüche 1 bis 10,
wobei die Flüssigkristallzusammensetzungsschicht eine Verbindung, die durch die allgemeine Formel (II-1) dargestellt ist, und/oder eine Verbindung, die durch die allgemeine Formel (II-2) dargestellt ist, enthält:

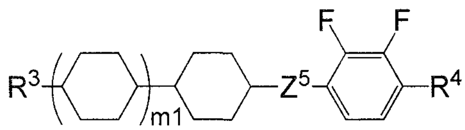 (II-1)

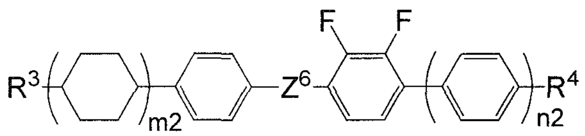 (II-2)

wobei $R^3$ und $R^4$ jeweils unabhängig eine Alkylgruppe mit 1 bis 8 Kohlenstoffatomen, eine Alkenlygruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen darstellen, $Z^5$ und $Z^6$ jeweils unabhängig eine Einfachbindung, -CH=CH-, $-C{\equiv}C-$, $-CH_2CH_2-$, $-(CH_2)_4-$, -COO-, -OCO-, $-OCH_2-$, $-CH_2O-$, $-OCF_2-$ oder $-CF_2O-$ darstellen, und m1, m2 und n2 jeweils unabhängig 0 oder 1 darstellen.

**12.** Flüssigkristallanzeigevorrichtung gemäß einem der Ansprüche 1 bis 10,
wobei die Flüssigkristallzusammensetzung, die die Flüssigkristallzusammensetzungsschicht bildet, ein Z von 13.000 oder weniger, ein $\gamma 1$ von 150 oder weniger und ein $\Delta n$ von 0,08 bis 0,13, in Bezug auf die folgende Gleichung, zeigt:

$$Z = \gamma 1 / \Delta n^2$$

wobei $\gamma 1$ eine Rotationsviskosität darstellt und $\Delta n$ eine Anisotropie des Brechungsindex darstellt.

**13.** Flüssigkristallanzeigevorrichtung gemäß einem der Ansprüche 1 bis 12,
wobei die Flüssigkristallzusammensetzung, die die Flüssigkristallzusammensetzungsschicht bildet, eine obere Grenztemperatur der nematischen Flüssigkristallphase von 60°C bis 120°C, eine untere Grenztemperatur der nematischen Flüssigkristallphase von -20°C oder weniger und eine Differenz zwischen der oberen Grenztemperatur und der unteren Grenztemperatur der nematischen Flüssigkristallphase von 100 bis 150 besitzt.

**14.** Flüssigkristallanzeigevorrichtung gemäß einem der Ansprüche 1 bis 13,
wobei die Flüssigkristallzusammensetzung, die die Flüssigkristallzusammensetzungsschicht bildet, einen spezifischen Widerstand von $10^{12}(\Omega \cdot m)$ oder mehr besitzt.

## Revendications

1. Dispositif d'affichage à cristaux liquides comprenant :

   un premier substrat ;
   un second substrat ;
   une couche de cristaux liquides intercalée entre le premier substrat et le second substrat ;
   un film retardateur entre une paire des substrats ; et
   au moins une paire d'électrodes,
   dans lequel la couche de cristaux liquides est composée d'une composition à cristaux liquides qui contient un composé représenté par la formule générale (I) dans une quantité de 10 % à 50 % en poids et un composé représenté par la formule générale (II) dans une quantité de 35 % à 80 % en poids :

   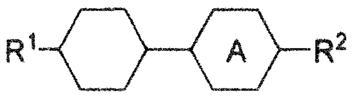 (I)

   dans laquelle $R^1$ et $R^2$ représentent chacun indépendamment un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone, et A représente un groupe 1,4-phénylène ou un groupe trans-1,4-cyclohexylène, et

   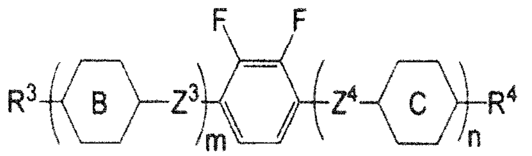 (II)

   dans laquelle $R^3$ et $R^4$ représentent chacun indépendamment un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone, $Z^3$ et $Z^4$ représentent chacun indépendamment une liaison simple, -CH=CH-, -C=C-, $-CH_2CH_2-$, $-(CH_2)_4-$, -COO-, -OCO-, $-OCH_2-$, $-CH_2O-$ $-OCF_2-$ ou $-CF_2O-$, B et C représentent chacun indépendamment un groupe 1,4-phénylène ou un groupe trans-1,4-cyclohexylène, qui peut être fluoré, et m et n représentent chacun indépendamment un entier de 0 à 4, et m + n = 1 à 4 ; et
   la couche de film retardateur est un corps optiquement anisotrope obtenu en polymérisant une composition à cristaux liquides polymérisable contenant un composé à cristaux liquides ayant deux groupes fonctionnels polymérisables ou plus dans une quantité de 25 % en poids ou plus.

2. Dispositif d'affichage à cristaux liquides selon la revendication 1, contenant un composé représenté par la formule générale (1), en tant que le composé à cristaux liquides ayant deux groupes fonctionnels polymérisables ou plus :

   $$P^1\text{-}(Sp^1)_{m1}\text{-}MG\text{-}R^1 \qquad (1)$$

   dans laquelle $P^1$ représente un groupe fonctionnel polymérisable, $Sp^1$ représente un groupe alkylène ayant 0 à 18 atomes de carbone, le groupe alkylène peut être substitué par un ou plusieurs entre un atome d'halogène, -CN et un groupe alkyle ayant 1 à 8 atomes de carbone ayant un groupe fonctionnel polymérisable, et un groupe $CH_2$ ou deux groupes $CH_2$ ou plus non adjacents les uns aux autres présents dans le groupe alkylène peuvent chacun être indépendamment substitués par -O-, -S-, -NH-, $-N(CH_3)-$, -CO-, -COO-, -OCO-, -OCOO-, -SCO-, -COS- ou - C=C- tant qu'un atome d'oxygène n'est pas lié directement à un autre atome d'oxygène,
   m1 représente 0 ou 1,
   MG représente un groupe mésogène ou un groupe de support mésogène,
   $R^1$ représente un atome d'hydrogène, un atome d'halogène, un groupe cyano ou un groupe alkyle ayant 1 à 18 atomes de carbone, le groupe alkyle peut être substitué par un ou plusieurs entre un atome d'halogène ou CN, et un groupe $CH_2$ présent dans le groupe alkyle ou deux groupes $CH_2$ ou plus non adjacents les uns aux autres peuvent être indépendamment substitués par -O-, -S-, -NH-, $-N(CH_3)-$, -CO-, -COO-, - OCO-, -OCOO-, -SCO-, -COS- ou -C=C- tant qu'un atome d'oxygène n'est pas lié directement à un autre atome d'oxygène, ou

$R^1$ représente une structure représentée par la formule générale (1-a) :

$$-(Sp^{1a})_{ma}-P^{1a} \qquad (1\text{-a})$$

dans laquelle $P^{1a}$ représente un groupe fonctionnel polymérisable, $Sp^{1a}$ représente la même signification que le $Sp^1$ défini ci-dessus et ma représente 0 ou 1,

dans laquelle le groupe mésogène ou le groupe de support mésogène représenté par MG est représenté par la formule générale (1-b) :

$$-Z0-(A-Z1)_n-(A2-Z2)_l-(A3-Z3)_k-A4-Z4-A5-Z5- \qquad (1\text{-b})$$

dans laquelle A1, A2, A3, A4 et A5 représentent chacun indépendamment un groupe 1,4-phénylène, un groupe 1,4-cyclohexylène, un groupe 1,4-cyclohexényle, un groupe tétrahydropyran-2,5-diyle, un groupe 1,3-dioxane-2,5-diyle, un groupe tétrahydrothiopyran-2,5-diyle, un groupe 1,4-bicyclo(2,2,2)octylène, un groupe décahydronaphthalène-2,6-diyle, un groupe pyridine-2,5-diyle, un groupe pyrimidine-2,5-diyle, un groupe pyrazine-2,5-diyle, un groupe thiophène-2,5-diyle-, un groupe 1,2,3,4-tétrahydronaphthalène-2,6-diyle, un groupe 2,6-naphthylène, un groupe phénanthrène-2,7-diyle, un groupe 9,10-dihydrophénanthrène-2,7-diyle, un groupe 1,2,3,4,4a,9,10a-octahydrophénanthrène-2,7-diyle, un groupe 1,4-naphthylène, un groupe benzo[1,2-b :4,5-b']dithiophène-2,6-diyle, un groupe benzo[1,2-b :4,5-b']disélénophène-2,6-diyle, un groupe [1]benzothiéno[3,2-b]thiophène-2,7-diyle, un groupe [1]benzosélénophéno[3,2-b]sélénophène-2,7-diyle ou un groupe fluorène-2,7-diyle, et peuvent avoir, en tant que substituant, un ou plusieurs groupes F, Cl, $CF_3$, $OCF_3$, un groupe CN, un groupe alkyle ayant 1 à 8 atomes de carbone, un groupe alcoxy, un groupe alcanoyle, un groupe alcanoyloxy, un groupe alcényle ayant 2 à 8 atomes de carbone, un groupe alcényloxy, un groupe alcénoyle, un groupe alcénoyloxy et un substituant représenté par la formule générale (1-c) :

$$-(A)_{n1}-(Sp^{1c})_{mc}-P^{c} \qquad (1\text{-c})$$

dans laquelle $P^c$ représente un groupe fonctionnel polymérisable, A représente -O-, -COO-, -OCO-, $-OCH_2-$, $-CH_2O-CH_2CH_2OCO-$, $-COOCH_2CH_2-$, $-OCOCH_2CH_2-$ ou une liaison simple,
$Sp^{1c}$ représente la même signification que le $Sp^1$, n1 représente 0 ou 1, et mc représente 0 ou 1), Z0, Z1, Z2, Z3, Z4 et Z5 représentent chacun indépendamment -COO-, -OCO-, $-CH_2CH_2-$, $-OCH_2-$,$-CH_2O-$, -CH=CH-, -C≡C-, -CH=CHCOO-, -OCOCH=CH-, $-CH_2CH_2COO-$,$-CH_2CH_2OCO-$, $-COOCH_2CH_2-$, $-OCOCH_2CH_2-$, -CONH-, -NHCO-, un groupe alkyle ayant 2 à 10 atomes de carbone qui peuvent avoir un atome d'halogène ou une liaison simple, et
n, 1 et k représentent chacun indépendamment 0 ou 1 et satisfont $0 \leq n + 1 + k \leq 3$,

à condition que dans la formule générale (1), deux groupes fonctionnels polymérisables ou plus sont présents.

**3.** Dispositif d'affichage à cristaux liquides selon la revendication 1 ou 2,
dans lequel le film retardateur est un corps optiquement anisotrope obtenu en polymérisant une composition à cristaux liquides polymérisable contenant un composé à cristaux liquides ayant deux groupes fonctionnels polymérisables.

**4.** Dispositif d'affichage à cristaux liquides selon la revendication 3, comprenant un composé représenté par la formule générale (2) suivante, en tant que composé à cristaux liquides ayant deux groupes fonctionnels polymérisables,

$$P^{2a}-(Sp^{2a})_{m2}-Z0-(A1-Z1)_n-(A2-Z2)_l-(A3-Z3)_k-A4-Z4-A5-Z5-(Sp^{2b})_{n2}-P^{2b} \qquad (2)$$

dans laquelle $P^{2a}$ et $P^{2b}$ représentent un groupe fonctionnel polymérisable,
$Sp^{2a}$ et $Sp^{2b}$ représentent chacun indépendamment un groupe alkylène ayant 0 à 18 atomes de carbone, le groupe alkylène étant substitué par un ou plusieurs entre un atome d'halogène ou CN, et un groupe $CH_2$ ou deux groupes $CH_2$ ou plus non adjacents les uns aux autres présents dans le groupe alkylène peuvent chacun être indépendamment substitués par -O-, -S-, -NH-, $-N(CH_3)-$, -CO-, -COO-, -OCO-, -OCOO-,-SCO-, -COS- ou -C≡C- tant qu'un atome d'oxygène n'est pas lié directement à un autre atome d'oxygène,

$m^2$ et $n^2$ représentent chacun indépendamment 0 ou 1,

n, l et k représentent chacun indépendamment 0 ou 1 et satisfont $0 \leq n + l + k \leq 3$,

A1, A2, A3, A4 et A5 représentent chacun indépendamment un groupe 1,4-phénylène, un groupe 1,4-cyclohexylène, un groupe 1,4-cyclohexényle, un groupe tétrahydropyran-2,5-diyle, un groupe 1,3-dioxane-2,5-diyle, un groupe tétrahydrothiopyran-2,5-diyle, un groupe 1,4-bicyclo(2,2,2)octylène, un groupe décahydronaphthalène-2,6-diyle, un groupe pyridine-2,5-diyle, un groupe pyrimidine-2,5-diyle, un groupe pyrazine-2,5-diyle, un groupe thiophène-2,5-diyle-, un groupe 1,2,3,4-tétrahydronaphthalène-2,6-diyle, un groupe 2,6-naphthylène, un groupe phénanthrène-2,7-diyle, un groupe 9,10-dihydrophénanthrène-2,7-diyle, un groupe 1,2,3,4,4a,9,10a-octahydrophénanthrène-2,7-diyle, un groupe 1,4-naphthylène, un groupe benzo[1,2-b :4,5-b']dithiophène-2,6-diyle, un groupe benzo[1,2-b :4,5-b']disélénophène-2,6-diyle, un groupe [1]benzothiéno[3,2-b]thiophène-2,7-diyle, un groupe [1]benzosélénophéno[3,2-b]sélénophène-2,7-diyle ou un groupe fluorène-2,7-diyle,

un substituant de celui-ci représente un ou plusieurs entre F, Cl, $CF_3$, $OCF_3$, un groupe CN, un groupe alkyle ayant 1 à 8 atomes de carbone, un groupe alcoxy, un groupe alcanoyle, un groupe alcanoyloxy, un groupe alcényle ayant 2 à 8 atomes de carbone, un groupe alcényloxy, un groupe alcénoyle ou un groupe alcénoyloxy,

Z0, Z1, Z2, Z3, Z4 et Z5 représentent chacun indépendamment -COO-, -OCO-, $-CH_2CH_2-$, $-OCH_2-$, $-CH_2O-$, -CH=CH-,-C=C-, -CH=CHCOO-, -OCOCH=CH-, $-CH_2CH_2COO-$, $-CH_2CH_2OCO-$,$-COOCH_2CH_2-$, $-OCOCH_2CH_2-$, -CONH-, -NHCO-, un groupe alkyle ayant 2 à 10 atomes de carbone qui peuvent être un atome d'halogène ou une liaison simple, et

n2b, k2b et 12b représentent chacun indépendamment 0 ou 1 et satisfont $0 \leq n + 1 + k \leq 3$.

**5.** Dispositif d'affichage à cristaux liquides selon l'une quelconque des revendications 1 à 4, dans lequel la composition à cristaux liquides polymérisable contient en outre un composé à cristaux liquides ayant un groupe fonctionnel polymérisable, et le film retardateur est un corps optiquement anisotrope obtenu en polymérisant la composition à cristaux liquides polymérisable.

**6.** Dispositif d'affichage à cristaux liquides selon la revendication 5, dans lequel le composé à cristaux liquides ayant un groupe fonctionnel polymérisable est inclus dans la composition à cristaux liquides polymérisable dans la quantité de 5 % à 75 % en poids.

**7.** Dispositif d'affichage à cristaux liquides selon la revendication 5 ou 6, comprenant un composé représenté par la formule générale (4) suivante, en tant que composé à cristaux liquides ayant un groupe fonctionnel polymérisable :

$$P^4\text{-}(Sp^4)_{m4}\text{-}MG\text{-}R^4 \qquad (4)$$

dans laquelle $P^4$ représente un groupe fonctionnel polymérisable, $Sp^4$ représente un groupe alkylène ayant 0 à 18 atomes de carbone, le groupe alkylène peut être substitué par un ou plusieurs entre un atome d'halogène ou CN, et un groupe $CH_2$ ou deux groupes $CH_2$ ou plus non adjacents les uns aux autres présents dans le groupe alkylène peuvent être indépendamment substitués par -O-, -S-, -NH-, $-N(CH_3)-$, -CO-, -COO-, -OCO-, -OCOO-, -SCO-, -COS- ou -C≡C- tant qu'un atome d'oxygène n'est pas directement lié à un autre atome d'oxygène, m4 représente 0 ou 1, MG représente un groupe mésogène ou un groupe de support mésogène, $R^4$ représente un atome d'hydrogène, un atome d'halogène, un groupe cyano ou un groupe alkyle ayant 1 à 18 atomes de carbone, le groupe alkyle peut être substitué par un ou plusieurs entre un atome d'halogène ou CN, et un groupe $CH_2$ ou deux groupes $CH_2$ ou plus non adjacents les uns aux autres présents dans le groupe alkyle peuvent être indépendamment substitués par -O-, -S-, -NH-, $-N(CH_3)-$, -CO-, -COO-,-OCO-, -OCOO-, -SCO-, -COS- ou -C≡C-, tant qu'un atome d'oxygène n'est pas directement lié à un autre atome d'oxygène.

**8.** Dispositif d'affichage à cristaux liquides selon l'une quelconque des revendications 1 à 7, dans lequel le film retardateur est configuré par une plaque A positive et/ou une plaque C négative.

**9.** Dispositif d'affichage à cristaux liquides selon l'une quelconque des revendications 1 à 8, dans lequel la couche de composition à cristaux liquides contient en outre un composé représenté par la formule générale (III) :

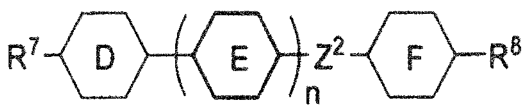

(III)

dans laquelle $R^7$ et $R^8$ représentent chacun indépendamment un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone, D, E, et F représentent chacun indépendamment un groupe 1,4-phénylène ou trans-1,4-cyclohexylène qui peut être fluoré, $Z^2$ représente une liaison simple,-$OCH_2$-, -OCO-, -$CH_2O$- ou -COO-, et n représente 0, 1 ou 2, à condition que les composés représentés par la formule générale (I), la formule générale (II-1) et la formule générale (II-2) soient exclus.

**10.** Dispositif d'affichage à cristaux liquides selon l'une quelconque des revendications 1 à 10, comprenant au moins un composé de formule générale (I) dans lequel A représente un groupe trans-1,4-cyclohexylène et au moins un composé de formule générale (I) dans lequel A représente un groupe 1,4-phénylène.

**11.** Dispositif d'affichage à cristaux liquides selon l'une quelconque des revendications 1 à 10, dans lequel la couche de composition à cristaux liquides contient un composé représenté par la formule générale (II-1) et/ou un composé représenté par la formule générale (II-2) :

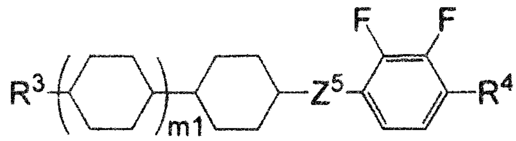
(II-1)

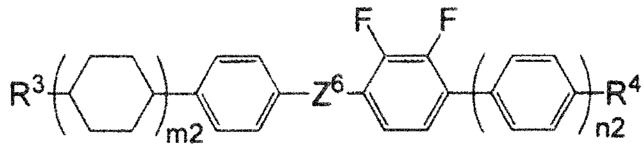
(II-2)

dans laquelle $R^3$ et $R^4$ représentent chacun indépendamment un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone, $Z^5$ et $Z^6$ représentent chacun indépendamment une liaison simple, -CH=CH-, -C≡C-, -$CH_2CH_2$-, -$(CH_2)_4$-, -COO-, -OCO-, -$OCH_2$-, -$CH_2O$-, -$OCF_2$- ou -$CF_2O$-, et m1, m2 et n2 représentent chacun indépendamment 0 ou 1.

**12.** Dispositif d'affichage à cristaux liquides selon l'une quelconque des revendications 1 à 11,
dans lequel la composition à cristaux liquides constituant la couche de composition à cristaux liquides présente un Z de 13 000 ou moins, $\gamma 1$ de 150 ou moins et $\Delta n$ de 0,08 à 0,13 par rapport à l'équation suivante :

$$Z = \gamma 1 / \Delta n^2$$

dans laquelle $\gamma 1$ représente une viscosité de rotation et $\Delta n$ représente une anisotropie d'indice de réfraction.

**13.** Dispositif d'affichage à cristaux liquides selon l'une quelconque des revendications 1 à 12,
dans lequel la composition à cristaux liquides constituant la couche de composition à cristaux liquides a une température limite supérieure de phase de cristal liquide nématique de 60 °C à 120 °C, une température limite inférieure de phase de cristal liquide nématique de-20 °C ou moins, et une différence entre la température limite supérieure de phase liquide nématique et la température limite inférieure est de 100 à 150.

**14.** Dispositif d'affichage à cristaux liquides selon l'une quelconque des revendications 1 à 13,
dans lequel la composition à cristaux liquides constituant la couche de composition à cristaux liquides a une résistance spécifique de $10^{12}$ ($\Omega \cdot m$) ou plus.

[Fig. 1]

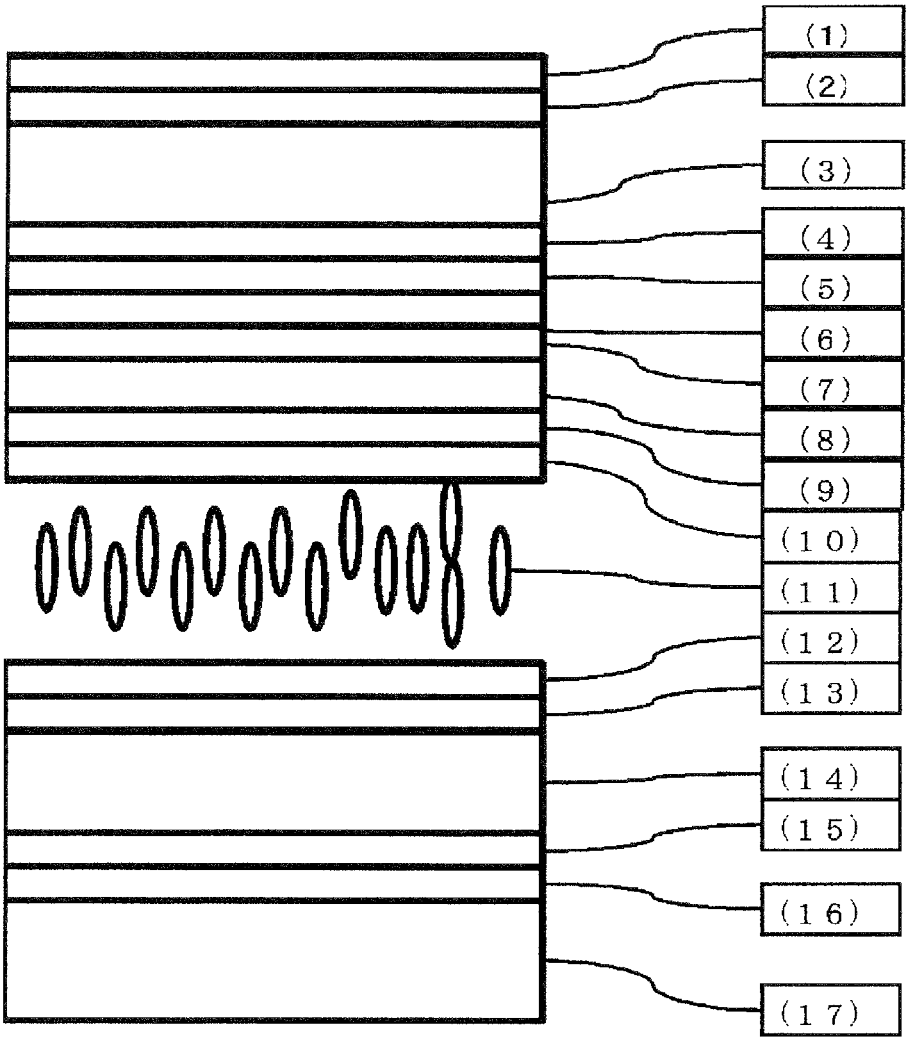

[Fig. 2]

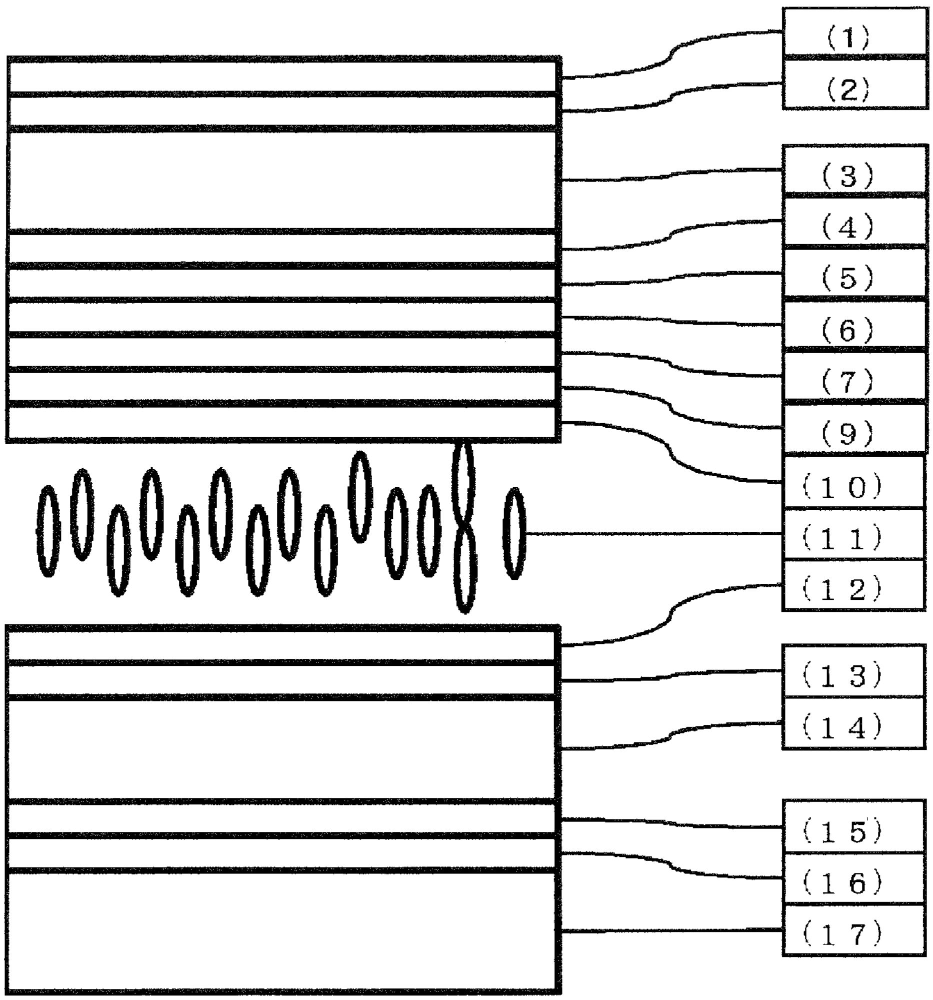

[Fig. 3]

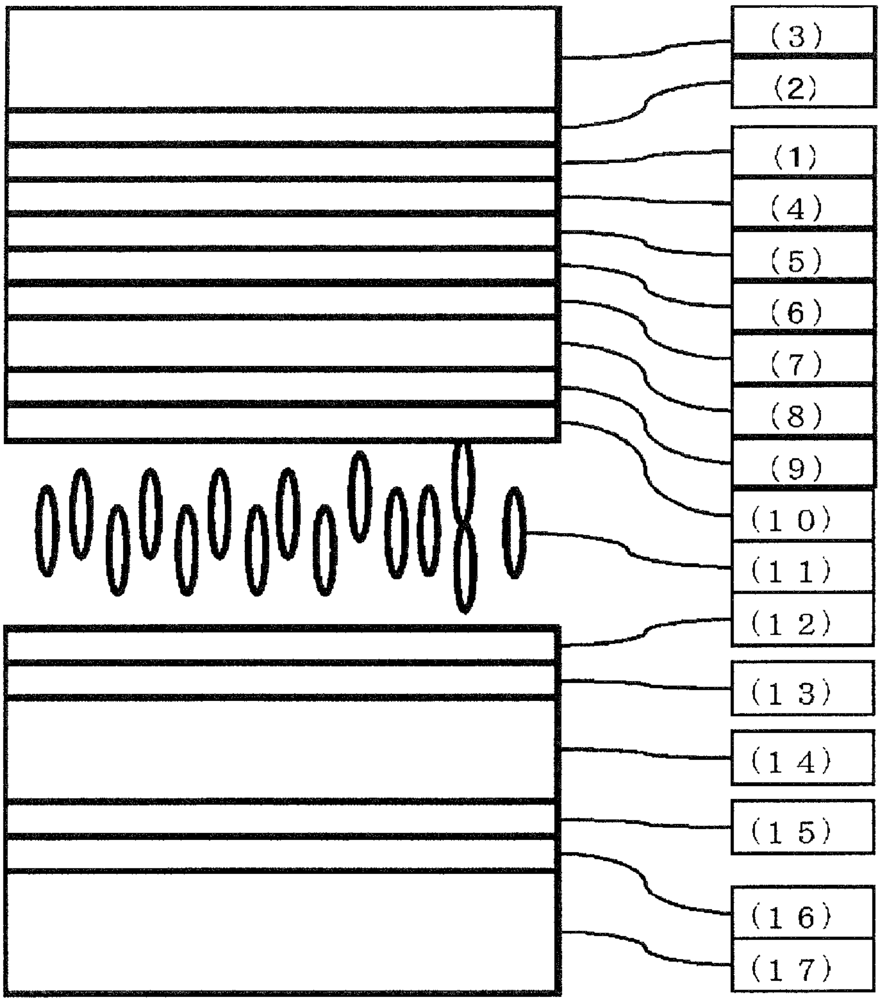

[Fig. 4]

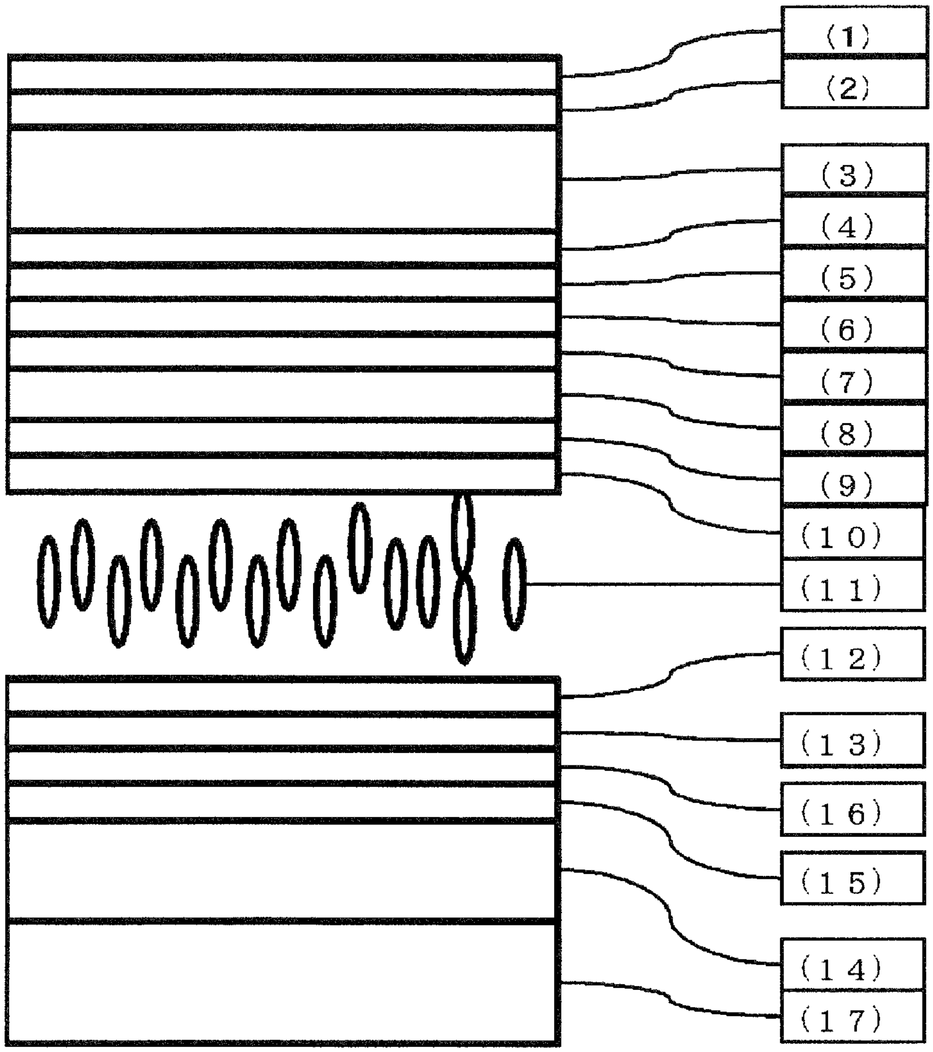

[Fig. 5]

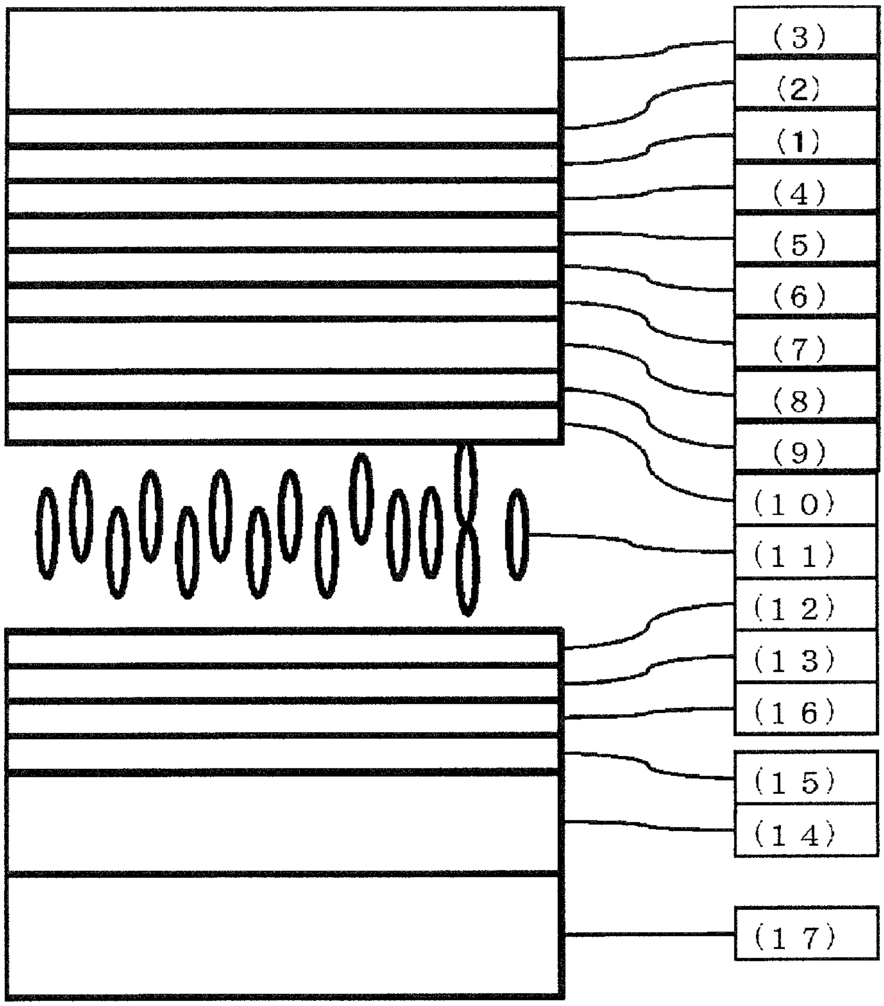

[Fig. 6]

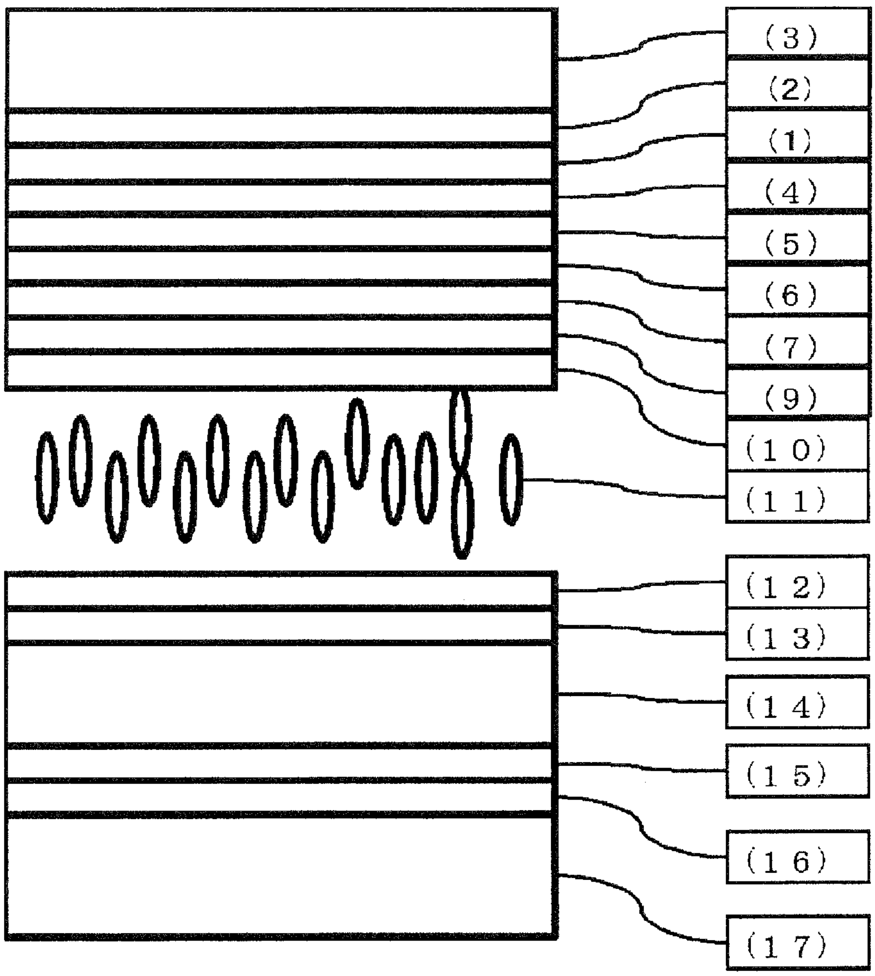

[Fig. 7]

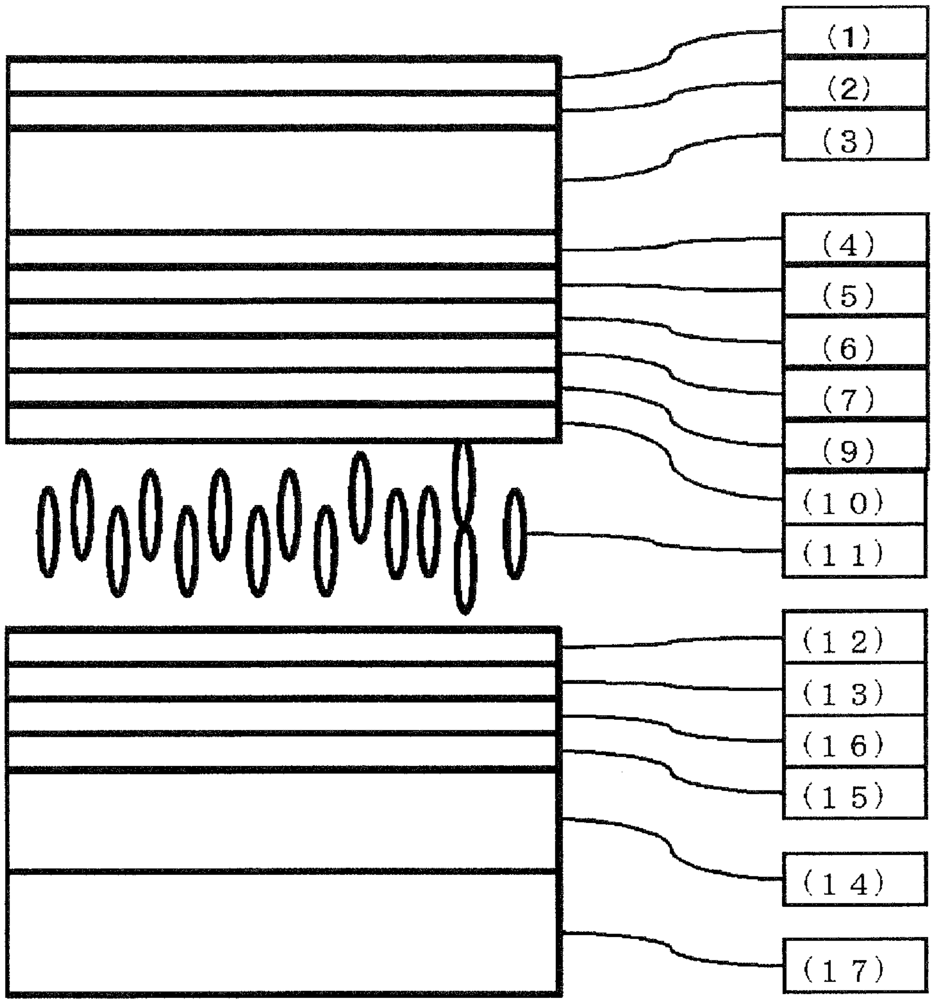

[Fig. 8]

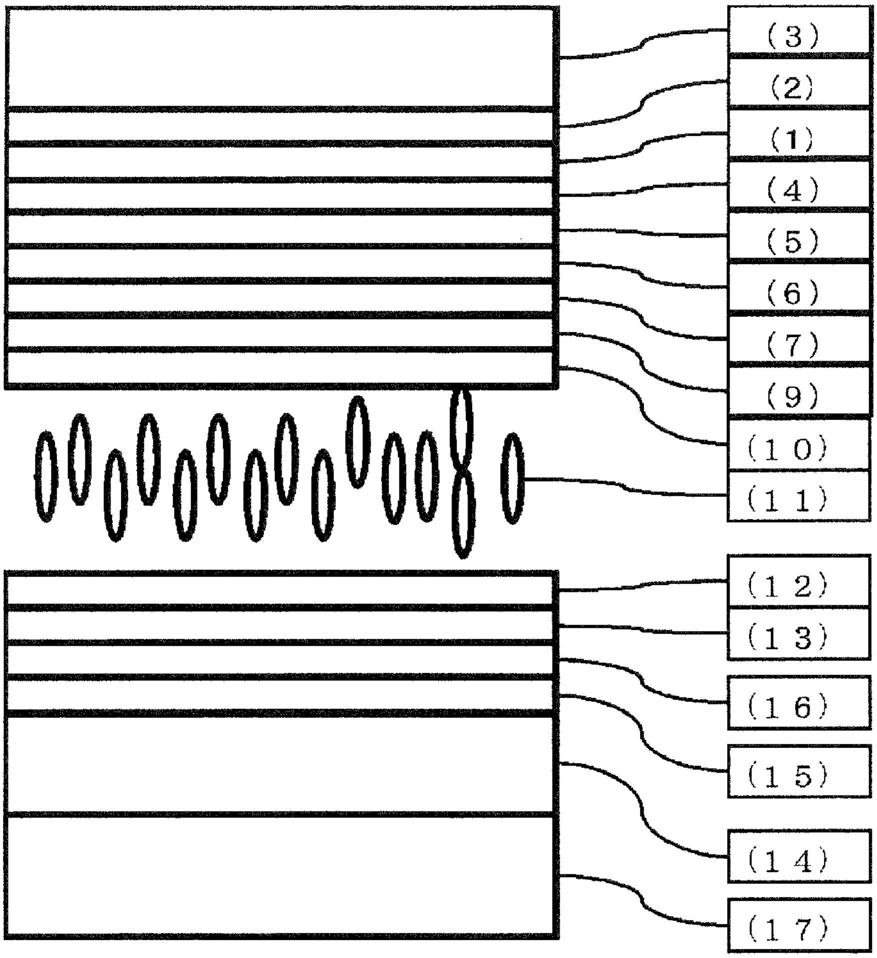

[Fig. 9]

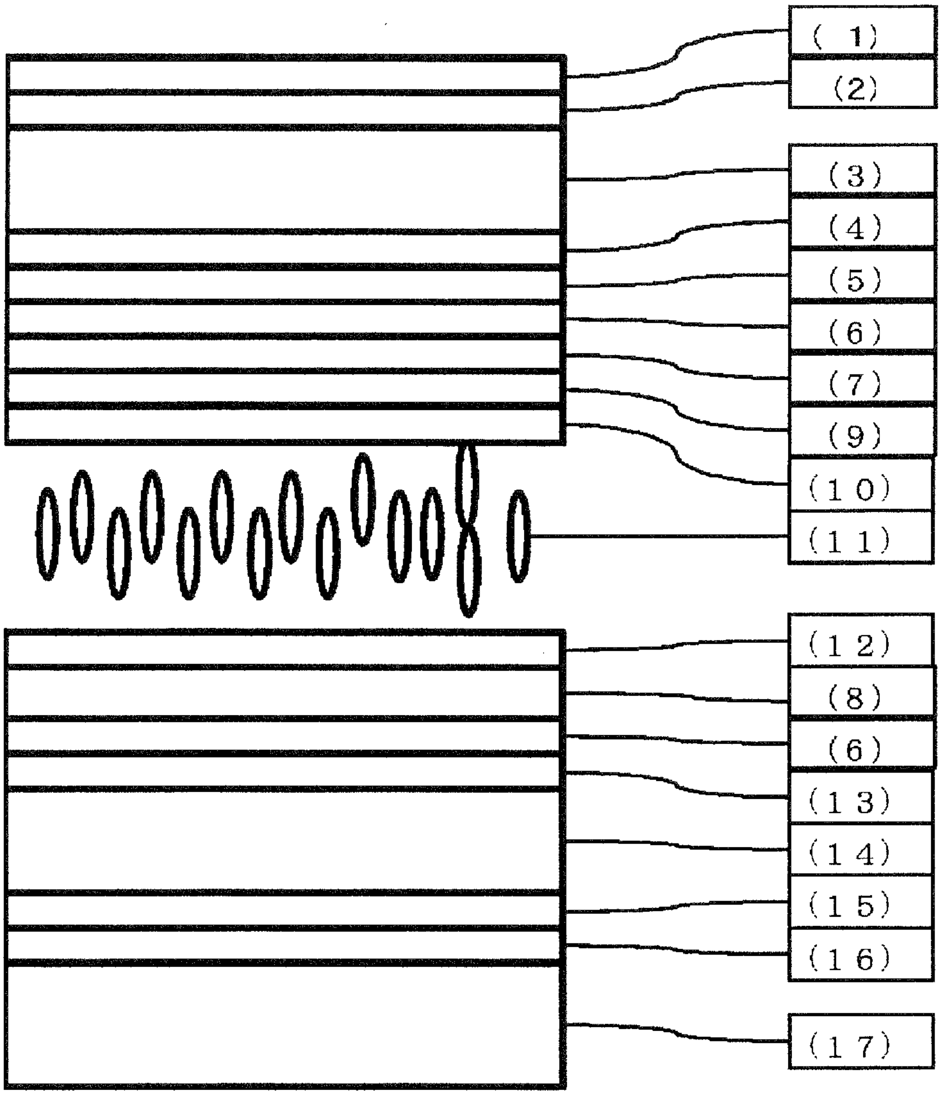

[Fig. 10]

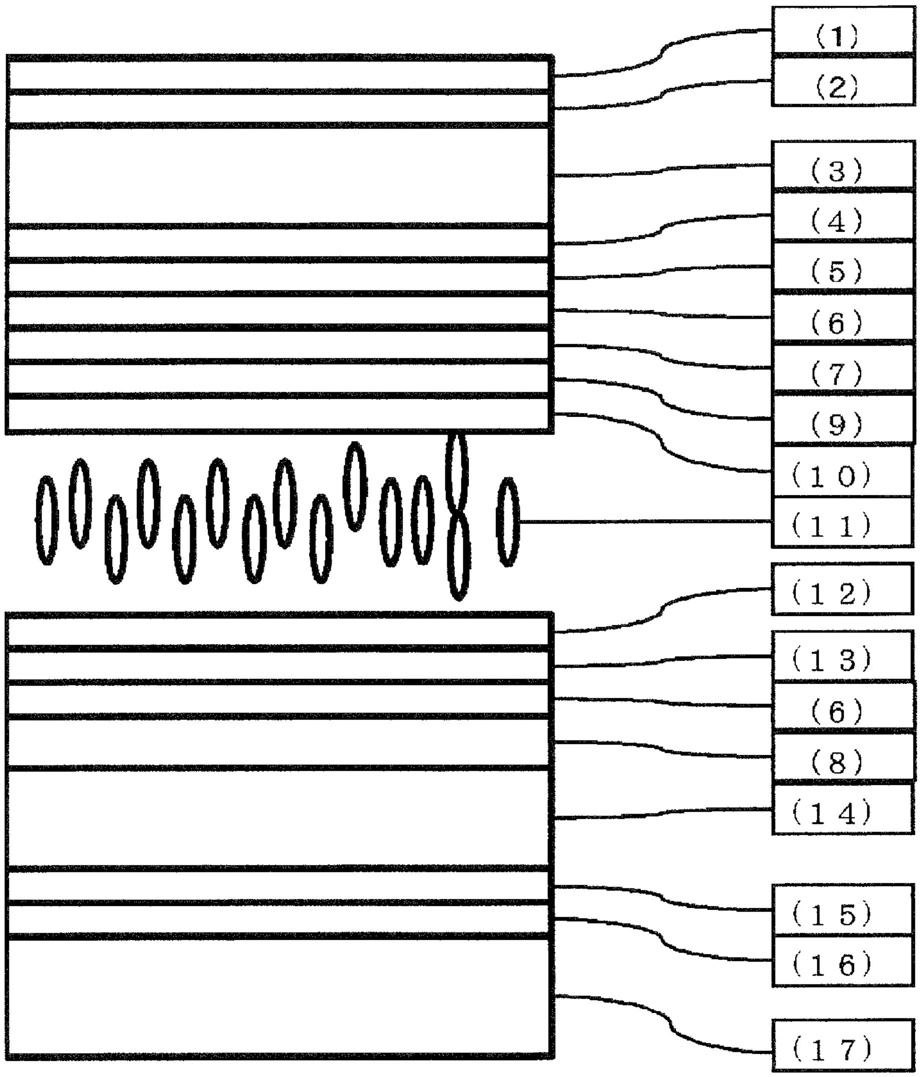

[Fig. 11]

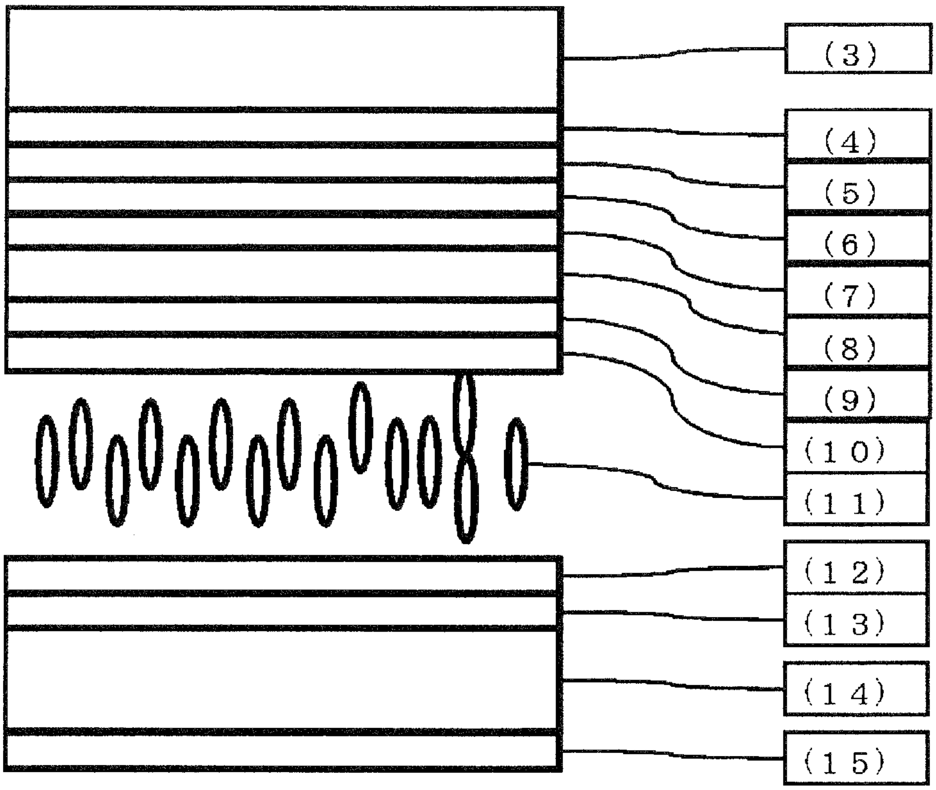

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007094450 A1
- JP 5299588 B
- JP 5299593 B
- US 2006193999 A1
- JP 2012078431 A
- JP 2000221506 A
- WO 11007669 A
- JP 7294735 A
- JP 8003111 A
- JP 8029618 A
- JP 11080090 A
- JP 11116538 A
- JP 11148079 A
- JP 2004002373 A
- JP 2004099446 A
- JP 11193287 A
- JP 2001158788 A
- JP 2006052669 T
- JP 2007269639 A
- JP 2007269640 A
- JP 2009084178 A
- JP 8239666 A
- JP 2004504285 T
- JP 2007248945 A
- JP 5232473 A
- JP 6287453 A
- JP 6289374 A
- JP 2002265541 A
- JP 2013033248 A
- WO 2012053290 A
- WO 2011126021 A


### Non-patent literature cited in the description


- **D.DEMUS ; J.W.GOODBY ; G.W.GRAY ; H.W.SPIESS ; V.VILL.** Handbook of Liquid Crystals. Wiley-VCH Verlag GmbH & Co. KGaA, 1998
- Kikan Kagaku Sosetsu No. 22, Chemistry of Liquid Crystals. The Chemical Society of Japan, 1994
- *NATURE,* 30 November 1995, vol. 35, 467-469
- *NATURE,* 02 April 1998, vol. 392, 476-479